# EUROPEAN PATENT APPLICATION

(11) **EP 2 672 406 A1**
(43) Date of publication of application: **11.12.2013**
(21) Application number: 13168870.7
(22) Date of filing: 23.05.2013
(51) Int. Cl.: G06F 17/50

(54) **Simulator, simulation method, and simulation program for semiconductor devices**

(30) Priority: 08.06.2012 JP 2012131367
(71) Applicant: Renesas Electronics Corporation, Kanagawa 211-8668 (JP)
(72) Inventor: Koga, Yasuhiro, Kanagawa, 211-8668 (JP)
(74) Representative: Betten & Resch

(57) **Abstract**

A web simulator of a semiconductor device having an AFE unit whose circuit configuration can be altered comprises a sensor selector that selects a sensor to be coupled to the AFE unit; a bias circuit selector that selects a bias circuit to be coupled to the selected sensor; a circuit configuration setting unit that sets the circuit configuration of the AFE unit to be coupled to the selected sensor and bias circuit; and a simulation executing unit that executes simulation of a coupled circuit combination comprising the selected sensor and bias circuit and the AFE unit of the set circuit configuration.

## Description

### Cross-reference to related applications

The disclosure of Japanese Patent Application No. 2012-131367 filed on June 8, 2012 including the specification, drawings and abstract is incorporated herein by reference in its entirety.

### BACKGROUND

The present invention relates to a simulator, a simulation method, and a simulation program for semiconductor devices, which can be suitably applied to, for instance, a semiconductor device having an analog front end circuit.

In recent years, reflecting the needs for greater convenience of use, more friendliness to ecosystems, more intense health care and strengthened security, sensors have come to be increasingly used in a variety of equipment including items for people's everyday life, industrial activities and medical service. Underlying this trend, there have been such developments as improved convenience of use as sensor devices and savings in voltage and power consumption of analog circuits, which are indispensable factors to more effective sensors, resulting in reductions in system size and manufacturing cost. Whereas sensors are available in diverse types including those for sensing temperature, infrared rays, light and impacts, circuits for processing signals are configured and their performance features set as the operating principle of each type requires.

In such equipment, a control device such as a microcomputer processes control corresponding to the result of measurement of a sensor. Since a measurement signal supplied from a sensor as it is cannot be processed by a control device such as a microcomputer, it undergoes analog front end (AFE) processing, such as amplification to a certain level by an AFE circuit or removal of noise, before it is entered into the microcomputer. As this AFE processing has to be designed to match the operating principle and characteristics of the sensor and requires design know-how unique to analog handling, the usual practice is to develop a dedicated circuit or a dedicated IC for each specific type of sensor after narrowing down the target range of the operating principle and characteristics of the sensor.

As a design support tool for use in designing such AFE circuits, circuit simulators (hereinafter also referred to as simply simulators) are in common use. Among circuit simulators, stand-alone type simulators that execute simulation on an independent computer, and web server type simulators (hereinafter referred to as web simulators) that execute simulation on a web server are in extensive use. Among such web simulators, "WEBENCH Designer" (Texas Instruments, WEBENCH Designer", [online], accessed on May 29, 1012 on the Internet (URL: http://www.tij.co.jp/tihome/jp/docs/homepage.tsp); Non-Patent Document 1) is well known.

"WEBENCH Designer" is a web simulator for semiconductor devices having an AFE circuit for sensors. A user performing simulation with "WEBENCH Designer" can select the sensor to be coupled to the AFE circuit and set the physical quantity to be detected by the sensor. "WEBENCH Designer" allows the user to adjust the gain of the amplifier in the AFE circuit with reference to the result of simulation.

In addition, known simulators to perform simulation of analog circuits include what is described in Japanese Patent Application Laid-Open No. 2004-145410 (Patent Document 1).

### SUMMARY

Where "WEBENCH Designer" according to Non-Patent Document 1 is used, when the user selects the sensor to be simulated, a bias circuit for bias signal supply to the sensor is uniquely determined, and simulation is accomplished by using the selected sensor, the uniquely determined bias circuit and the AFE circuit. "WEBENCH Designer" allows the user to alter only the gain as a parameter of the AFE circuit.

Incidentally, the bias circuit for a sensor can be configured in diverse ways depending on the environment of use and other factors. For instance, an illumination sensor for use indoors and one for use outdoors need to use different bias circuits. Furthermore, a difference in bias circuit necessitates different circuit configuration and characteristics of amplifiers in the AFE circuit.

However, any known simulator, such as "WEBENCH Designer", cannot perform simulation in a circuit configuration suitable for the user's environment, because the bias circuit configuration is uniquely fixed for the selected sensor. Accordingly, there is a problem that no currently available simulator can effectively accomplish desired simulation.

Other problems and novel features will become evident from the description of this specification when taken in conjunction with accompanying drawings.

One exemplary embodiment of the present invention is a simulator for semiconductor devices having an analog front end (AFE) circuit whose configuration is alterable. This simulator has a bias circuit information memory, a sensor selector, a bias circuit display, a bias circuit selector, a circuit configuration setting unit and a simulation executing unit. The bias circuit information memory stores information on sensors and information on a plurality of bias circuits that supply bias signals in association with each other. The sensor selector selects a sensor to be coupled to the AFE circuit. The bias circuit display unit references the bias circuit information memory and displays a plurality of bias circuits matching the selected sensor. The bias circuit selector selects, in accordance with the user's operation, the bias circuit to be coupled to the selected sensor out of the displayed bias circuits. The circuit configuration setting unit sets the configuration of the AFE circuit to be coupled to the selected sensor and bias circuit. The simulation executing unit executes simulation of the coupled circuit in which the selected sensor and bias circuit and the AFE circuit of the set configuration are coupled to each other.

The exemplary embodiment of the invention can effectively accomplish simulation of the circuit and the AFE circuit.

### BRIEF DESCRIPTION OF DRAWINGS

Fig. 1 shows the configuration of a sensor system in an exemplary embodiment of the invention;
Fig. 2 is a circuit block diagram of a semiconductor device in the exemplary embodiment of the invention;
Fig. 3 shows coupling relationships of circuits in the semiconductor device in the exemplary embodiment of the invention;
Fig. 4 shows an example of circuit coupling in the semiconductor device in the exemplary embodiment of the invention;
Fig. 5 shows another example of circuit coupling in the semiconductor device in the exemplary embodiment of the invention;
Fig. 6 shows another example of circuit coupling in the semiconductor device in the exemplary embodiment of the invention;
Fig. 7 shows another example of circuit coupling in the semiconductor device in the exemplary embodiment of the invention;
Fig. 8 is a circuit diagram showing a circuit configuration of the semiconductor device in the exemplary embodiment of the invention;
Fig. 9 is a circuit diagram showing an example of reconfiguration of the semiconductor device in the exemplary embodiment of the invention;
Fig. 10 is a circuit diagram showing another example of reconfiguration of the semiconductor device in the exemplary embodiment of the invention;
Fig. 11 is a circuit diagram showing another example of reconfiguration of the semiconductor device in the exemplary embodiment of the invention;
Fig. 12 is a circuit diagram showing another example of reconfiguration of the semiconductor device in the exemplary embodiment of the invention;
Fig. 13 is a circuit diagram showing another example of reconfiguration of the semiconductor device in the exemplary embodiment of the invention;
Fig. 14 is a circuit diagram showing another example of reconfiguration of the semiconductor device in the exemplary embodiment of the invention;
Fig. 15 is a circuit diagram showing another circuit configuration of the semiconductor device in the exemplary embodiment of the invention;
Fig. 16 is a timing chart showing the operations of circuits of the semiconductor device in the exemplary embodiment of the invention;
Fig. 17 is a circuit diagram showing another circuit configuration of the semiconductor device in the exemplary embodiment of the invention;
Fig. 18 is a circuit diagram showing another circuit configuration of the semiconductor device in the exemplary embodiment of the invention;
Fig. 19 is a circuit diagram showing another circuit configuration of the semiconductor device in the exemplary embodiment of the invention;
Fig. 20 is a circuit diagram showing another circuit configuration of the semiconductor device in the exemplary embodiment of the invention;
Fig. 21 is a circuit block diagram of the semiconductor device in the exemplary embodiment of the invention;
Fig. 22 shows coupling relationships of circuits in the semiconductor device in the exemplary embodiment of the invention;
Fig. 23 is a circuit block diagram of the semiconductor device in the exemplary embodiment of the invention;
Fig. 24 shows coupling relationships of circuits in the semiconductor device in the exemplary embodiment of the invention;
Fig. 25 is a circuit diagram showing another circuit configuration of the semiconductor device in the exemplary embodiment of the invention;
Fig. 26 is a diagram showing the configuration of a simulation system in the exemplary embodiment of the invention;
Fig. 27 shows the hardware configuration of the simulation system in the exemplary embodiment of the invention;
Fig. 28A is a functional block diagram of a web simulator in the exemplary embodiment of the invention;
Fig. 28B is another functional block diagram of a web simulator in the exemplary embodiment of the invention;
Fig. 28C is another functional block diagram of a web simulator in the exemplary embodiment of the invention;
Fig. 29 is a flow chart illustrating a simulation method of the web simulator in the exemplary embodiment of the invention;
Fig. 30 is another flow chart illustrating a simulation method of the web simulator in the exemplary embodiment of the invention;
Fig. 31 is another flow chart illustrating a simulation method of the web simulator in the exemplary embodiment of the invention;
Fig. 32 is a circuit diagram illustrating the simulation method of the web simulator in the exemplary embodiment of the invention;
Fig. 33 is another circuit diagram illustrating the simulation method of the web simulator in the exemplary embodiment of the invention;
Fig. 34 is a flow chart illustrating the simulation method of the web simulator in the exemplary embodiment of the invention;
Fig. 35 is another flow chart illustrating the simulation method of the web simulator in the exemplary embodiment of the invention;
Fig. 36 is another flow chart illustrating the simulation method of the web simulator in the exemplary embodiment of the invention;
Fig. 37 is another flow chart illustrating the simulation method of the web simulator in the exemplary embodiment of the invention;
Fig. 38 shows a schematic image of a display screen used in the simulation method of the web simulator in the exemplary embodiment of the invention;
Fig. 39 shows a schematic image of another display screen used in the simulation method of the web simulator in the exemplary embodiment of the invention;
Fig. 40 shows a schematic image of another display screen used in the simulation method of the web simulator in the exemplary embodiment of the invention;
Fig. 41 shows a schematic image of another display screen used in the simulation method of the web simulator in the exemplary embodiment of the invention;
Fig. 42 shows a schematic image of another display screen used in the simulation method of the web simulator in the exemplary embodiment of the invention;
Fig. 43 shows a schematic image of another display screen used in the simulation method of the web simulator in the exemplary embodiment of the invention;
Fig. 44 shows a schematic image of another display screen used in the simulation method of the web simulator in the exemplary embodiment of the invention;
Fig. 45 shows a schematic image of another display screen used in the simulation method of the web simulator in the exemplary embodiment of the invention;
Fig. 46 shows a schematic image of another display screen used in the simulation method of the web simulator in the exemplary embodiment of the invention;
Fig. 47 shows a schematic image of another display screen used in the simulation method of the web simulator in the exemplary embodiment of the invention;
Fig. 48 shows a schematic image of another display screen used in the simulation method of the web simulator in the exemplary embodiment of the invention;
Fig. 49 shows a schematic image of another display screen used in the simulation method of the web simulator in the exemplary embodiment of the invention;
Fig. 50 shows a schematic image of another display screen used in the simulation method of the web simulator in the exemplary embodiment of the invention;
Fig. 51 shows a schematic image of another display screen used in the simulation method of the web simulator in the exemplary embodiment of the invention;
Fig. 52 shows input or output waveforms for illustrating the simulation method of the web simulator in the exemplary embodiment of the invention;
Fig. 53 shows a schematic image of another display screen used in the simulation method of the web simulator in the exemplary embodiment of the invention;
Fig. 54 shows a schematic image of another display screen used in the simulation method of the web simulator in the exemplary embodiment of the invention;
Fig. 55 shows a schematic image of another display screen used in the simulation method of the web simulator in the exemplary embodiment of the invention;
Fig. 56 shows a schematic image of another display screen used in the simulation method of the web simulator in the exemplary embodiment of the invention;
Fig. 57 shows a schematic image of another display screen used in the simulation method of the web simulator in the exemplary embodiment of the invention;
Fig. 58 shows a schematic image of another display screen used in the simulation method of the web simulator in the exemplary embodiment of the invention;
Fig. 59 shows a schematic image of another display screen used in the simulation method of the web simulator in the exemplary embodiment of the invention;
Fig. 60A shows a schematic image of another display screen used in the simulation method of the web simulator in the exemplary embodiment of the invention;
Fig. 60B shows a schematic image of another display screen used in the simulation method of the web simulator in the exemplary embodiment of the invention;
Fig. 60C shows a schematic image of another display screen used in the simulation method of the web simulator in the exemplary embodiment of the invention;
Fig. 61A shows a schematic image of another display screen used in the simulation method of the web simulator in the exemplary embodiment of the invention;
Fig. 61B shows a schematic image of another display screen used in the simulation method of the web simulator in the exemplary embodiment of the invention;
Fig. 61D shows a schematic image of another display screen used in the simulation method of the web simulator in the exemplary embodiment of the invention;
Fig. 62 shows a schematic image of another display screen used in the simulation method of the web simulator in the exemplary embodiment of the invention;
Fig. 63 shows a schematic image of another display screen used in the simulation method of the web simulator in the exemplary embodiment of the invention;
Fig. 64A shows a schematic image of another display screen used in the simulation method of the web simulator in the exemplary embodiment of the invention;
Fig. 64B shows a schematic image of another display screen used in the simulation method of the web simulator in the exemplary embodiment of the invention;
Fig. 64C shows a schematic image of another display screen used in the simulation method of the web simulator in the exemplary embodiment of the invention;
Fig. 64D shows a schematic image of another display screen used in the simulation method of the web simulator in the exemplary embodiment of the invention;
Fig. 64E shows a schematic image of another display screen used in the simulation method of the web simulator in the exemplary embodiment of the invention;
Fig. 64F shows a schematic image of another display screen used in the simulation method of the web simulator in the exemplary embodiment of the invention;
Fig. 64G shows a schematic image of another display screen used in the simulation method of the web simulator in the exemplary embodiment of the invention;
Fig. 65 is a configurational diagram of the setting system of the semiconductor device in the exemplary embodiment of the invention; and
Fig. 66 is another flow chart illustrating the setting method of the semiconductor device in the exemplary embodiment of the invention.

### DETAILED DESCRIPTION

An exemplary embodiment of the invention will be described below with reference to drawings. In this embodiment, in order to optimally set a semiconductor device whose circuit configuration and circuit characteristics can be altered, the same circuit as the semiconductor device will be simulated.

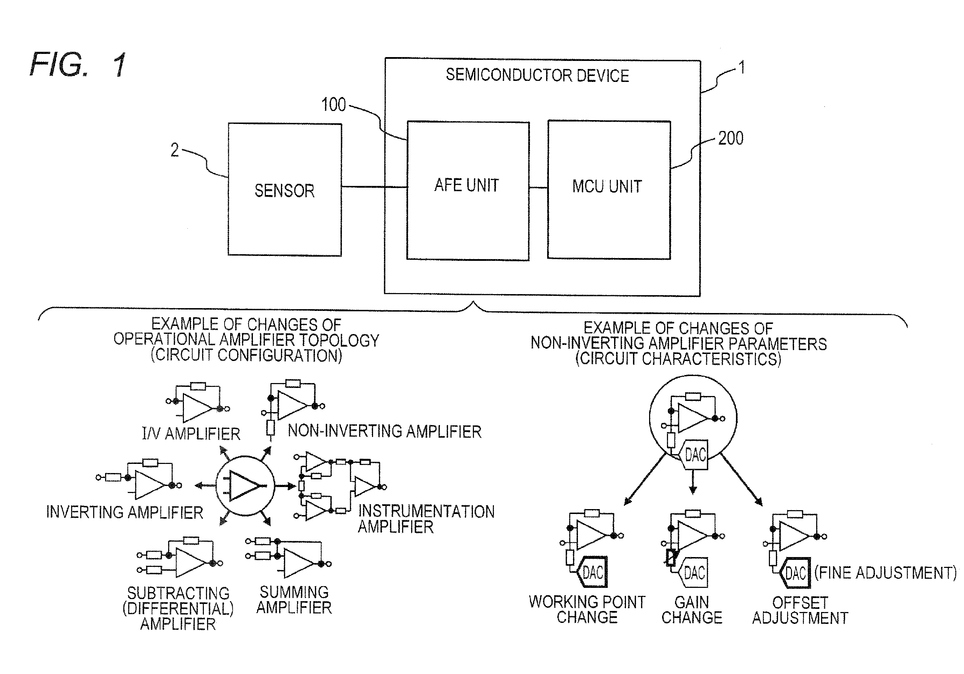

To facilitate understanding of the simulator in this embodiment, the semiconductor device including the circuit to be simulated will be described. Fig. 1 shows the configuration of a sensor system in the exemplary embodiment of the invention.

As shown in Fig. 1, this sensor system is provided with a sensor 2 and a semiconductor device 1 coupled to the sensor.

As the sensor 2, one of various types including a current output type sensor that outputs a current corresponding to the result of detection, a voltage output type sensor that outputs a voltage corresponding to the result of detection, and a sensor that outputs a differential signal output corresponding to the result of detection can be used.

The semiconductor device 1 has an MCU unit 200 and an AFE unit 100. For instance, the semiconductor device 1 is a system-on-a-chip (SoC) having a semiconductor chip of the MCU unit 200 and a semiconductor chip of the AFE unit 100 mounted on a single semiconductor device. Incidentally, in the following description, sometimes a device including the MCU unit 200 and the AFE unit 100, or at other times one including only the AFE unit 100, may be referred to as the semiconductor device 1.

The MCU unit (control unit) 200 is a microcontroller that subjects the measurement signal (detection signal) of the sensor 2 inputted via the AFE unit 100 to analog-to-digital (A/D) conversion and processes control in accordance with the detection result. Also, the MCU unit 200 outputs to the AFE unit 100 control signals for altering the setting of the configuration and characteristics of the AFE unit 100.

The AFE unit (analog input unit) 100 is an analog circuit that subjects the measurement signal outputted by the sensor 2 to analog front end processing, such as amplification or filtering, to make it processable by the MCU unit 200. Further the AFE unit 100, as shown in Fig. 1, permits topology (circuit configuration) alteration, and its parameters (circuit characteristics) can also be altered.

As in the example of Fig. 1, the operational amplifier configuration can be altered to one of an I/V amplifier, a subtracting (differential) amplifier, a summing amplifier, an inverting amplifier, a non-inverting amplifier and an instrumentation amplifier. Further, as in the example of parameters for the non-inverting amplifier, the working point and the gain can be changed and the offset can be adjusted, too.

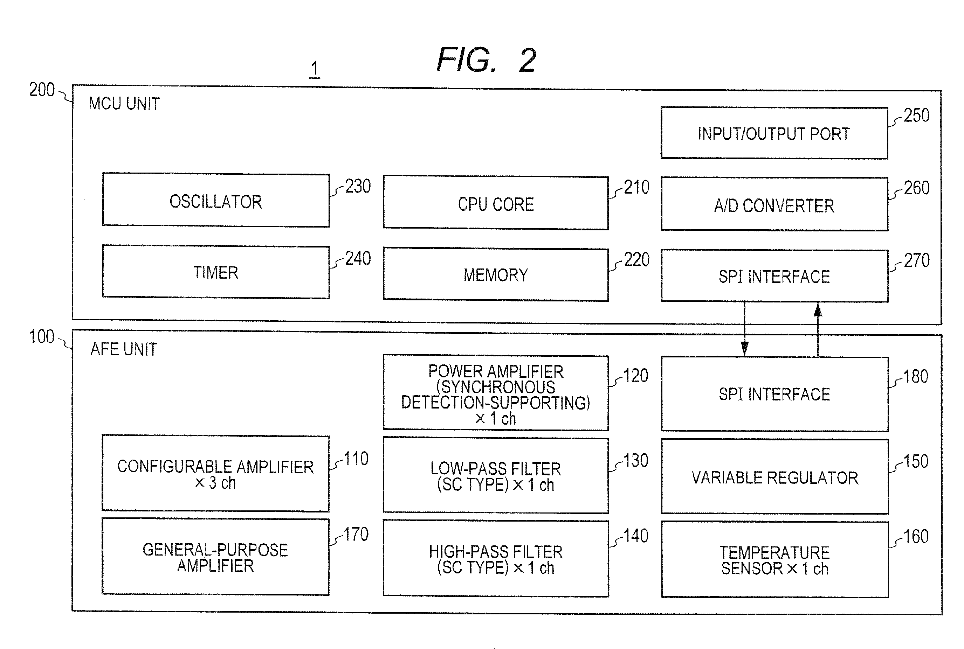

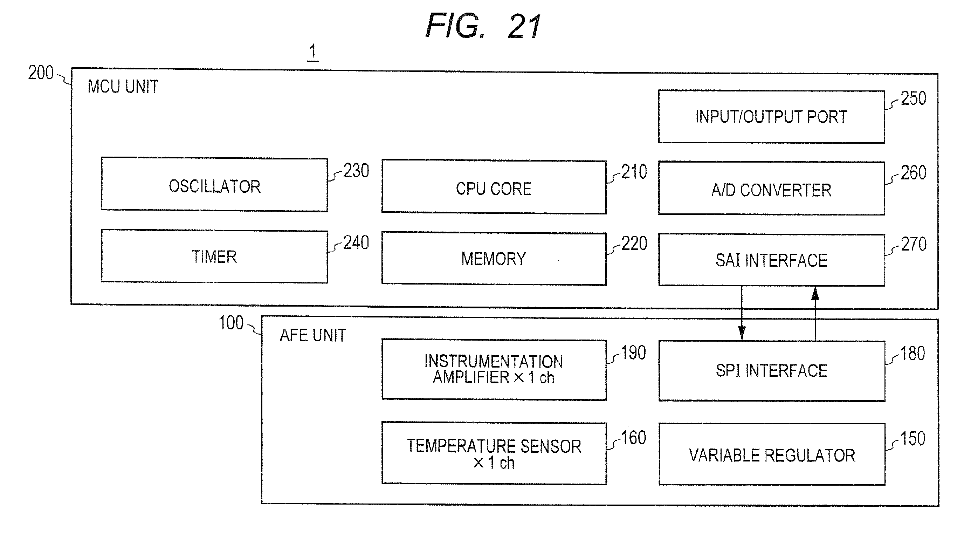

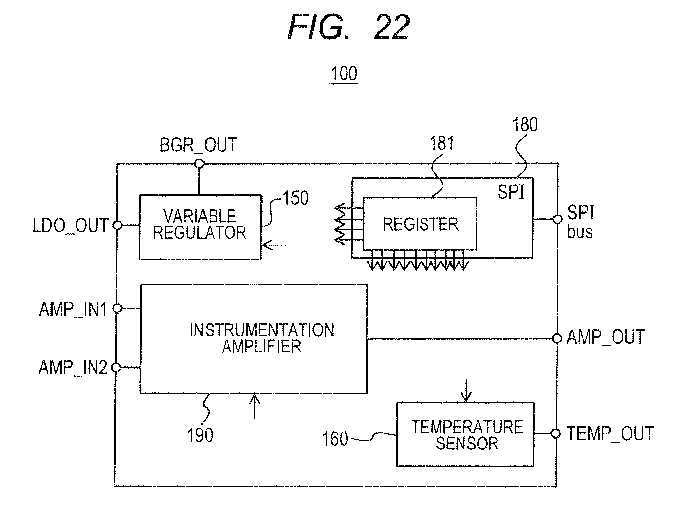

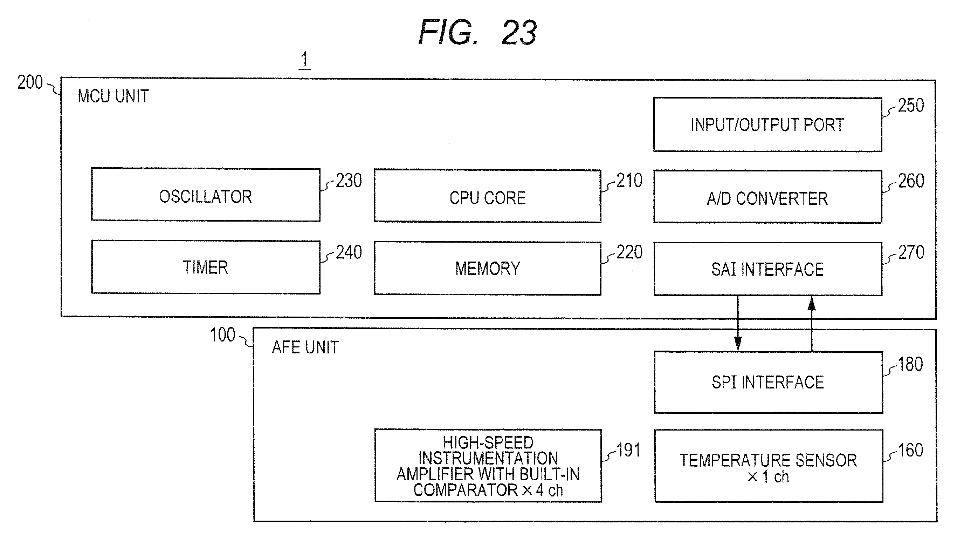

The semiconductor device 1 of this embodiment can have one of various types of configurations, each suitable for one or another purpose, by adapting internal circuits of the AFE unit 100. The semiconductor device 1 of type 0 intended for general-purpose systems will be described with reference to Fig. 2 through Fig. 20, that of type 1 for measuring instruments in general, with reference to Fig. 21 and Fig. 22, and that of type 2 for motor control use, with reference to Fig. 23 through Fig. 25. Incidentally, any of types 0 through 2 may be sometimes referred to as the semiconductor device 1.

Fig. 2 is a circuit block diagram of the semiconductor device 1 of type 0. As shown in Fig. 2, the MCU unit 200 is provided with a CPU core 210, a memory 220, an oscillator 230, a timer 240, an input/output port 250, an A/D converter 260, and a serial peripheral interface (SPI) 270. To add, the MCU unit 200 is also provided with other circuits for realizing the functions of a microcontroller, such as a DMA and various arithmetic circuits.

The CPU core 210 executes programs stored in the memory 220, and processes control in accordance with each program. The memory 220 stores the programs to be executed by the CPU core 210 and various data. The oscillator 230 generates an operation clock for the MCU unit 200, and supplies the clock to the AFE unit 100 as required. The timer 240 is used for control operations by the MCU unit 200.

The input/output port 250 is an interface for inputting and outputting data and the like to and from devices outside the semiconductor device 1, and can be coupled, as will be further described afterwards, to an outside computer device or the like, for instance.

The A/D converter 260 subjects to A/D conversion a measurement signal from the sensor 2 inputted via the AFE unit 100. Electric power for the A/D converter 260 is supplied from the AFE unit 100.

The SPI 270 is an interface for inputting and outputting data and the like to and from the AFE unit 100. Incidentally, the SPI 270 is a general-purpose serial interface, and any other microcontroller/ microcomputer, if it is compatible with the SPI 270, can be coupled to the AFE unit 100.

The semiconductor device 1 of type 0 shown in Fig. 2 is configured to be compatible with general-purpose use. More specifically, it is mounted with a full set of AFE circuits for use with sensors so that sensors of many different types and characteristics can be coupled. Thus, the AFE unit 100 is provided with a configurable amplifier 110, a synchronous detection-supporting power amplifier (hereinafter sometimes referred to as simply gain amplifier 120, an SC type low-pass filter (hereinafter sometimes referred to as simply low-pass filter) 130, an SC type high-pass filter (hereinafter sometimes referred to as simply high-pass filter) 140, a variable regulator 150, a temperature sensor 160, a general-purpose amplifier 170 and an SPI 180.

The configurable amplifier 110 is an amplifying circuit that amplifies signals inputted from the sensor 2 and other external sources, and its circuit configuration, characteristics and operations can be set as controlled from the MCU unit 200. The configurable amplifier 110 is a three-channel amplifier set; namely it has three amplifiers, which enable many different circuit configurations to be realized.

The gain amplifier 120 is a synchronous detection-supporting power amplifier that amplifies the output of the configurable amplifier 110 and signals inputted from the sensor 2 and other external sources, and its circuit configuration, characteristics and operations can be set as controlled from the MCU unit 200.

The low-pass filter 130 is an SC type filter that removes high-frequency components and passes low-frequency components of the outputs of the configurable amplifier 110 and of the gain amplifier 120 and signals inputted from the sensor 2 and other external sources, and its circuit configuration, characteristics and operations can be set as controlled from the MCU unit 200. The high-pass filter 140 is an SC type filter that removes low-frequency components and passes high-frequency components of the outputs of the configurable amplifier 110 and of the gain amplifier 120 and signals inputted from the sensor 2 and other external sources, and its circuit configuration, characteristics and operations can be set as controlled from the MCU unit 200.

The variable regulator 150 is a variable voltage source for supplying a voltage to the A/D converter 260 of the MCU unit 200, and its characteristics and operations can be set as controlled from the MCU unit 200. The temperature sensor 160 is a sensor that measures the temperature of the semiconductor device 1, and its operations can be set as controlled from the MCU unit 200.

The general-purpose amplifier 170 is an amplifier for amplifying signals inputted from the sensor 2 and other external sources, and its operations can be set as controlled from the MCU unit 200. The SPI 180 is an interface for inputting and outputting data and the like to and from the MCU unit 200, and coupled to the SPI 270 of the MCU unit 200. Incidentally, if the semiconductor device 1 has no MCU unit 200, the SPI 180 is coupled to an external terminal of the semiconductor device 1, and an external microcontroller, emulator or the like is coupled to the AFE unit 100 via the external terminal.

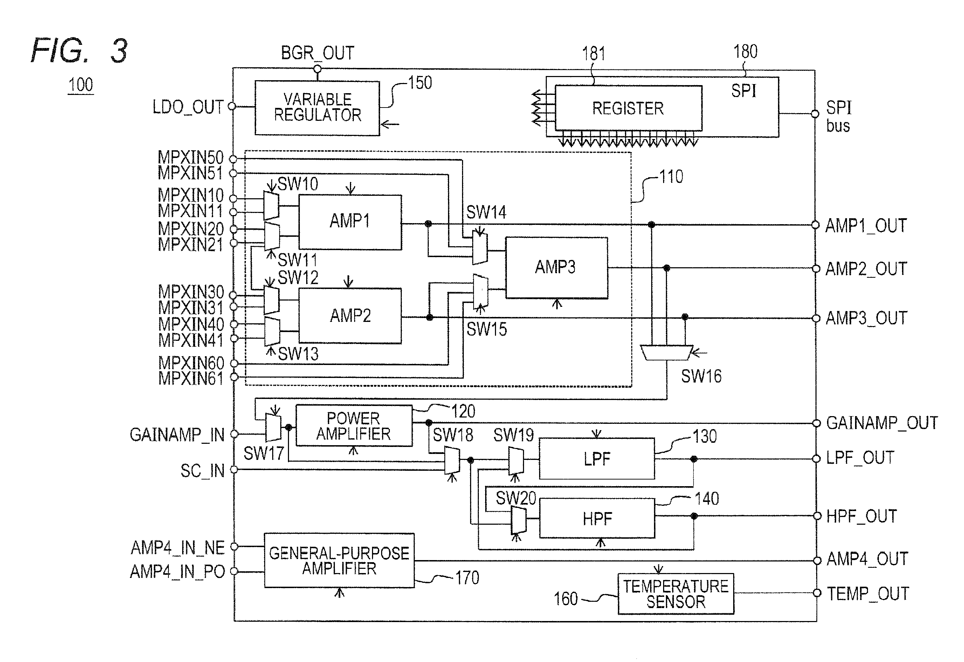

Next, the configuration of the AFE unit 100 in the semiconductor device 1 of type 0 will be described in detail. Fig. 3 shows coupling relationships of circuits in the AFE unit 100. The SPI 180 is coupled to external terminals (CS, SCLK, SDO and SDI) coupled to an SPI bus, and has a register (control register) 181. Configurational information for altering the configurations and characteristics of circuits (setting information) is inputted from the MCU unit 200 via the SPI, and stored into the register 181. The register 181 is coupled to the circuits in the AFE unit 100, and the configurations and characteristics of the circuits in the AFE unit 100 are set according to the configurational information stored in the register 181.

The configurable amplifier 110 has individual amplifiers AMP1, AMP2 and AMP3, to which switches SW10 through SW15 for changing over the inputs and outputs of the amplifiers are coupled.

In the individual amplifier AMP1, one input terminal is coupled to MPXIN10 or MPXIN11 via a switch SW10, the other input terminal is coupled to MPXIN20 or MPXIN21 via a switch SW11, and the output terminal is coupled to AMP1_OUT. Similarly, in the individual amplifier AMP2, one input terminal is coupled to MPXIN30 or MPXIN31 via a switch SW12, the other input terminal is coupled to MPXIN40 or MPXIN41 via a switch SW11, and the output terminal is coupled to AMP2_OUT.

Further, in the individual amplifier AMP3, one input terminal is coupled to MPXIN50, MPXIN51 or the output terminal of AMP1 via a switch SW14, the other input terminal is coupled to MPXIN60, MPXIN61 or the output terminal of AMP2 via a switch SW15, and the output terminal is coupled to AMP3_OUT. The output terminals of AMP1 through AMP3 are also coupled to the gain amplifier 120, the low-pass filter 130 and the high-pass filter 140.

The configurable amplifier 110 is altered in the coupling configuration of AMP1 through AMP3 as the switches SW10 through SW15 are changed over according to the set value of the register 181, and the internal circuit configuration and characteristics are also altered as will be described afterwards.

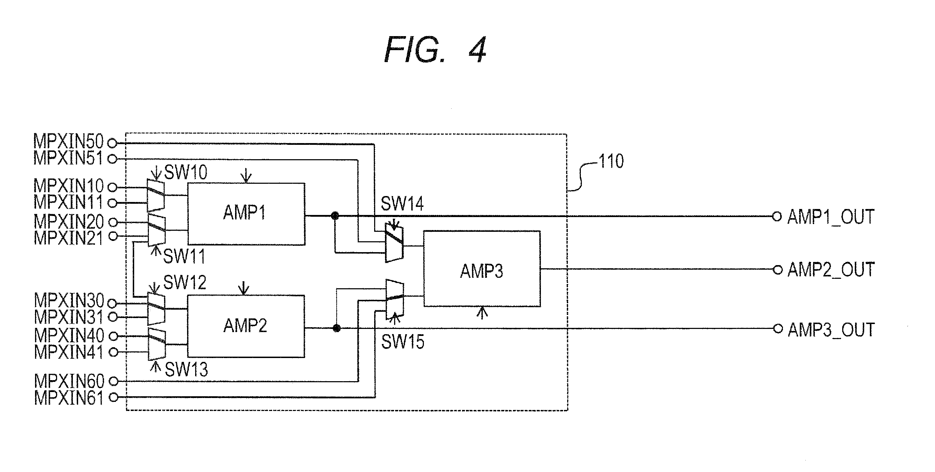

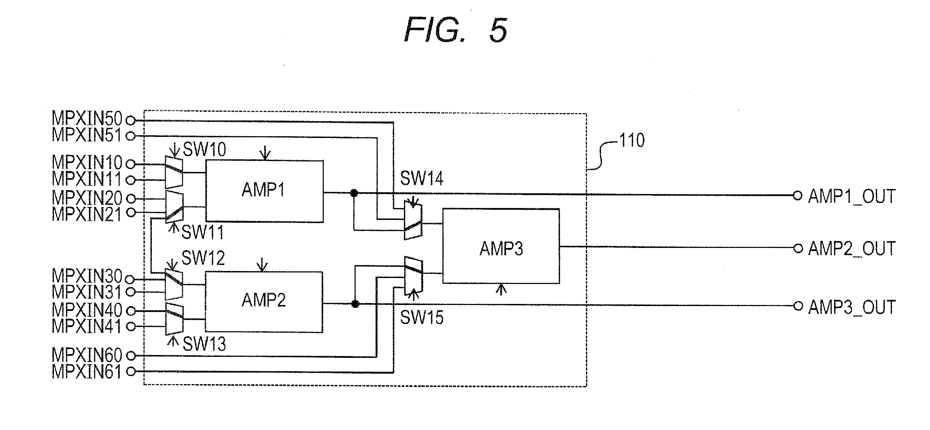

Figs. 4 and 5 show examples of alteration of coupling of the switches SW10 through SW15. Fig. 4 shows a case in which, as set by the register 181, the switches SW10 and SW11 are changed over to couple the input terminals of AMP1 to MPXIN10 and MPXIN20, the switches SW12 and SW13 are changed over to couple the input terminals of AMP2 to MPXIN30 and MPXIN40, and the switches SW14 and SW15 are changed over to couple the input terminal of AMP3 to MPXIN50 and MPXIN60. Coupling in this way enables each of AMP1, AMP2 and AMP3 to operate as an independent amplifier.

Fig. 5 shows a case in which, as set by the register 181, the switch SW10 is changed over to couple one of the input terminals of AMP1 to MPXIN10, the switches SW13 is changed over to couple one of the input terminals of AMP2 to MPXIN40, the switches SW11 and SW12 are changed over to couple the other of the input terminals of AMP1 and the other of the input terminals of AMP2, and the switches SW14 and SW15 are changed over to couple the one of the input terminals of AMP3 to the output terminal of AMP1 and to couple the other of the input terminals of AMP3 to the output terminal of AMP3. Coupling in this way enables an instrumentation amplifier in which AMP1 through AMP3 to be coupled to be configured.

Also, as shown in Fig. 3, switches SW16 and SW17 for changing over the input are coupled to the gain amplifier 120. Of the gain amplifier 120, the input terminals are coupled to the output terminals of AMP1 through AMP3 via the switches SW16 and SW17 or to GAINAMP_IN via the Switch SW17, and the output terminal is coupled to GAINAMP_OUT. The output terminal of the gain amplifier 120 is also coupled to the low-pass filter 130 and the high-pass filter 140. To add, the coupling of the output terminals of AMP1 through AMP3 to external terminals and the power amplifier may as well be changed over with the switch SW16.

To the low-pass filter 130, switches SW18 and SW19 for changing over the input are coupled, and also to the high-pass filter 140, switches SW18 and SW20 for changing over the input are coupled. Of the low-pass filter 130, the input terminal is coupled to the output terminals of AMP1 through AMP3, the output terminal of the gain amplifier 120 and SC_IN via the switches SW16, SW17, SW18 and SW19 or to the output terminal of the high-pass filter 140 via the switch SW19, and the output terminal is coupled to LPF_OUT. Of the high-pass filter 140, the input terminal is coupled to the output terminals of AMP1 through AMP3, the output terminal of the gain amplifier 120 and SC_IN via the switches SW16, SW17, SW18 and SW20 or to the output terminal of the low-pass filter 130, and the output is coupled to HPF_OUT. To add, switches may as well be provided between the output terminals of the low-pass filter 130 and of the high-pass filter 140 and external terminals to enable the coupling between the output terminals of the low-pass filter 130 and of the high-pass filter 140 to the external terminals and the switches SW19, SW20 to be changed over.

The gain amplifier 120, the low-pass filter 130 and the high-pass filter 140 are altered in coupling configuration as the switches SW16 through SW20 are changed over according to the set values of the register 181, and the internal characteristics are also altered as will be described afterwards.

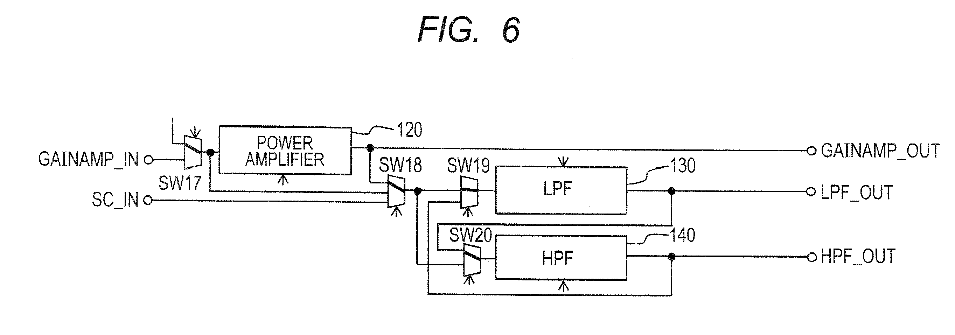

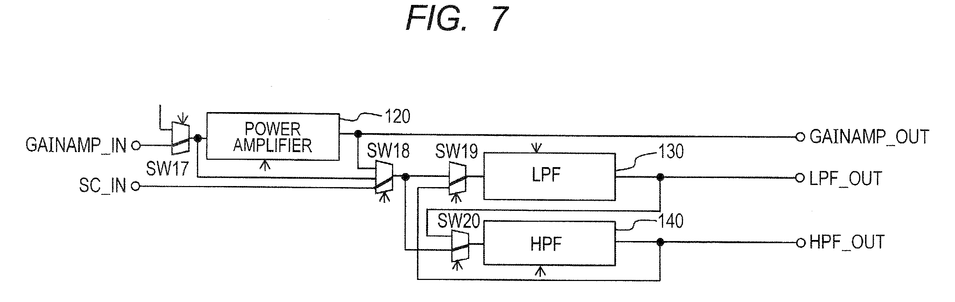

Fig. 6 and Fig. 7 show examples of coupling change-over of the gain amplifier 120, the low-pass filter 130 and the high-pass filter 140 by the switches SW17 through SW20. In the case shown in Fig. 6, as set by the register 181, the switch SW17 is changed over to couple the input terminal of the gain amplifier 120 to the output terminal of one of AMP1 through AMP3, the switches SW18 and SW19 are changed over to couple the input terminal of the low-pass filter 130 to the output terminal of the gain amplifier 120, and the switch SW20 is changed over to couple the input terminal of the high-pass filter 140 to the output terminal of the low-pass filter 130. Changing over in this way enables a circuit to be configured in which one of AMP1 through AMP3, the gain amplifier 120, the low-pass filter 130 and the high-pass filter 140 are coupled in this order.

In the case shown in Fig. 7, as set by the register 181, the switch SW17 is changed over to couple the input terminal of the gain amplifier 120 to GAINAMP_IN, the switches SW18 and SW20 are changed over to couple the input terminal of the high-pass filter 140 to SC_IN, and the switch SW19 is changed over to couple the input terminal of the low-pass filter 130 to the output terminal of the high-pass filter 140. Coupling in this way enables the gain amplifier 120 to operate as an independent amplifier and a circuit to be configured in which the high-pass filter 140 and the low-pass filter 130 are coupled in this order.

Also, as shown in Fig. 3, the output terminal of the variable regulator 150 is coupled to BGR_OUT and LDO_OUT. The characteristics of the variable regulator are altered as set by the register 181 as will be described afterwards.

The output terminal of the temperature sensor 160 is coupled to TEMP_OUT. The characteristics of the temperature sensor 160 are altered as set by the register 181 as will be described afterwards.

Of the general-purpose amplifier 170, one input terminal is coupled to AMP4_IN_NE, the other input terminal to AMP4_IN_PO, and the output terminal, to AMP4_OUT. The general-purpose amplifier is configured of a single operational amplifier, to which power supply is turned on and off set by the register 181.

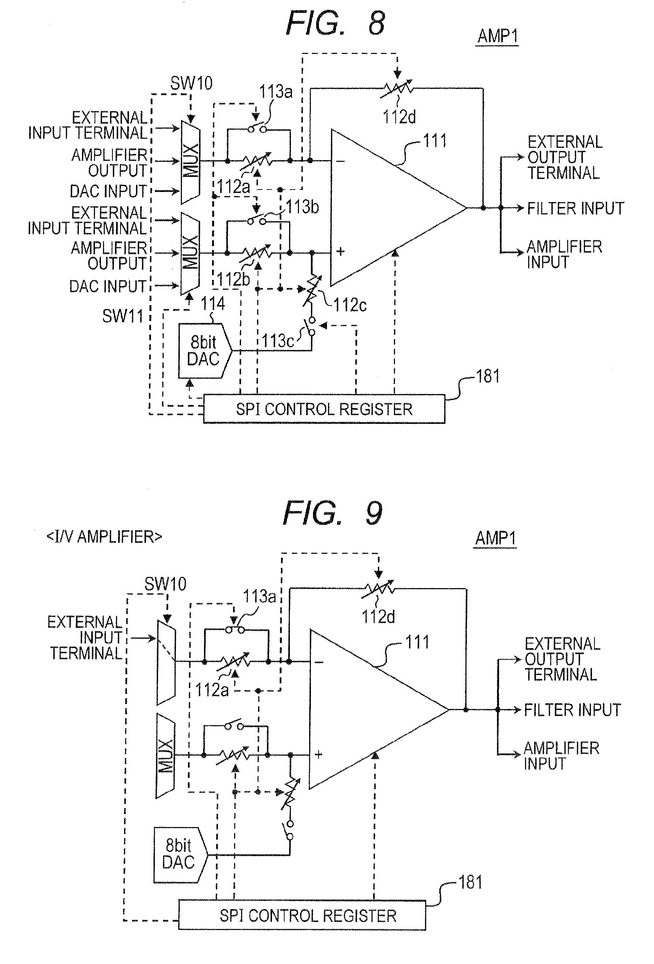

Next, with reference to Fig. 8 through Fig. 14, specific circuit configurations of the configurable amplifier 110 will be described.

The configurable amplifier 110, which is an amplifier for amplifying sensor output signals, can alter the topology (circuit configuration) as set by the control register, and can also alter parameters (circuit characteristics). As the alteration of a characteristic, the gain can be set variably. For instance, when an individual amplifier is to be used independently, the gain can be set to any level in a range of 6 dB to 46 dB in 2 dB units or, when it is used as an instrumentation amplifier, the gain can be set to any level in a range of 20 dB to 60 dB in 2 dB units. Also, the slew rate can be set variably, and power is turned on and off in a power-off mode.

Fig. 8 shows a circuit configuration of the individual amplifier AMP1, AMP2 and AMP3 are also similarly configured.

As shown in Fig. 8, the individual amplifier AMP1 has an operational amplifier 111, which has variable resistors 112a through 112d, switches 113a through 113c and a DAC 114 and to which multiplexers (switches) SW10 and SW11 are coupled as shown in Fig. 3.

It is possible to change over, according to the set value of the register 181, the input of the operational amplifier 111 with the multiplexers SW10 and SW11, the presence or absence of the variable resistors 112a and 112b with the switches 113a and 113b, and the coupling of the DAC 114 with the switch 113c. To add, SW16, SW17 and SW18 can change over coupling of the output of the operational amplifier 111 to the gain amplifier 120, the low-pass filter 130 and the high-pass filter 140. Also, according to the set value of the register 181, it is possible to alter the gain, working point and offset among others of AMP1 by altering the resistances of the resistors 112a, 112c and 112d and the setting of the DAC 114. Further, the slew rate can be controlled by altering the working mode of the operational amplifier to the high speed mode, medium speed mode or low speed mode according to the set value of the register 181.

By changing over the switches and multiplexers, the I/V amplifier, the inverting amplifier, the subtracting (differential) amplifier, the non-inverting amplifier and the summing amplifier can be configured.

Fig. 9 shows an example of configuration of the I/V amplifier. According to the set value of the register 181, the multiplexer SW10 is changed over to couple an external input terminal (MPXIN10) to an inverting input terminal, and the variable resistor 112a is short-circuited by turning on the switch 113a. This coupling results in configuration of the I/V amplifier. Also, by altering the resistances of the resistors 112a and 112d as set by the register 181, the gain of the amplifier is set. This I/V amplifier, when a signal of a current type sensor is inputted from an external input terminal, converts the input current into a voltage, and outputs this voltage.

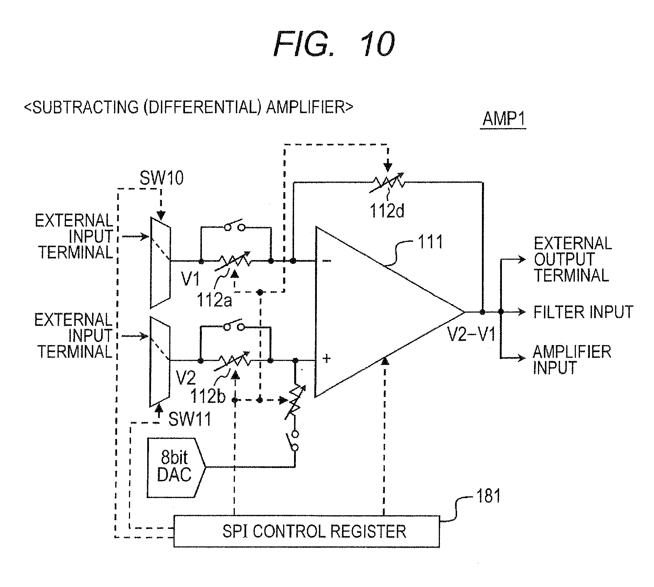

Fig. 10 shows an example of configuration of the subtracting (differential) amplifier. The multiplexers SW10 and SW11 are changed over as set by the register 181 to couple the external input terminal (MPXIN10) to the inverting input terminal and couple an external input terminal (MPXIN20) to a non-inverting input terminal. The coupling in this way results in configuration of the subtracting amplifier. Also, by altering the resistances of the resistors 112a, 112b and 112d as set by the register 181, the gain of the amplifier is set. When two signals (V1 and V2) are inputted from external input terminals, this subtracting amplifier outputs a voltage which is a balance of subtracting one input voltage from the other input voltage (V2 - V1).

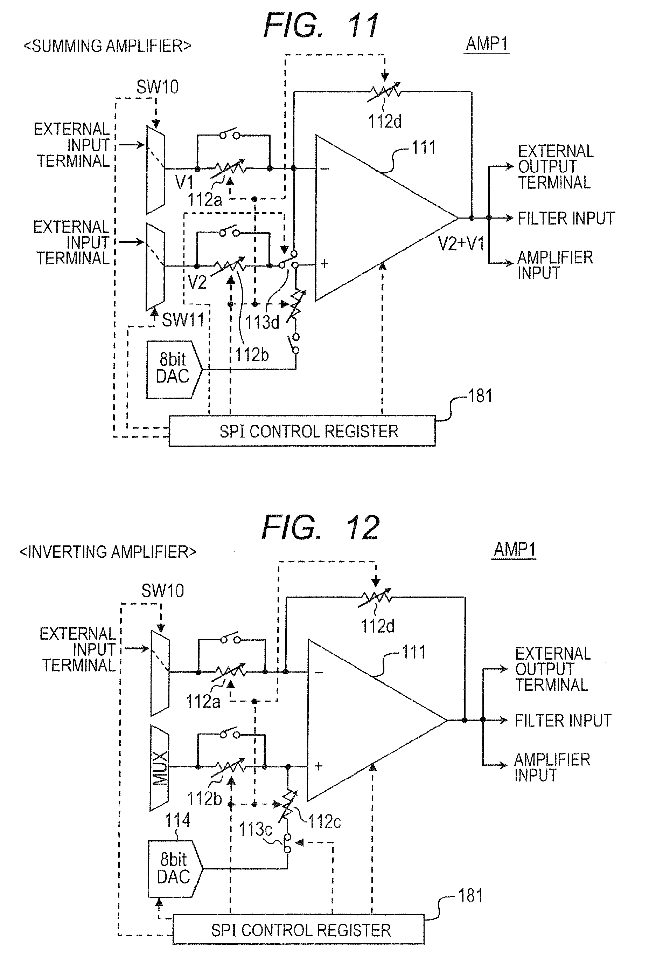

Fig. 11 shows an example of configuration of the summing amplifier. Incidentally, this example is supposed to have the switch 113d between the variable resistor 112b and the inverting input terminal. The multiplexers SW10 and SW11 and the switch 113d are changed over as set by the register 181 to couple the external input terminal (MPXIN10) and the external input terminal (MPXIN20) to the inverting input terminal. The coupling in this way results in configuration of the summing amplifier. Further, by altering the resistances of the variable resistors 112a, 112b and 112d as set by the register 181, the gain of the amplifier is set. When two signals (V1 and V2) are inputted from external input terminals, this summing amplifier outputs a voltage which is the sum of one input voltage and the other input voltage (V1 + V1).

Fig. 12 shows an example of configuration of the inverting amplifier. The multiplexer SW10 is changed over as set by the register 181 to couple the external input terminal (MPXIN10) to the inverting input terminal and the switch 113c is turned on to couple the output of the DAC 114 to the non-inverting input terminal. The coupling in this way results in configuration of the inverting amplifier. Also, by altering the resistances of the variable resistors 112a and 112d as set by the register 181 the gain of the amplifier is set, and by altering the output voltage of DAC the working point and offset of the amplifier are adjusted. This inverting amplifier, when a signal of a voltage type sensor is inputted from an external input terminal, outputs a voltage resulting from inverted amplification of the input voltage.

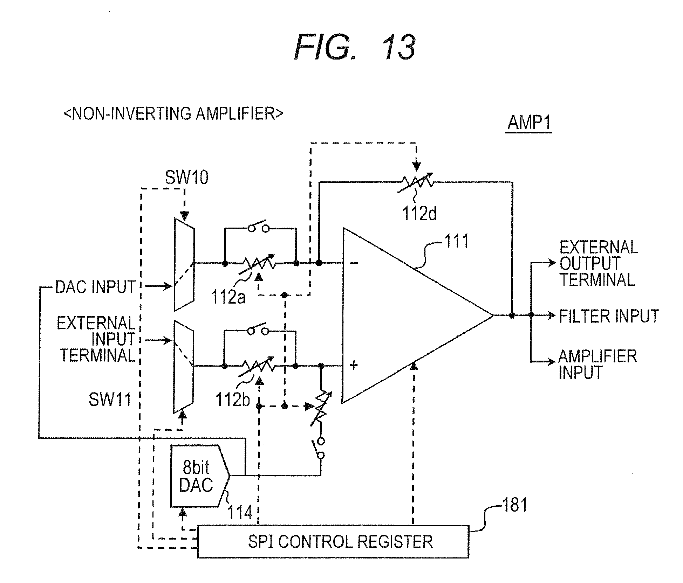

Fig. 13 shows an example of configuration of the non-inverting amplifier. According to the setting of the register, the multiplexer SW10 is changed over to couple the DAC 114 to the non-inverting input terminal, and the multiplexer SW11 is changed over to couple the external input terminal (MPXIN20) to the non-inverting input terminal. The coupling in this way results in configuration of the non-inverting amplifier. Also, by altering the resistances of the variable resistors 112a and 112d as set by the register 181 the gain of the amplifier is set, and by altering the output voltage of DAC the working point and offset of the amplifier are adjusted. This non-inverting amplifier, when a signal of a voltage type sensor is inputted from an external input terminal, outputs a voltage (in the same phase as the input) resulting from non-inverted amplification of the input voltage.

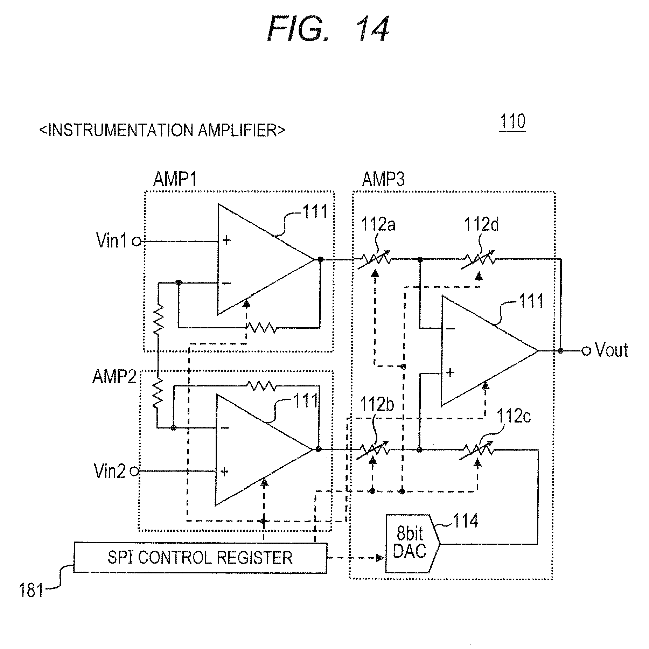

Fig. 14 shows an example of configuration of the instrumentation amplifier using AMP1 through AMP3, The instrumentation amplifier of Fig. 14 can be configured by coupling AMP1 through AMP3 with the multiplexers (switches) SW10 and SW11 as set by the register 181 as described with reference to Fig. 5. Incidentally, while illustration of the switches is dispensed with, for AMP1 the switch 113b is turned on to short-circuit the variable resistor 112b, for AMP2 the switch 113b is turned on to short-circuit the variable resistor 112b, and for AMP3 the switch 113c is turned on to couple the DAC 114 to the non-inverting input terminal.

Further, by altering the resistances of the variable resistors 112a through 112d of AMP3 as set by the register 181 the gain of the instrumentation amplifier is set, and by altering the output voltage of the DAC 114 the working point and offset of the amplifier are adjusted. This instrumentation amplifier, when a feeble differential signal is inputted from an external input terminal, subjects this differential signal to non-inverting amplification by AMP1 and AMP2 and further outputs a voltage differentially amplified by AMP3.

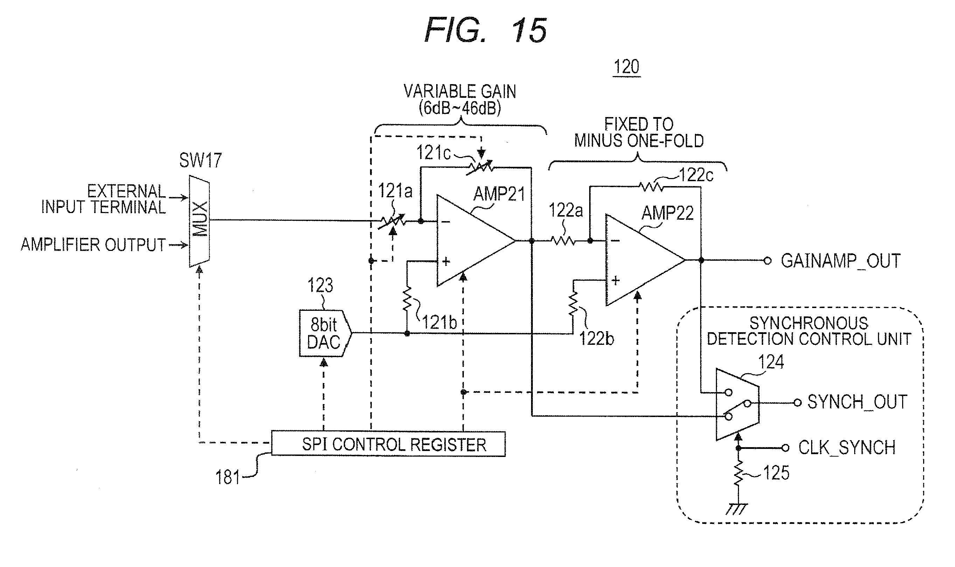

Next, specific circuit configurations of other circuits in the AFE unit 100 will be described with reference to Fig. 15 through Fig. 20.

Fig. 15 shows the circuit configuration of the gain amplifier 120. The gain amplifier 120, supporting the synchronous detecting function, performs amplification and synchronous detection of input signals. To alter its performance feature, the gain amplifier 120 can set the gain variably. For instance, it can set the gain in a range of 6 dB to 46 dB in 2 dB units. Also, it can turn on and off power supply in a power-off mode.

As shown in Fig. 15, the gain amplifier 120 has operational amplifiers AMP21 and AMP22, and further has variable resistors 121a and 121c, fixed resistors 121b, 122a, 122b and 122c and a DAC 123 coupled to the terminals of the operational amplifiers AMP21 and AMP22. The multiplexer (switch) SW17 is also coupled to it as shown in Fig. 3. Further, a synchronous detection switch 124 and a fixed resistor 125 area provided as a synchronous detection control unit for performing synchronous detection.

The multiplexer SW17 is controlled according to the set value of the register 181 to switch over the input to the gain amplifier 120. It is also possible to alter the gain of AMP21 and the working points and offsets of AMP21 and AMP22 by altering the resistances of the variable resistors 121a and 121c and the setting of the DAC 123 according to the set value of the register 181. Further, on/off control of power supply to the operational amplifiers AMP21 and AMP22 can be accomplished according to the set value of the register 181.

In the gain amplifier 120, a signal inputted from any of AMP1 through AMP3 or an external input terminal undergoes inverting amplification by AMP21, and a signal subjected to inverting amplification by AMP22 is further outputted to GAINAMP_OUT.

Further, a synchronous clock CLK_SYNCH is inputted from the MCU unit 200, coupling of the synchronous detection switch 124 is changed over, and the output signal of either AMP21 or AMP22 is outputted to SYNCH_OUT.

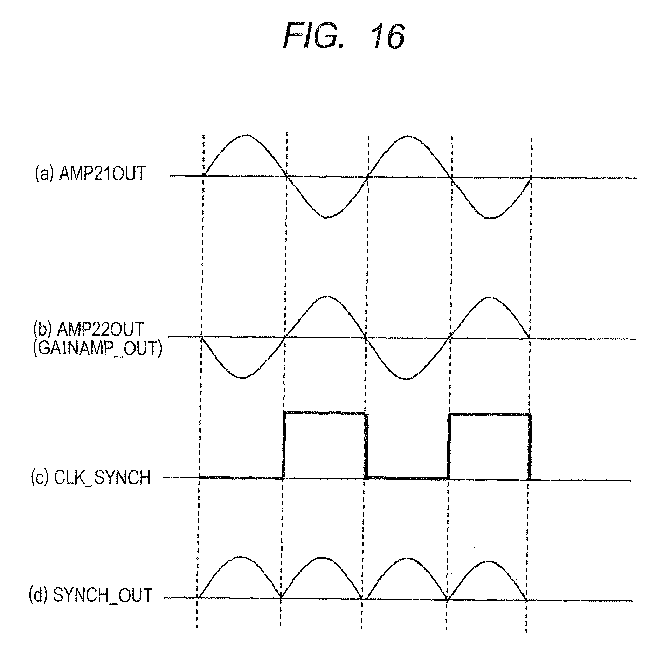

Fig. 16 is a timing chart showing the output operations of the gain amplifier 120. As shown in Fig. 16(a), AMP21 outputs a signal resulting from inversion of the input signal and, as shown in Fig. 16(b), AMP22 outputs a signal resulting from further inversion. This output signal of AMP22 is outputted to GAINAMP_OUT as the output of the gain amplifier 120.

The MCU unit 200 is coupled to GAINAMP_OUT and generates a clock corresponding to the signal of GAINAMP_OUT. Here, it generates CLK_SYNCH that takes on a high level when GAINAMP_OUT is at a higher level than the reference value as shown in Fig. 16(c), and supplies this synchronous clock CLK_SYNCH to the gain amplifier 120.

The synchronous detection switch 124 changes over the coupling between AMP21 or AMP22 and SYNCH_OUT correspondingly to this CLK_SYNCH. When the clock CLK_SYNCH is at a low level, the synchronous detection switch 124 is coupled to AMP21 and supplies the output of AMP21 to SYNCH_OUT, or when the clock CLK_SYNCH is at a high level, it is coupled to AMP22 and supplies the output of AMP22 to SYNCH_OUT. Then, as shown in Fig. 16(d), a signal having undergone synchronous detection and full wave rectification is outputted from SYNCH_OUT.

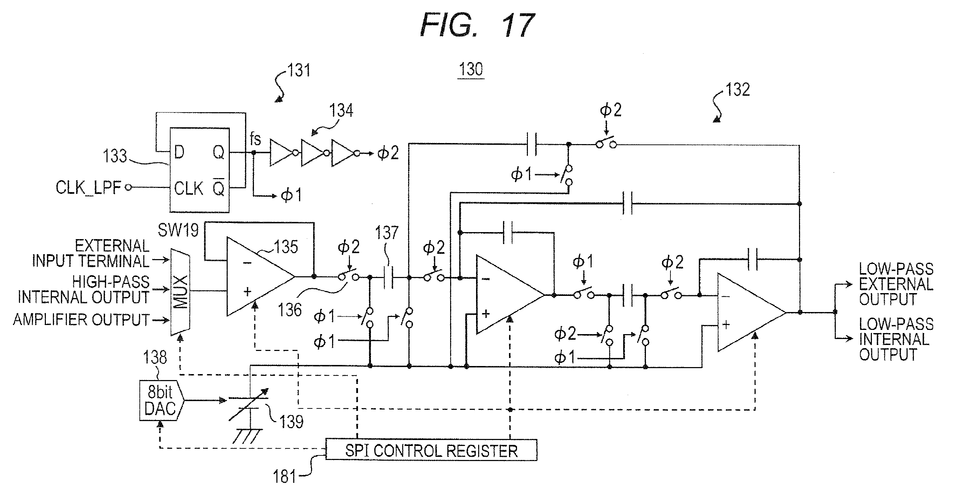

Fig. 17 shows the circuit configuration of the low-pass filter 130. The low-pass filter 130 is of a switched capacitor (SC) type, whose cut-off frequency is variable, and is used for filtering input signals.

Regarding the characteristics of the low-pass filter 130, the Q value is fixed at, for instance 0.702. As alteration of a characteristic, the cut-off frequency fc can be set to be variable. For instance, it can be set in a range of 9 Hz to 900 Hz. Also, power supply can be turned on and off in a power-off mode.

As shown in Fig. 17, the low-pass filter 130 has a switching signal generating unit 131 that generates a switching signal and a filtering unit 132 that filters input signals in accordance with the switching signal.

The switching signal generating unit 131 has a flip-flop 133 and a plurality of inverters 134. The filtering unit 132 has a plurality of operational amplifiers 135, a plurality of switches 136 coupled to the operational amplifiers 135 and a variable power source 139 controlled by a capacitor 137 and a DAC 138. Also, the multiplexer (switch) SW19 is coupled to it as shown in Fig. 3.

The multiplexer SW19 is controlled according to the set value of the register 181 to switch over the input to the low-pass filter 130. It is also possible to control the variable power source 139 by altering the setting of the DAC 138 according to the set value of the register 181 and thereby to alter the working point and offset among others of the amplifier. Further, turning on and off of power supply to the low-pass filter 130 can be controlled according to the set value of the register 181.

In the low-pass filter 130, a clock CLK_LPF is inputted from outside to the switching signal generating unit 131, and switching signals Φ1 and Φ2 are generated by the flip-flop 133 and the inverters 134. When signals are inputted to the filtering unit 132 from an external input terminal, the gain amplifier 120 or the like, signals are outputted via three of the operational amplifiers 135, and on that occasion the switches 136 are turned on or off by the switching signals Φ1 and Φ2 to change over the coupling of the capacitor 137. Then, signals cleared of components of higher frequency than the cut-off frequency of the input signals are outputted.

This cut-off frequency can be altered with the clock CLK_LPF inputted from outside by the MCU unit 200. More specifically, the cut-off frequency fc = 0.009 x fs (switching frequency 1/2f CLK_LPF).

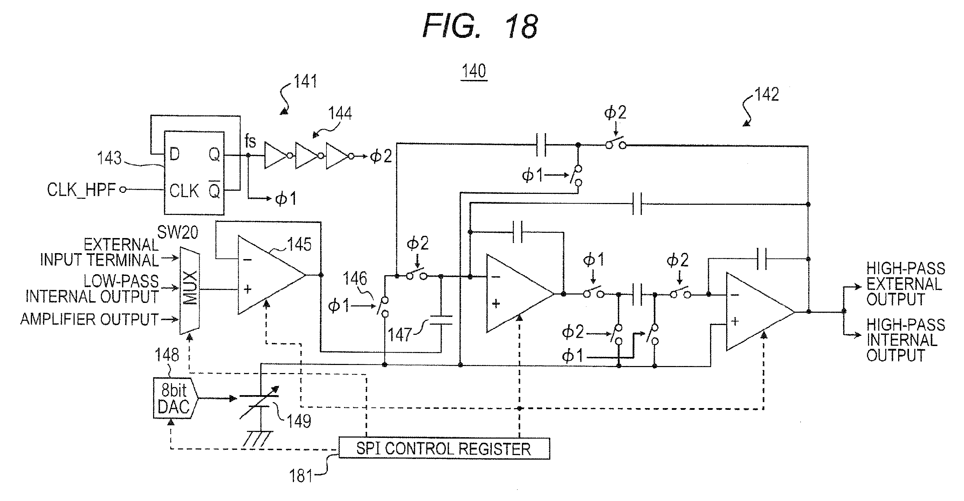

Fig. 18 shows a circuit configuration of the high-pass filter 140. The high-pass filter 140 is an SC type high-pass filter, which is used for filtering input signals.

Regarding the characteristics of the high-pass filter 140, the Q value is fixed at, for instance 0.702. As alteration of a characteristic, the cut-off frequency fc can be set to be variable. For instance, it can be set in a range of 8 Hz to 800 Hz. Also, power supply can be turned on and off in a power-off mode.

As shown in Fig. 18, the high-pass filter 140 has a switching signal generating unit 141 that generates a switching signal and a filtering unit 142 that filters input signals in accordance with the switching signal.

The switching signal generating unit 141 has a flip-flop 143 and a plurality of inverters 144. The filtering unit 142 has a plurality of operational amplifiers 145, a plurality of switches 146 coupled to the operational amplifiers 145 and a variable power source 149 controlled by a capacitor 147 and a DAC 148. Also, the multiplexer (switch) SW20 is coupled to it as shown in Fig. 3.

The multiplexer SW20 is controlled according to the set value of the register 181 to switch over the input to the low-pass filter 140. It is also possible to control the variable power source 149 by altering the setting of the DAC 148 according to the set value of the register 181 and thereby to alter the working point and offset among others of the amplifier. Further, turning on and off of power supply to the high-pass filter 140 can be controlled according to the set value of the register 181.

In the high-pass filter 140, a clock CLK_HPF is inputted from outside to the switching signal generating unit 141, and switching signals Φ1 and Φ2 are generated by the flip-flop 143 and the inverters 144. When signals are inputted to the filtering unit 142 from an external input terminal, the gain amplifier 120 or the like, signals are outputted via three of the operational amplifiers 145, and on that occasion the switches 146 are turned on or off by the switching signals Φ1 and Φ2 to change over the coupling of the capacitor 147. Then, signals cleared of components of lower frequency than the cut-off frequency of the input signals are outputted.

This cut-off frequency can be altered with the clock CLK_HPF inputted from outside by the MCU unit 200. More specifically, the cut-off frequency fc = 0.008 x fs (switching frequency 1/2f CLK_HPF).

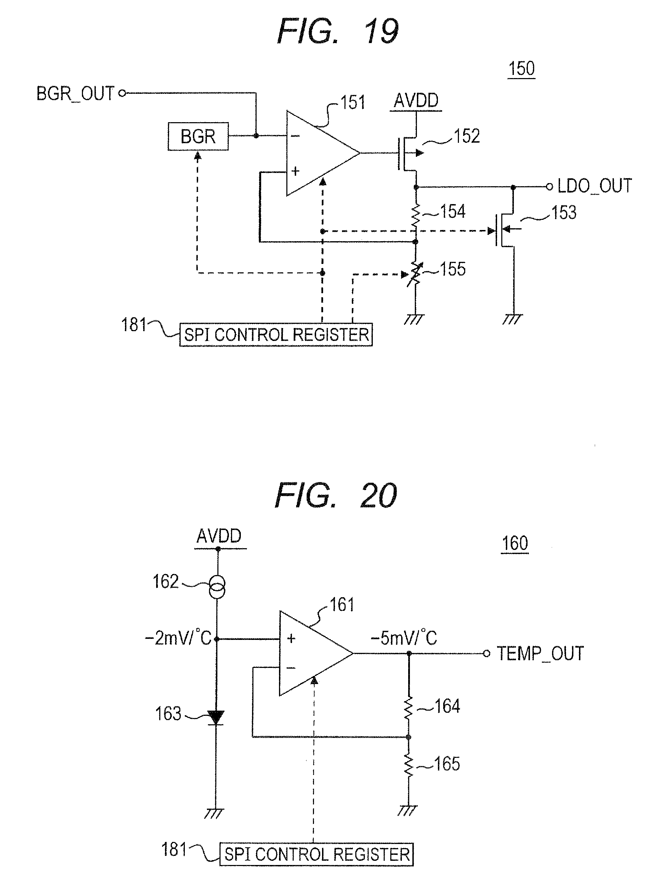

Fig. 19 shows the variable regulator 150. The variable regulator 150, which makes the output voltage variable, is a reference power supply generating circuit for the A/D converter 260 of the MCU unit 200. As alteration of a characteristic, for instance the output voltage of the variable regulator 150 can be set in a range of 2.0 V to 3.3 V in 0.1 V units with a tolerance of ±5%. The output current is 15 mA, and the turning on and off of the output power supply can be controlled.

As shown in Fig. 19, the variable regulator 150 has an operational amplifier 151, and further has a band gap reference BGR coupled to the input side of the operational amplifier 151 and transistors 152 and 153, a fixed resistor 154 and a variable resistor 155.

The voltage of BGR is set according to the set value of the register 181, and the output voltage can be altered by altering the resistance of the variable resistor 155. The power supply on/off state of the operational amplifier 151 and the on/off state of the transistor 153 are changed over according to the set value of the register 181, and the output start/stop of the output voltage is thereby controlled.

The voltage of BGR is outputted from BGR_OUT of the variable resistor 155. The operational amplifier 151 is actuated correspondingly to the voltage of BGR and that of the variable resistor 155 to control the transistor 152, and a voltage corresponding to the ratio between the fixed resistor 154 and the variable resistor 155 is outputted.

Fig. 20 shows a circuit configuration of the temperature sensor 160. The temperature sensor 160, which is a sensor for measuring the temperature of the semiconductor device 1, and can be used by the MCU unit 200 in compensating for temperature characteristics on the basis of the result of this measurement. For instance, as a characteristic of the temperature sensor 160, the output temperature coefficient is -5 mV/°C. Also, power supply can be turned on and off in a power-off mode.

As shown in Fig. 20, the temperature sensor 160 has an operational amplifier 161, and further has a current source 162 and a diode 163 coupled to the input side of the operational amplifier 161 and fixed resistors 164 and 165 coupled to the output side of the operational amplifier 161. Power supply to the operational amplifier 161 can be turned on and off according to the set value of the register 181.

In the temperature sensor 160, the voltage of the diode 163 varies with the temperature at -2 mV/°C, and the operational amplifier 161 subjects this voltage to non-inverting amplification and outputs the amplified voltage as - 5 mV/°C.

In this way, the semiconductor device 1 of type 0 allows the circuit configuration and characteristics of the AFE unit 100 in the semiconductor device to be variably set. For this reason, diverse sensors and the like can be coupled to a single semiconductor device, which therefore can be used in many application systems.

Where the circuitry of the configurable amplifier 110 is configured as a non-inverting amplifier for example, it permits coupling of voltage output type sensors, and accordingly it can be used in an application system using an infrared sensor, a temperature sensor, a magnetic sensor and the like. For instance, it can be used in a digital camera provided with an infrared sensor, a printer provided with a temperature sensor, a tablet terminal provided with a magnetic sensor, an air conditioner provided with an infrared sensor and the like.

Or where the circuitry of the configurable amplifier 110 is configured as an instrumentation amplifier, it permits coupling of sensors with feeble differential outputs, and accordingly it can be used in an application system using a pressure sensor, a gyro sensor, a shock sensor and the like. For instance, it can be used in a sphygmomanometer provided with a pressure sensor, a weighing machine provided with a pressure sensor, a mobile phone provided with a gyro sensor, a liquid crystal TV set provided with a shock sensor and the like.

Or where the circuitry of the configurable amplifier 110 is configured as an I/V amplifier, it permits coupling of sensors to current outputs, and accordingly it can be used in an application system using a photodiode, a motion sensor, an infrared sensor and the like. For instance, it can be used in a digital camera provided with a photodiode, a surveillance camera provided with a motion sensor, a toilet seat provided with a motion sensor, a bar code reader provided with an infrared sensor and the like.

Fig. 21 shows circuit blocks of the semiconductor device 1 of type 1. The semiconductor device of type 0 shown in Fig. 2, intended for use in a general-purpose system, is equipped with all the AFE circuit elements needed by many sensors. Unlike that, the semiconductor device of type 1, intended for use in a common measuring instrument, has a configuration limited to AFE circuit elements required only by sensors for common measuring instruments.

As shown in Fig. 21, the semiconductor device 1 of type 1 is similar to what is shown in Fig. 2 in the configuration of the MCU unit 200, while its AFE unit 100 is provided with an instrumentation amplifier 190, the variable regulator 150, the temperature sensor 160 and the SPI 180. Unlike the semiconductor device shown in Fig. 2, it has no configurable amplifier, synchronous detection-supporting power amplifier, SC type low-pass filter, SC type high-pass filter or general-purpose amplifier, and instead this semiconductor device has only the instrumentation amplifier. Regarding the variable regulator 150, the temperature sensor 160 and the SPI 180, it is the same as what is shown in Fig. 2.

The instrumentation amplifier 190 is an amplifying circuit that can amplify feeble differential signals in support of the sensors of common measuring instruments. The instrumentation amplifier 190 is a circuit similar to the instrumentation amplifier supposed to be configurable by the configurable amplifier 110 of Fig. 2. The circuit configuration of the instrumentation amplifier 190 is fixed, and only its characteristics can be altered.

Fig. 22 shows coupling relationships of circuits in the AFE unit 100 of the semiconductor device 1 of type 1. The variable regulator 150, the temperature sensor 160 and the SPI 180 are similar to their respective counterparts in Fig. 3.

Since the instrumentation amplifier 190 is fixed in circuit configuration, it has no switch (multiplexer) for changing over the configuration. Of the instrumentation amplifier 190, one input terminal is coupled to AMP_IN1, the other input terminal to AMP_IN2, and the output terminal to AMP_OUT. To add, it may be provided with a switch for selecting coupling to a plurality of external terminals.

As the specific circuit configuration of each circuit in the AFE unit 100 of the semiconductor device of type 1 is similar to its counterpart in the semiconductor device of Fig. 2, its description will be dispensed with. Namely, the circuit configuration of the instrumentation amplifier 190 is what is shown in Fig. 14; the instrumentation amplifier 190 permits gain setting by altering resistances, and alteration of the working points, offsets and the like by altering the setting of DAC.

Thus, the circuit configuration of the AFE unit 100 in the semiconductor device 1 of type 1 is fixed, and only the characteristics can be set variably. For this reason, a single semiconductor device can support specific sensors differing in characteristics, and can be used in specific application systems.

For instance, similarly to the case of configuring the instrumentation amplifier in the semiconductor device of type 1, it can be used in an application system comprising a pressure sensor, a gyro sensor, a shock sensor and the like, whose differential outputs are feeble.

Fig. 23 shows another example of circuit blocks in the semiconductor device of type 2. The semiconductor device of type 0 shown in Fig. 2, intended for use in a general-purpose system, is equipped with all the AFE circuit elements needed by many sensors. Unlike that, the semiconductor device of type 2, intended for use in motor control, has a configuration limited to AFE circuit elements required only for motor control.

As shown in Fig. 23, the semiconductor device 1 of type 2 is similar to that shown in Fig. 2 as far as the configuration of the MCU unit 200 is concerned while the AFE unit 100 is provided with high-speed instrumentation amplifiers 191 with built-in comparator, the temperature sensor 160 and the SPI 180. Compared with the semiconductor device shown in Fig. 2, it has no configurable amplifier, synchronous detection-supporting power amplifier, SC type low-pass filter, SC type high-pass filter, general-purpose amplifier or variable regulator, and instead has only the instrumentation amplifiers 191 with built-in comparator. Regarding the temperature sensor 160 and the SPI 180, it is the same as what is shown in Fig. 2.

The high-speed instrumentation amplifiers 191 with built-in comparator (hereinafter sometimes referred to as simply the high-speed instrumentation amplifiers 191) are amplifying circuits capable of amplifying feeble differential signals to support motor control, and further has a built-in comparator for comparing output voltages. The AFE unit 100 has a plurality of (multi-channel) high-speed instrumentation amplifiers 191, and in this case has four (4-ch) high-speed instrumentation amplifiers. The high-speed instrumentation amplifiers 191 are fixed in circuit configuration, and permit alteration of only their characteristics.

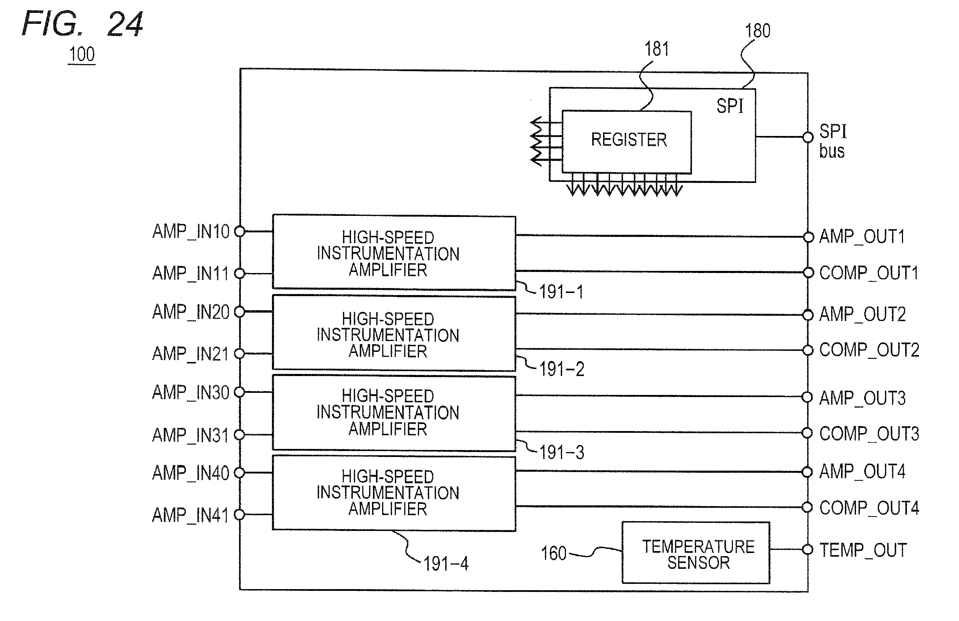

Fig. 24 shows coupling relationships of circuits in the AFE unit 100 of the semiconductor device 1 of type 2. Regarding the temperature sensor 160 and the SPI 180, the relationships are the same as in Fig. 3.

Since high-speed instrumentation amplifiers 191 are fixed in circuit configuration, they have no switch (multiplexer) for changing over the configuration. The four high-speed instrumentation amplifiers 191-1 through 191-4 are independently configured from one another.

Thus, in each of the high-speed instrumentation amplifiers 191-1 through 191-4, one input terminal is coupled to the corresponding one of AMP_IN 10, 20, 30 and 40, the other input terminal to the corresponding one of AMP_IN 11, 21, 31 and 41, the amplifier output terminal to the corresponding one of AMP_OUT 1 through 4, and the comparator output terminal to the corresponding one of COMP_OUT 1 through 4. A switch for selection of coupling to a plurality of external terminals may as well be provided in addition.

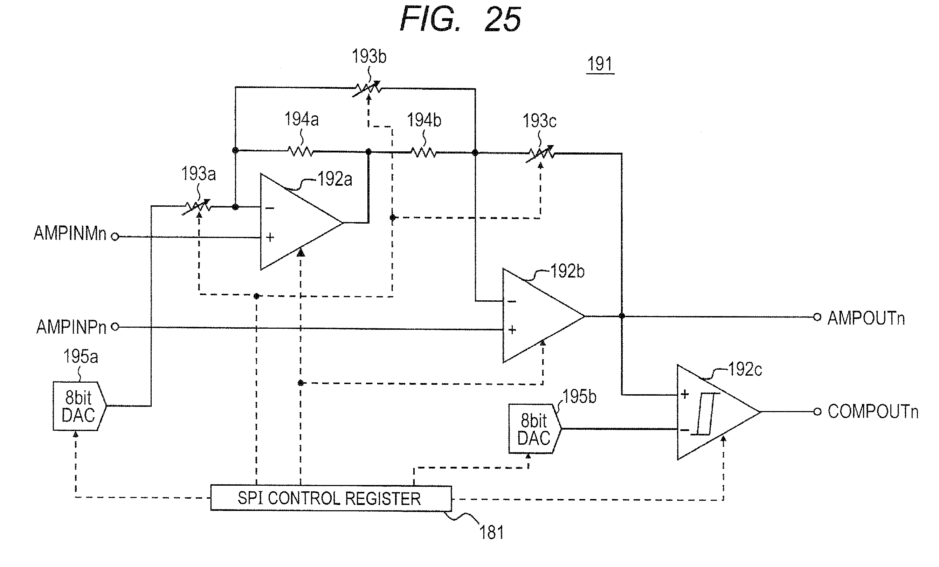

Fig. 25 shows a specific circuit configuration of the high-speed instrumentation amplifier 191. The high-speed instrumentation amplifier 191, which is a high-speed instrumentation amplifier with built-in comparator for motor control use, performs amplification and voltage comparison of output signals from sensors used in motor control. As alteration of a characteristic, the high-speed instrumentation amplifier 191 can set the gain variably. For instance, it can set the gain in a range of 10 dB to 34 dB in 2 dB units. It can also set the slew rate variably, and can turn on and off power supply in a power-off mode.

The high-speed instrumentation amplifier 191 further has a built-in comparator for comparing the outputs of high-speed instrumentation amplifier, and the hysteresis voltage and reference voltage of this comparator are variable.

As shown in Fig. 25, the high-speed instrumentation amplifier 191 has operational amplifiers 192a and 192b acting as instrumentation amplifiers and an operational amplifier 192c acting as a hysteresis comparator, and further has variable resistors 193a through 193c, fixed resistors 194a and 194b, and DACs 195a and 195b to be coupled to the operational amplifiers 192a through 192c.

By altering the resistances of the variable resistors 193a through 193c and the setting of the DAC 195a according to the set value of the register 181, the gain, amplifier working point, offset and the like of the high-speed instrumentation amplifier 191 can be altered. Also, the hysteresis voltage (reference voltage) of the comparator can be altered as set by the DAC 195b. Further, turning on and off of power supply to the operational amplifiers 192a through 192c can be controlled according to the set value of the register 181.

In the high-speed instrumentation amplifier 191, when differential signals are inputted from external input terminals AMPINMn and AMPINPn (corresponding to AMPIN10 and 11 through AMPIN40 and 41), signals having undergone non-inverting amplification at high speed by a two-stage instrumentation amplifier configured of the operational amplifiers 192a and 192b are outputted to AMPOUTn (corresponding to AMPOUT1 through AMPOUT4). Further, a comparative signal resulting from comparison of the output signal from AMPOUTn and the reference signal by the hysteresis comparator, configured of the operational amplifier 192c, is outputted. To add, the MCU unit 200 performs motor control according to signals from AMPOUTn and COMPOUTn.

In this way, in the semiconductor device 1 of type 2 whose circuit configuration is fixed, can set only the characteristics variably. For this reason, a single semiconductor device can support characteristics of specific sensors differing in characteristics and can be used in a specific application system. In particular, it can be coupled to, among others, the drive circuit for a multi-phase motor.

The semiconductor device 1 hitherto described provides the following advantageous effects. First, the size and power consumption can be reduced. As the configuration includes the MCU and AFE circuits within the semiconductor device 1, the size can be smaller than where a plurality of analog circuit ICs are mounted over a package substrate. Further, as power supply to the AFE unit can turned off in the low power consumption mode with the MCU unit kept in the sleep mode, power consumption can be saved.

Also, the process of analog IC development can be shortened. A usual process of developing an analog circuit suitable for the sensors to be used involves circuit designing, mask designing, mask production and sample production, and may take three to eight months. As the analog circuit in this case can be matched with the sensors by merely altering the setting of the semiconductor device 1, the semiconductor device can be developed without involving the steps of circuit designing to sample production. Therefore, a sensor system can be developed in a shorter period of time, and timely introduction of the product to the market can be achieved at a correspondingly early opportunity.

Furthermore, the same semiconductor device 1 can support a plurality of application systems. As the circuit configuration of the semiconductor device 1 can be altered as desired. A single semiconductor device would permit coupling of diverse sensors including current type and voltage type sensors. As there is no need to develop a different semiconductor device for each sensor type, the length of time need for development can be shortened.

In addition, the semiconductor device 1 of type 1, intended for use with common measuring instruments, is provided only with instrumentation amplifiers and the like needed for common measuring instruments, while the semiconductor device 1 of type 2, intended for motor control use, is provided only with high-speed instrumentation amplifiers and the like needed for motor control. For this reason, the circuit configuration is simplified because no unnecessary circuit for the semiconductor device is provided, resulting in the further benefits of a smaller hardware size and reduced power consumption.

As the semiconductor device 1 described above requires determination of the configuration and characteristics of the AFE unit 100 to match the sensors to be coupled, the operation of the sensors and the semiconductor device 1 is simulated in developing the design of the sensor system using the sensors and the semiconductor device 1. In the following paragraphs, the simulation carried out in the development process of the sensor system using the sensors and the semiconductor device 1 will be described. While the description will mainly focus on the semiconductor device 1 including only the AFE unit 100 as the object of simulation, the semiconductor device 1 including both the AFE unit 100 and the MCU unit 200 can also be simulated in a similar manner.

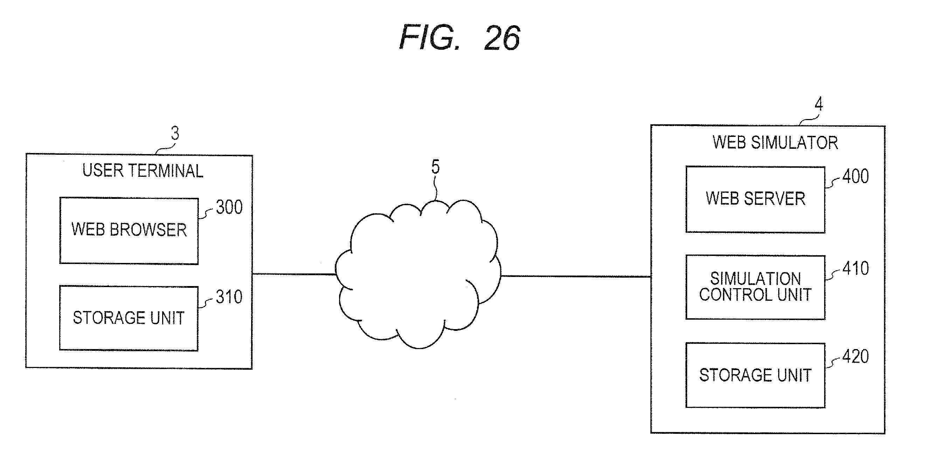

Fig. 26 shows the configuration of a simulation system (design support system) for simulating the actions of semiconductor device 1 in the exemplary embodiment of the invention.

As shown in Fig. 26, this simulation system has a user terminal 3 and a web simulator 4 coupled to permit communication via a network 5. The user terminal 3 mainly has a web browser 300 and a memory 310. The web simulator 4 mainly has a web server 400, a simulation control unit 410 and a memory 420.

The network 5 is the Internet or the like, for instance; it is a network permitting transmission of web page information between the user terminal 3 and the web simulator 4. The network 5 may be a wired network as well as a wireless network.

The web browser 300 of the user terminal 3 displays on a display device a web page on the basis of web page information received from the web server 400. The web browser 300 also is a user interface for accepting an operation from the user, accessing the web server 400 in response to the user operation, and executing simulation with the web simulator 4.

In the memory 310 of the user terminal 3, various data, programs and so forth needed for implementing the functions of the user terminal 3 are stored. The memory 310, as will be described afterwards, downloads from the web simulator 4 and stores register information to be set in the register 181 of the semiconductor device 1.

The web server 400 of the web simulator 4 is a server that provides web service for the web simulator to the web browser 300. The web server 400 accepting an access from the web browser 300 and transmits web page information for displaying on the web browser according to the access.

The simulation control unit 410 of the web simulator 4 implements the function to simulate sensors and the semiconductor device 1. As will be described afterwards, the web simulator 4 sets the circuit configuration of the sensors and the semiconductor device 1 to be simulated, sets parameters needed for the simulation, and executes the simulation.

In the memory 420 of the web simulator 4, various data, programs and so forth needed for implementing the functions of the web simulator are stored. As will be described afterwards, the memory 420 stores information on sensors available for choice, information on bias circuits suitable for the sensors, and information on analog circuits suitable for the sensors and bias circuits among others.

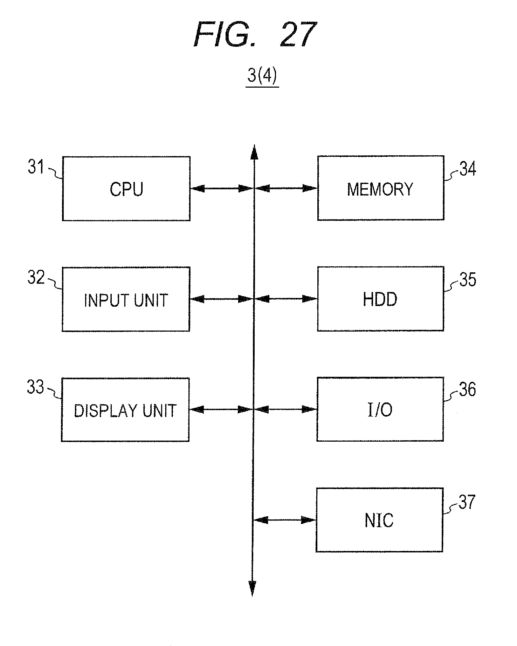

The user terminal 3 is a computer device, such as a personal computer, operating as a client device, and the web simulator 4 is a computer device, such as a work station, operating as a server device. Fig. 27 shows an example of hardware configuration for realizing the user terminal 3 or the web simulator 4. To add, the user terminal 3 or the web simulator 4 can as well be configured of a plurality of computers instead of a single computer.

As shown in Fig. 27, the user terminal 3 or the web simulator 4 is a usual computer device, which includes a central processing unit (CPU) 31 and a memory 34. The CPU 31 and the memory 34 are coupled via a bus to a hard disk device (HDD) 35 as an auxiliary memory device. The user terminal 3 has, as user interface hardware units, an input device 32 including a pointing device (mouse, joystick or the like), a keyboard and the like for enabling the user to make inputs, and a display device 33 for providing visual data, including GUI, to the user, such as a CRT or a liquid crystal display. The web simulator 4, too, may have user interface hardware as does the user terminal 3.

A recording medium, such as the HDD 35, can store browser programs and simulation programs for working in collaboration with the operating system to give instructions to the CPU 31 and other units and implementing the functions of the user terminal 3 or the web simulator 4. These programs are executed by being loaded onto the memory 34.

The user terminal 3 or the web simulator 4 also has an input/output interface (I/O) 36 and a network interface card (NIC) 37 for coupling to an external device. For instance, the user terminal 3 has a USB or the like as the input/output interface 36 for coupling to the semiconductor device 1 among others. The user terminal 3 and the web simulator 4 have an Ethernet® card or the like as the NIC 37 for coupling to the network 5.

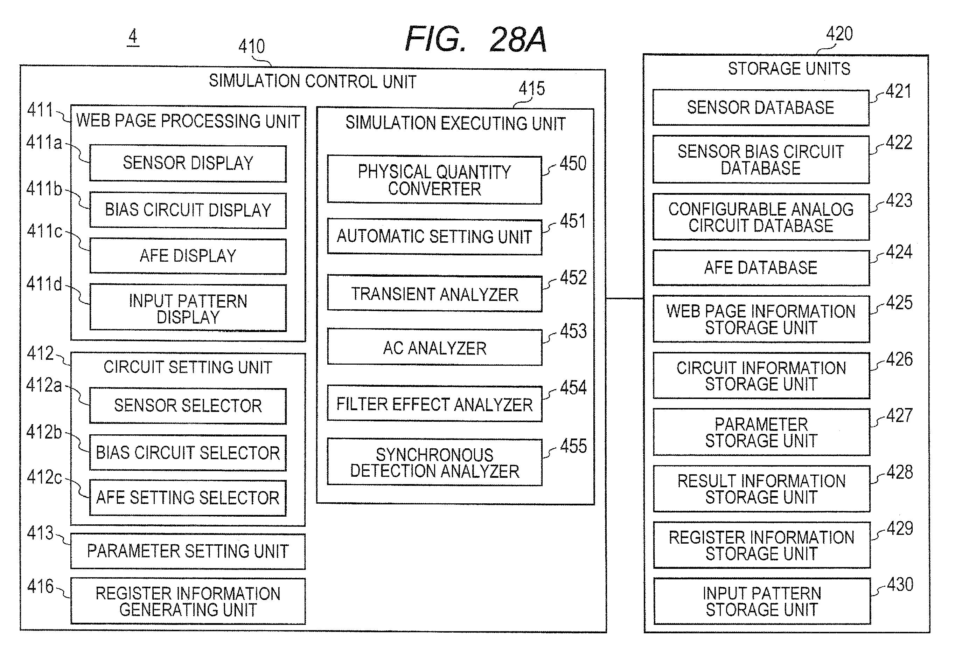

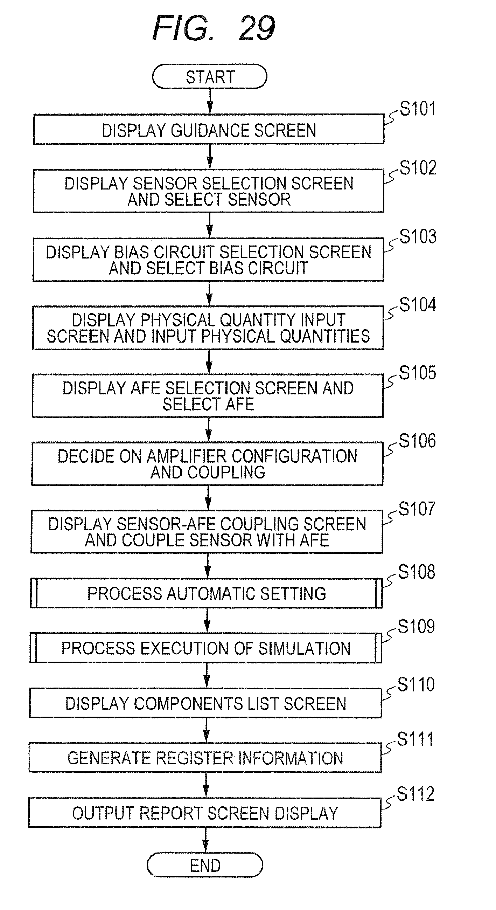

Fig. 28A shows functional blocks in the web simulator 4 and various data to be stored in the memory 420. Fig. 28A shows only one example, but some other configuration may as well be used if only processing and other screen display shown in Fig. 29 and thereafter can be realized.

The simulation control unit 410 implements the functions of various units for simulation through the execution of a simulation program by the CPU 31. As shown in Fig. 28A, the simulation control unit 410 mainly has a web page processing unit 411, a circuit setting unit 412, a parameter setting unit 413, a simulation executing unit 415 and a register information generating unit 416. Further, the simulation executing unit 415 has a physical quantity converter (physical quantity versus electrical characteristic converting function) 450, an automatic setting unit 451, a transient analyzer 452, an AC analyzer 453, a filter effect analyzer 454 and a synchronous detection analyzer 455.

The memory 420 is materialized by the HDD 35 or the memory 34. As shown in Fig. 28A, the memory 420 has a sensor database 421, a sensor bias circuit database 422, a configurable analog circuit database 423, an the AFE database 424, a web page information storage unit 425, a circuit information storage unit 426, a parameter storage unit 427, a result information storage unit 428, a register information storage unit 429 and an input pattern storage unit 430.

The sensor database 421 is a database for storing datasheets of various sensors. Each sensor datasheet contains information including the type and characteristics of the pertinent sensor. In the sensor database 421, the sensor, its type and characteristics are stored in association with one another.

The sensor bias circuit database 422 is a database for storing bias circuits (bias methods) usable by various sensors. The information on bias circuits includes elements making up the bias circuits, coupling relationships among the elements and output terminals among others. In the sensor bias circuit database 422, the sensors and the bias circuits are stored in association with each other.

The configurable analog circuit database 423 is a database for selecting the most suitable analog circuit for the sensors and sensor bias circuits. Information on configurable analog circuits includes the configuration and input terminals of the configurable amplifier 110 of the semiconductor device 1. In the configurable analog circuit database 423, sensors, bias circuits and the configuration of the configurable amplifier 110 are associated with one another.

The AFE database 424 is a database for storing the datasheets of the semiconductor device 1. In particular, in order to simulate the AFE unit 100 of the semiconductor device 1, the datasheets contain information on the configuration, characteristics and so forth of the AFE unit 100. For instance, the AFE database 424 stores datasheets of the semiconductor devices 1 of types 0 through 2.

The web page information storage unit 425 stores web page information for displaying various screens on the web browser 300 of the user terminal 3. The web page information is information for displaying web pages (screens) including GUI for simulating the semiconductor device 1 as will be described afterwards.

In the circuit information storage unit 426, circuit information on the circuits to be simulated is stored. This circuit information includes information on sensors, bias circuits, circuit elements of the AFE unit 100, and coupling relationships between elements. As conditions for simulation, parameters needed for the execution of simulation are stored. These parameters include input information, such as physical quantity information, and circuit parameters.

The result information storage unit 428 stores result information, which is the result of execution of simulation. This result information includes the input/output waveforms of each circuit of the AFE unit 100 as a result of simulation of transient analysis, AC analysis, filtering effect analysis and synchronous detection analysis. The register information storage unit 429 stores register information (configurational information) to be set in the register 181 of the semiconductor device 1. An input pattern storage unit 430 stores information on a plurality of waveform patterns of signals to be inputted to sensors. In the input pattern storage unit 430, patterns of sine waves, square waves, triangular waves, step responses and so forth to be described afterwards are stored as input patterns.

The web page processing unit (web page display unit) 411 displays a web page (screen) including GUI on the web browser 300 by transmitting to the user terminal 3 via the web server 400 web page information stored in the web page information storage unit 425, and further accepts from the user terminal 3 an operation of inputting to GUI of the web page by the user.

The web page processing unit 411 has a display subunit for displaying each screen. Thus, the web page processing unit 411 is provided with a sensor display 411a, a bias circuit display 411b, an AFE display 411c, and an input pattern display 411d. The sensor display 411a references the sensor database 421, and displays a plurality of sensors matching the types of the user-selected sensors. The bias circuit display 411b references the sensor bias circuit database 422, and displays a plurality of bias circuits matching the types of the selected sensors. The AFE display (semiconductor device display) 411c references the AFE database 424, and displays a plurality of semiconductor devices 1 each having a configurable amplifier 110 of the set circuit configuration. The input pattern display 411d displays a plurality of waveform patterns stored in the input pattern storage unit 430.

The circuit setting unit 41.2 generates circuit information in response to an operation of inputting to the web page (screen) by the user, and stores it into the circuit information storage unit 426. The circuit setting unit 411 generates circuit information correspondingly to the selection of the sensor, bias circuit and semiconductor device 1. For instance, the circuit setting unit 411 has a sensor selector 412a, a bias circuit selector 412b and an AFE setting selector 412c.

The sensor selector 412a generates circuit information on the basis of information on the sensor selected by user operation out of a plurality of sensors contained in the sensor database 421 displayed by the sensor display 411a. The bias circuit selector 412b generates circuit information on the basis of information on the bias circuit selected by user operation out of a plurality of bias circuits displayed by the bias circuit display 411b. The AFE setting selector (circuit configuration setting unit) 412c references the configurable analog circuit database 423, identifies the configuration and coupling relationship of the configurable amplifier 110 suitable for the selected sensor and bias circuit, and generates circuit information accordingly. Further, the AFE setting selector (semiconductor device selector) 412c generates circuit information on the basis of information on the semiconductor device 1 selected by user operation out of a plurality of semiconductor devices 1 contained in the AFE database 424 displayed by the AFE display 411c.

The parameter setting unit 413 generates parameters for the execution of simulation in response to an operation of inputting of the web page (screen) by the user, and stores it into the parameter storage unit 427. The parameter setting unit (input pattern selector) 413 generates information on the input pattern of the physical quantity to be inputted to the sensor, selected by user operation out of the plurality of waveform patterns displayed by the input pattern display 411d.

The simulation executing unit 415 references the circuit information storage unit 426 and the parameter storage unit 427, and executes simulation on the basis of the stored circuit information and parameters.

The physical quantity converter 450 converts the physical quantity, which is sensor input information, into an electric signal of sensor output. The physical quantity converter 450 references the parameter storage unit 427, and generates a sensor output signal in accordance with the input pattern of the set physical quantity and correspondingly to the physical quantity varying in the order of a time series.

The automatic setting unit (circuit characteristics setting unit) 451 automatically sets the circuit characteristics of the AFE unit 100, and stores the parameters so set into the parameter storage unit 427. The automatic setting unit 451 references the circuit information storage unit 426, and automatically sets an appropriate gain/offset for the configurable amplifier 110 in the set sensors and bias circuits and the circuit configuration of the configurable amplifier 110. The automatic setting unit 451 simulates the actions of the configurable amplifier 110, and so adjusts parameters of the configurable amplifier 110, including the DAC voltage and gain, as to obtain the optimal gain/offset.

The transient analyzer 452 simulates the input/output characteristics of the AFE unit 100 for analysis of transient characteristics, and stores the result of simulation into the result information storage unit 428. The transient analyzer 452 references the circuit information storage unit 426 and the parameter storage unit 427, simulates the circuit operation of the configuration whose parameters have been set as the conditions of simulation, and generates a waveform representing the input/output characteristics. The transient analyzer 452, using as the input signal to the AFE unit 100 the sensor output signal converted by the physical quantity converter 450 regarding the input pattern of the physical quantity inputted in a time series, simulates the actions of the AFE unit 100, and generates the output signal in the time series for each circuit of the AFE unit 100.

The AC analyzer 453 simulates the frequency characteristics of the AFE unit 100 to analyze AC characteristics, and stores the result of simulation into the result information storage unit 428. The AC analyzer 453 references the circuit information storage unit 426 and the parameter storage unit 427, simulates the circuit operation of the configuration whose parameters have been set as the conditions of simulation, and generates a waveform representing the frequency characteristics. The AC analyzer 453, using as the input signal to the AFE unit 100 the sensor output signal converted by the physical quantity converter 450 regarding the input pattern of the physical quantity, simulates the actions of the AFE unit 100, and generates the output signal for each frequency of each circuit of the AFE unit 100.

The filter effect analyzer 454 simulates the input/output characteristics of the AFE unit 100 in a noise occurring environment to analyze the filtering effect, and stores the result of simulation into the result information storage unit 428. The filter effect analyzer 454 references the circuit information storage unit 426 and the parameter storage unit 427, simulates the circuit operation of the configuration whose parameters have been set as the conditions of simulation, and generates a waveform representing the input/output characteristics in the noisy environment. The filter effect analyzer 454 adds noise to the input pattern of the physical quantity inputted in a time series, simulates the actions of the AFE unit 100 using as the input signal to the AFE unit 100 the sensor output signal converted by the physical quantity converter 450 from the noise-added signal, and generates the output signal of each circuit of the AFE unit 100 in the time series.

The synchronous detection analyzer 455 simulates the synchronous detecting action of the AFE unit 100 to analyze the synchronous detecting action, and stores the result of simulation into the result information storage unit 428. The synchronous detection analyzer 455 references the circuit information storage unit 426 and the parameter storage unit 427, simulates the circuit operation of the configuration whose parameters have been set as the conditions of simulation, and generates a waveform representing the synchronous detecting action. The synchronous detection analyzer 455, using as inputs the input pattern of the physical quantity inputted in a time series and the synchronous clock shown in Fig. 16, simulates the actions of the AFE unit 100, and generates the output signal of each circuit of the AFE unit 100 in a time series.

The register information generating unit 416 generates register information for setting the semiconductor device 1 to the register 181, and stores it into the register information storage unit 429. The register information generating unit 416 references the circuit information storage unit 426 and the parameter storage unit 427, and generates the register information correspondingly to the circuit configuration and circuit characteristics of the AFE unit 100 set as the object of simulation.

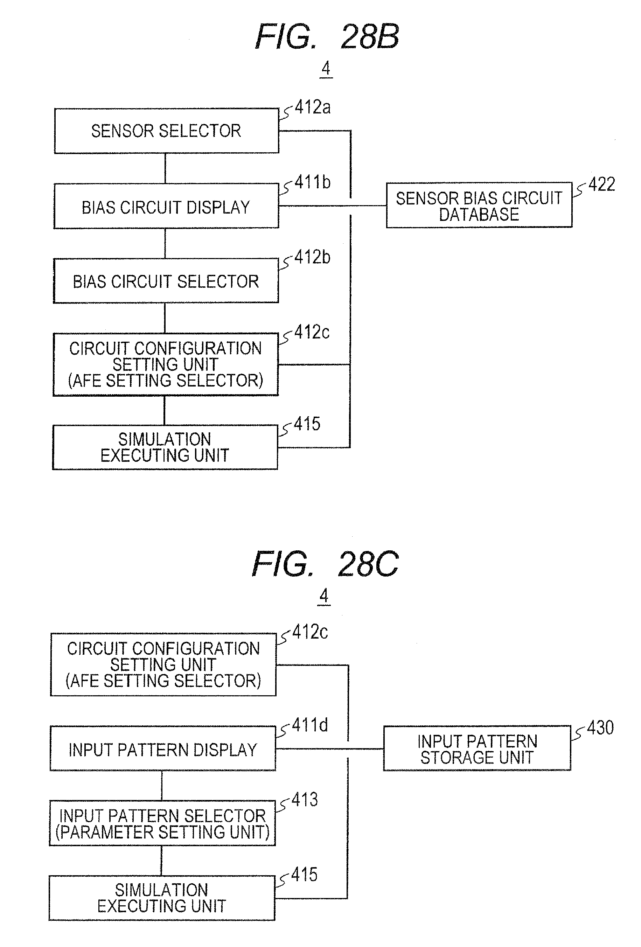

Also, the web simulator 4 may be configured of some, not all, of the blocks shown in Fig. 28A, as in Fig. 28B and Fig. 28C. For instance, as shown in Fig. 28B, the web simulator 4 is provided with at least the sensor bias circuit database 422, the sensor selector 412a, the bias circuit display 411b, the bias circuit selector 412b, the circuit configuration setting unit (AFE setting selector) 412c and the simulation executing unit 415 among the constituent elements shown in Fig. 28A.

Thus, in the configuration shown in Fig. 28B, the sensor selector 412a selects the sensor to be coupled to the semiconductor device 1. The sensor bias circuit database 422 stores in association with each other the sensor and a plurality of bias circuits to supply bias signals to the sensor, and the bias circuit display 411b references the sensor bias circuit database 422 and displays a plurality of bias circuits matching the selected sensor. The bias circuit selector 412b selects in accordance with user operation, out of the displayed plurality of bias circuits, the bias circuit to be coupled to the selected sensor. The circuit configuration setting unit 412c sets the circuit configuration of the semiconductor device 1 to be coupled to the selected sensor and bias circuit. The simulation executing unit 415 executes simulation of the coupled circuit in which the selected sensor and bias circuit and the semiconductor device 1 of the set circuit configuration are coupled. By configuring the web simulator 4 as shown in Fig. 28B, it is possible to select the most suitable bias circuit out of the plurality of bias circuits matching the sensor and to execute simulation effectively.

Further, as shown in Fig. 28C, the web simulator 4 is provided with at least the input pattern storage unit 430, the circuit configuration setting unit (AFE setting unit) 412c, the input pattern display 411d, the input pattern selector (parameter setting unit) 413 and the simulation executing unit 415 among the constituent elements shown in Fig. 28A.

Thus, in the configuration shown in Fig. 28C, the circuit configuration setting unit 412c sets the circuit configuration of the semiconductor device 1 to match the sensor to be coupled to the semiconductor device 1. The input pattern storage unit 430 stores a plurality of waveform patterns of signals inputted to the sensor, and the input pattern display 411d displays the plurality of waveform patterns stored in the input pattern storage unit 430. The input pattern selector 413 selects in accordance with user operation the waveform pattern of the signal to be inputted to the sensor out of the displayed plurality of waveform patterns. The simulation executing unit 415 executes simulation of the coupled circuit in which the sensor and an analog front end circuit of the set circuit configuration are coupled to the selected waveform pattern as the input condition. By configuring the web simulator 4 at least as shown in Fig. 28C, a desired pattern can be selected output of the waveform patterns inputted to the sensor, and simulation can be accomplished effectively.

Next, the method of simulation executed by the simulation system pertaining to this exemplary embodiment will be described with reference to Fig. 29 through Fig. 37. As the web simulator 4 shown in Fig. 26 through Figs. 28 executes each step of this simulation process, the following description will focus on steps to be executed by the web simulator 4.

The flow chart of Fig. 29 shows the overall flow of simulation processing in this exemplary embodiment. In this simulation processing, first, the web page processing unit 411 causes the user terminal 3 to display a guidance screen (S101). When the user designates URL of the web simulator 4 in the web browser 300 of the user terminal 3, the web browser 300 accesses the web server 400, and a simulation program is actuated in the web simulator 4. Then, the web page processing unit 411 transmits web page information on the guidance screen, which is the start page, to the user terminal 3, and causes the web browser 300 to display the guidance screen.

Then, the web page processing unit 411 causes the user terminal 3 to display a sensor selection screen, and the user selects a sensor (S102). When the user operates for sensor selection on the guidance screen of S101, the web page processing unit 411 transmits web page information of the sensor selection screen for selecting the sensor to the user terminal 3, and causes the web browser 300 to display the sensor selection screen. When the user designates narrowing-down conditions (searching conditions or filtering conditions) including the sensor type, the web page processing unit 411 extracts from the sensor database 421 sensors meeting the narrowing-down conditions, and displays a list of extracted sensors on the sensor selection screen. When the user selects a sensor to be used out of the displayed sensor list, the circuit setting unit 411 (sensor selector 412a) stores the selected sensor into the circuit information storage unit 426 as the circuit to be simulated.

Then, the web page processing unit 411 causes the user terminal 3 to display a bias circuit selection screen, and the user selects a bias circuit (S103). When the user operates for bias circuit setting on the sensor selection screen of S102, the web page processing unit 411 transmits web page information on the bias circuit selection screen to the user terminal 3, and causes the web browser 300 to display it on the bias circuit selection screen. The web page processing unit 411 references the sensor bias circuit database 422, extracts a plurality of bias circuits suitable for the sensor selected at S102, and displays them on the bias circuit selection screen. When the user selects a bias circuit out of the plurality of bias circuits displayed on the bias circuit selection screen, the circuit setting unit 411 (bias circuit selector 412b) stores the selected bias circuit into the circuit information storage unit 426 as the circuit to be simulated.

Then, the web page processing unit 411 causes the user terminal 3 to display a physical quantity input screen, and the user inputs the physical quantity (S104). When the user operates for physical quantity inputting on the sensor selection screen of S102 or the bias circuit selection screen of S103, the web page processing unit 411 transmits web page information on the physical quantity input screen for enabling the user to input the physical quantity of the sensor to the user terminal 3, and causes the web browser 300 to display the physical quantity input screen. The web page processing unit 411 displays on the physical quantity input screen a plurality of input patterns (input waveforms) for inputting physical quantities as inputs to the sensor to be inputted in a time series, and the user selects the input pattern for use in simulation. Further, the web page processing unit 411 references the sensor database 421, and displays on the physical quantity input screen the input range of physical quantities matching the selected sensor, and the user sets the input range of physical quantities. When the user inputs on the physical quantity input screen the input pattern of the physical quantity to be inputted to the sensor and the input range, the parameter setting unit 413 sets the inputted parameters in the parameter storage unit 427.

Then, the web page processing unit 411 causes the user terminal 3 to display an AFE selection screen, and the user selects an AFE (semiconductor device) (S105). When the user operates for selection of the semiconductor device 1 (the AFE unit 100) on the guidance screen of S101, the sensor selection screen of S102 or the like, the web page processing unit 411 transmits web page information on the AFE selection screen for enabling the user to select the semiconductor device 1 to the user terminal 3, and causes the web browser 300 to display the AFE selection screen.

The web page processing unit 411 references the AFE database 424, and extracts the semiconductor device 1 including the configuration of the configurable amplifier 110 suitable for the selected sensor and bias circuit. Then it references the configurable analog circuit database 423, determines the configuration of the configurable amplifier 110 suitable for the selected sensor and bias circuit, and extracts the semiconductor device 1 including the configurable amplifier 110 of the determined configuration. Further the web page processing unit 411, when the user designates the narrowing-down conditions including the configuration of the semiconductor device 1, extracts from the AFE database 424 the semiconductor devices 1 meeting the narrowing-down conditions, and displays on the AFE selection screen a list of extracted semiconductor devices 1. When the user selects the semiconductor device 1 (the AFE unit 100) to be used out of the list of semiconductor devices 1, the AFE unit 100 of the selected semiconductor device 1 is stored into the circuit information storage unit 426 as the circuit to be simulated.

Then, the circuit setting unit 412 determines the configuration and coupling relationships of the configurable amplifier 110 (S106). When the sensor and bias circuit are selected at S102 and S103 and the semiconductor device 1 is selected at S105, the circuit setting unit 411 references the configurable analog circuit database 423, determines the configuration of the configurable amplifier 110 suitable for the selected sensor and bias circuit, and determines the coupling relationship (coupling terminals) of the selected sensor and bias circuit to the selected sensor and bias circuit. The configurable amplifier 110 stores into the circuit information storage unit 426 information on the configuration and coupling relationship of the configurable amplifier 110 that have been determined.

Then, the web page processing unit 411 causes the user terminal 3 to display a sensor-AFE coupling screen, and the user couples a sensor to the AFE (semiconductor device 1) (S107). When the user operates for coupling of the sensor to the semiconductor device 1 on the AFE selection screen of S105, the web page processing unit 411 transmits web page information on the web page processing unit 411 for enabling the user to couple the sensor to the semiconductor device 1 to the user terminal 3, and causes the web browser 300 to display the sensor-AFE coupling screen. The web page processing unit 411 displays the output terminals of the selected sensor and bias circuit and the input terminal of the selected semiconductor device 1 (AFE unit 100) in such a manner that the user can select a coupling relationship between the sensor and bias circuit and the semiconductor device 1. Further, as the default coupling state, a coupling relationship is so displayed that the sensor and bias circuit and the semiconductor device 1 are coupled as determined at S106. When the user selects the coupling relationship between the sensor and bias circuit and the semiconductor device 1 on the sensor-AFE coupling screen, the circuit setting unit 411 stores the selected coupling relationship into the circuit information storage unit 426 as the circuit coupling relationship to be simulated.

Then, the automatic setting unit 451 executes automatic setting (S108). When the configurations of and the coupling relationship between the sensor and bias circuit and the configurable amplifier 110 are determined at S102 through S107, the automatic setting unit 451 executes automatic setting to automatically set the default value of the configurable amplifier 110. Details of this automatic setting will be described afterwards. The automatic setting unit 451 stores into the parameter storage unit 427 parameters including the DAC output and gain of the configurable amplifier 110 set by the automatic setting.

Then, the simulation executing unit 415 processes the execution of simulation (S109). When the configurations of and the coupling relationship between the sensor and bias circuit and the semiconductor device 1 (the AFE unit 100) are determined at S102 through S108, the simulation executing unit 415 processes the execution of simulation for transient analysis, AC analysis, filtering effect analysis, synchronous detection analysis and so forth in accordance with user operation. Details of this execution of simulation will be described afterwards. The simulation executing unit 415 stores the result of simulation obtained by processing the execution of simulation into the result information storage unit 428.

Then, the web page processing unit 411 causes the user terminal 3 to display a components list screen (S110). When the user operates for displaying of a components list (bills of materials (BOM)) on the guidance screen of S101 or a simulation screen (to be described afterwards) of S109, the web page processing unit 411 transmits to the user terminal 3 web page information on the components list screen for displaying the components list, and the web browser 300 is causes to display the components list screen. Te web page processing unit 411 references the circuit information storage unit 426, and displays on the components list screen a components list including the sensor and the semiconductor device 1 selected for simulation. The components list to be displayed is linked to a components purchase site and, upon choice of components by the user, the components purchase site is accessed to enable the chosen components to be purchased.

Then, the register information generating unit 416 generates register information (S111). When the circuit configuration and parameters (circuit characteristics) of the semiconductor device 1 (AFE unit 100) are determined at S102 through S109, the register information generating unit 416 generates register information for setting in the register 181 of the semiconductor device 1. The register information generating unit 416 references the circuit information storage unit 426 and the parameter storage unit 427, generates register information on the basis of the circuit configuration and parameters of the semiconductor device 1, and stores the generated register information into the register information storage unit 429. As the register information is displayed on a report screen the generation of register information of S111 may be executed by time of displaying the report screen.

Then, the web page processing unit 411 causes the user terminal 3 to display the report screen (S112). When the user operates to output the result of simulation on the guidance screen of S101 or the simulation screen of S109, the web page processing unit 411 transmits web page information on the report screen including the result of simulations to the user terminal 3, and causes the web browser 300 to display the report screen. The web page processing unit 411 references the result information storage unit 428, and displays the result of simulation on the report screen. Further, the web page processing unit 411 references the circuit information storage unit 426, the parameter storage unit 427 and the register information storage unit 429, displays the circuit configurations, coupling relationships and parameters of the sensor, bias circuit and semiconductor device 1 to be simulated, and also displays register information on the semiconductor device 1. In addition, on the report screen, the register information can be downloaded to the user terminal 3 in response to user operation.

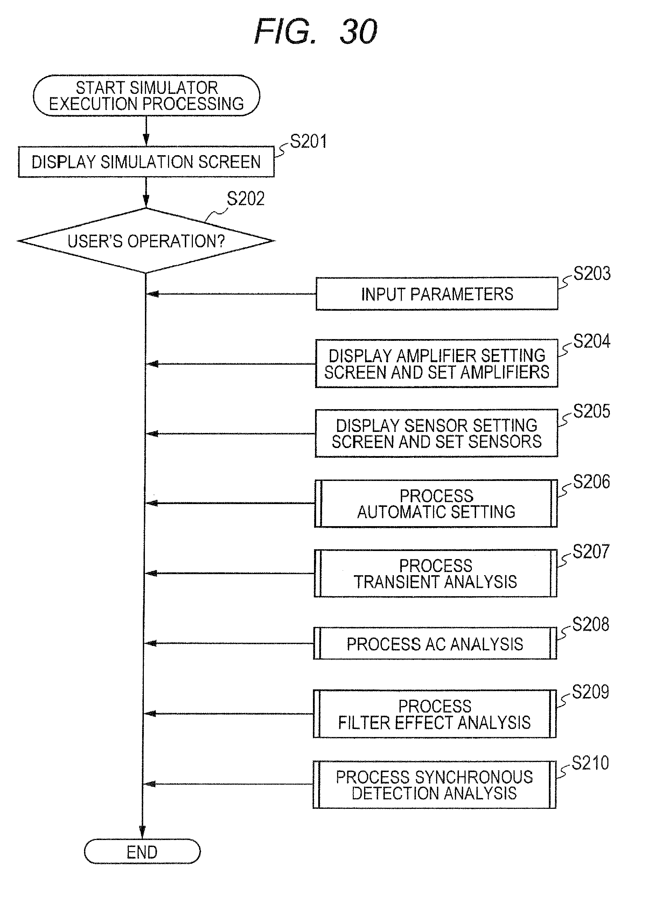

Fig. 30 charts the execution of simulation in this exemplary embodiment, which corresponds to processing at S109 in Fig. 29. First, the web page processing unit 411 causes the user terminal 3 to display the simulation screen (S201). When the execution of simulation is started at S109 in Fig. 29, the web page processing unit 411 transmits web page information on the simulation screen for the execution of simulation to the user terminal 3, and causes the web browser 300 to display the simulation screen.

In response to user operation on the simulation screen at S201, the following steps of processing at S203 through S210 are executed (S202). The execution of these steps is repeated as long as the simulation screen is displayed.

When the user operates for parameter inputting on the simulation screen, the web page processing unit 411 causes a screen for parameter inputting to be displayed on the user terminal 3, and the user inputs parameters needed for simulation (S203). When the user clicks a parameter input button or the like for parameter inputting on the simulation screen, the web page processing unit 411 transmits web page information on a parameter input screen to the user terminal 3, and causes the web browser 300 to display the parameter input screen. The web page processing unit 411 displays on the parameter input screen the parameters and default values already set in the parameter storage unit 427. When the user inputs and determines parameters on the parameter input screen, the parameter setting unit 413 stores the parameters into the parameter storage unit 427.

When the user operates for setting of the configurable amplifier 110 on the simulation screen, the web page processing unit 411 causes the user terminal 3 to display an amplifier setting screen, and the user sets the configurable amplifier 110 (S204). When the user clicks an icon or the like of the amplifier on the simulation screen, the web page processing unit 411 transmits to the user terminal 3 web page information on the amplifier setting screen for detailed setting of the configurable amplifier 110, and causes the web browser 300 to display the amplifier setting screen. The web page processing unit 411 displays on the amplifier setting screen the circuit configuration of the amplifier already set in the circuit information storage unit 426. When the user sets and determines the configuration of the configurable amplifier 110 on the amplifier setting screen, the circuit setting unit 411 sets the circuit configuration of the configurable amplifier 110 in the circuit information storage unit 426.

When the user operates for setting of a sensor on the simulation screen, the web page processing unit 411 causes the user terminal 3 to display a sensor setting screen, and the user sets the sensor (S205). When the user clicks a sensor setting button or the like on the simulation screen, the web page processing unit 411 transmits web page information on the sensor setting screen to the user terminal 3, and causes the web browser 300 to display the sensor setting screen. The web page processing unit 411 displays on the sensor setting screen information on a sensor already set in the circuit information storage unit 426. When the user sets and determines sensor information on the sensor setting screen, the circuit setting unit 411 sets circuit information on the sensor in the circuit information storage unit 426.

On the simulation screen, if the user operates for automatic setting, automatic setting is processed (S206); if the user operates for transient analysis, transient analysis is processed (S207); if the user operates for AC analysis, AC analysis is processed (S208); if the user operates for filtering effect analysis, filtering effect analysis is processed (S209); of if the user operates for synchronous detection analysis, synchronous detection analysis is processed (S210). These sets of processing will be described below.

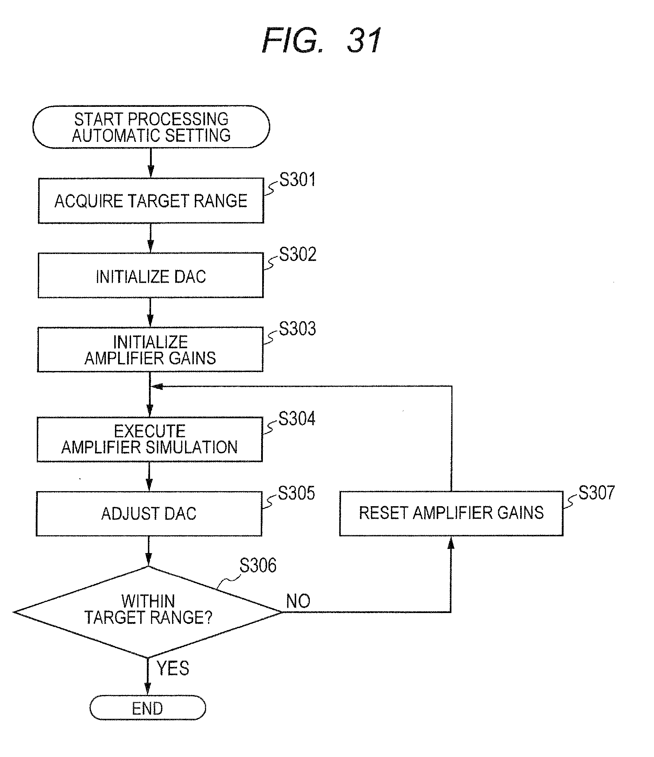

Fig. 31 charts the processing of automatic setting in this exemplary embodiment, which corresponds to processing at S108 in Fig. 29 and S206 in Fig. 30. For instance, when the user clicks an amplifier setting button on the simulation screen, processing of automatic setting is started.

First, the automatic setting unit 451 acquires the target range of the configurable amplifier 110 that processes automatic setting (S301). The automatic setting unit 451 references the AFE database 424, acquires the target range (dynamic range) in which the configurable amplifier 110 within the semiconductor device 1 can perform outputting actions.

Then, the automatic setting unit 451 initializes a DAC to be coupled to the input of the configurable amplifier 110 (S302), and initializes the gain of the configurable amplifier 110 (S303). The automatic setting unit 451 so initializes the output voltage of the DAC that the input signal to the configurable amplifier 110 takes on the center value (median). Also, the automatic setting unit 451 initializes the gain of the configurable amplifier 110 to any desired value.

Then, the automatic setting unit 451 executes simulation of the configurable amplifier 110 (S304). The automatic setting unit 451 sets the output signal of the sensor, the output voltage of the DAC and the gain of the configurable amplifier 110 to meet the conditions of simulation, and simulates the actions of the configurable amplifier 110. For instance, the automatic setting unit 451 calculates the output signals of the configurable amplifier 110 when the minimum and maximum values and the median of the output signal of the sensor are inputted to the configurable amplifier 110.

Then, the automatic setting unit 451 adjusts the output voltage of the DAC (S305). The automatic setting unit 451 compares the median of the output voltage of the configurable amplifier 110 and that of the source voltage, and raises or lowers the output voltage of the DAC according to the relative level of the result of comparison.

Then, the automatic setting unit 451 determines whether or not the result of simulation is within the target range of the configurable amplifier 110 (S306). The automatic setting unit 451 compares the minimum and maximum values and the target range of the output signals of the configurable amplifier 110 according to simulation. It compares the output signal of the configurable amplifier 110 when the input signal is at its minimum with the minimum of the target range and, if the result of simulation is found smaller than the minimum of the target range, determines that it is out of the range or, if the result of simulation is found greater than the minimum of the target range, determines that it is within the range. It compares the output signal of the configurable amplifier 110 when the input signal is at its maximum with the maximum of the target range and, if the result of simulation is found greater than the maximum of the target range, determines that it is out of the range or, if the result of simulation is found smaller than the maximum of the target range, determines that it is out of the range.

When the result of simulation is found to be outside the target range of the configurable amplifier 110, the automatic setting unit 451 resets the gain of the amplifier (S307). For instance, when the minimum of the output signal of the configurable amplifier 110 is smaller than the minimum of the target range, it raises the gain of the amplifier or, when the maximum of the output signal of the configurable amplifier 110 is greater than the maximum of the target range, it lowers the gain of the amplifier. And simulation of the configurable amplifier 110 is executed again (S304), and adjustment of the DAC (S305) and determination of the target range (S306) are repeated.

When the result of simulation is within the target range of the configurable amplifier 110, it means that the gain and offset have been appropriately set for the automatic setting unit 451, and accordingly the processing of automatic setting is ended. The gain the configurable amplifier 110 and setting information on the DAC then are stored into the parameter storage unit 427.

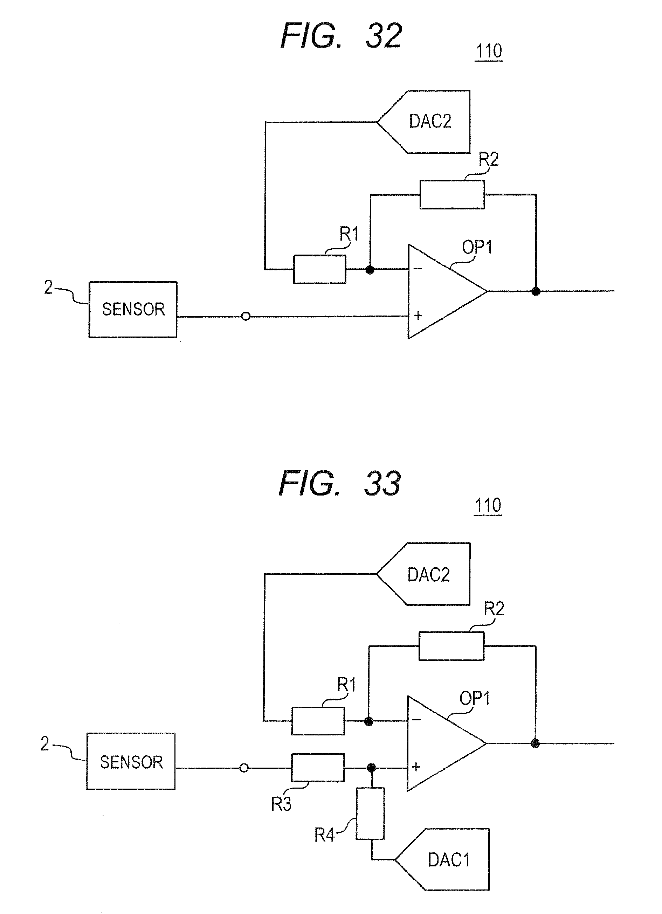

Specific examples of automatic setting will now be described with reference to Fig. 32 and Fig. 33. Fig. 32 shows a case in which the non-inverting amplifier is configured by using a single DAC in the configurable amplifier 110, which is a similar circuit configuration to what is shown in Fig. 13. Thus, in the configurable amplifier 110 of Fig. 32, a DAC2 is coupled to the inverting input terminal of an operational amplifier OP1 via a resistor R1, the output terminal and the inverting input terminal of the operational amplifier OP1 are feedback-coupled via a resistor R2, and the sensor 2 is coupled to the non-inverting input terminal of the operational amplifier OP1.

When the configurable amplifier 110 of Fig. 32 is to be automatically set, first the output voltage of the DAC2 is set to the median of the output voltage (Vin±x) (S302), and the gain of the operational amplifier OP1 is set as desired (S303).

Then, while simulating the actions the operational amplifier OP1, the output voltage of the DAC2 is adjusted (S304 and S305). The output voltage of the DAC2 is so adjusted the output voltage of the operational amplifier OP1 takes on the median of Vcc (Vcc/2).

Then, it is determined whether or not the target range of the configurable amplifier 110 is, for instance, Vcc/2±0.8V to Vcc/2±1V and the output voltage of the operational amplifier OP1 is within the target range (S306). If the output voltage of the operational amplifier OP1 is within the target range, the processing for automatic setting is ended or, if it is outside the target range, gain resetting (S307) and DAC adjustment (S305) of the operational amplifier OP1 are repeated until the output voltage comes within the target range.

Fig. 33 shows a case in which a differential amplifier is configured by using two DAC units in the configurable amplifier 110, which is a circuit configuration similar to what is shown in Fig. 110. Thus, in the configurable amplifier 110 of Fig. 33, the DAC2 is coupled to the inverting input terminal of the operational amplifier OP1 via the resistor R1, the output terminal and the inverting input terminal of the operational amplifier OP1 are feedback-coupled via the resistor R2, the sensor 2 is coupled to the non-inverting input terminal of the operational amplifier OP1 via a resistor R3 and the DAC1 coupled to the same via a resistor R4.

When the configurable amplifier 110 of Fig. 33 is to be automatically set, first the output voltage of the DAC1 is set to the median of VCC (Vcc/2 = 2.5 V), and the DAC2 is set to the median of the output voltage (Vin±x) the sensor (S302). And the gain of the operational amplifier OP1 is set as desired (S303).

Next, the output voltage of the DAC1 is adjusted while simulating the actions of the operational amplifier OP1 (S304 and S305). The output voltage of the DAC1 is so adjusted that the output voltage of the operational amplifier OP1 takes on the median of Vcc (Vcc/2).

Next, it is determined whether or not the target range of the configurable amplifier 110 is, for instance, Vcc/2±0.8 V to Vcc/2±1 V and the output voltage of the operational amplifier OP1 is within the target range (S306). If the output voltage of the operational amplifier OP1 is within the target range, the processing for automatic setting is ended or, if it is outside the target range, gain resetting (S307) and DAC adjustment (S305) of the operational amplifier OP1 are repeated until the output voltage comes within the target range.

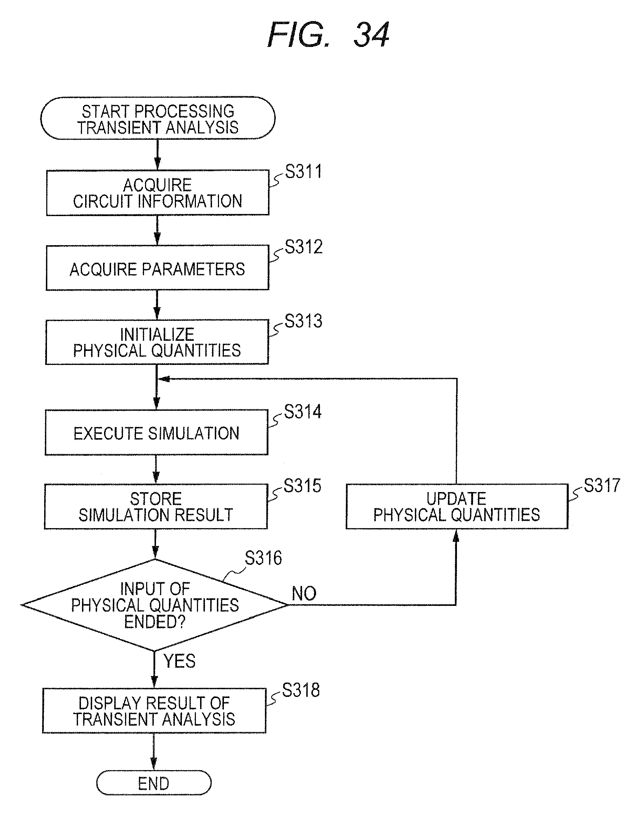

Fig. 34 charts transient analysis processing in this exemplary embodiment, and corresponds to the processing at S207 in Fig. 30. When the user clicks the transient analysis button, for instance, on the simulation screen, the transient analysis processing is started.

First, the transient analyzer 452 acquires circuit information on the circuit to be simulated (S311). The transient analyzer 452 references the circuit information storage unit 426, and acquires information on the circuit configuration and coupling relationships of the sensor and bias circuit, and the semiconductor device 1 (AFE unit 100).

Then, the transient analyzer 452 acquires parameters needed for the simulation (S312). The transient analyzer 452 references the parameter storage unit 427, and acquires the input pattern of the physical quantity to be inputted to the sensor and parameters of the circuit to be simulated.

Then, the transient analyzer 452 initializes the physical quantity to be inputted to the sensor (S313). The transient analyzer 452 sets the physical quantity to be inputted to the sensor first according to the input pattern of the physical quantity inputted to the sensor. As physical quantities are inputted in the order of a time series, time information is also initialized.

Then, the transient analyzer 452 executes simulation of the semiconductor device 1 (AFE unit 100) (S314). The physical quantity converter 450 calculates the output signal of the sensor matching the inputted physical quantity, and the transient analyzer 452 simulates the actions of the semiconductor device 1 with the output signal of this sensor and the amplifier gain, among other factors, as the conditions of simulation.

Then, the transient analyzer 452 stores the result of simulation (S315). The transient analyzer 452 stores, as the result of simulation, the output signals of the circuits of the semiconductor device 1, associated with the current time information, into the result information storage unit 428.

Then, the transient analyzer 452 determines whether or not the input pattern of physical quantities has ended (S316). The transient analyzer 452 compares the current time information and the latest time the input pattern of physical quantities will end, and determines whether or not the inputting of physical quantities has ended.

If the input pattern of physical quantities has not ended, the transient analyzer 452 updates the physical quantity to be inputted (S317). The transient analyzer 452 advances the time information to the next point of time, and sets from the input pattern the physical quantity that matches the time. With the updated physical quantity, simulation is executed (S314) and the result is stored (S315), and these steps are repeated until the input pattern of physical quantities ends.

If the input pattern of physical quantities has ended, the transient analyzer 452 displays the result of simulation (S318), and ends the transient analysis processing. The transient analyzer 452 references the result information storage unit 428, and displays on the simulation screen the waveforms of signals plotted by arranging the stored result of simulation in the order of a time series.

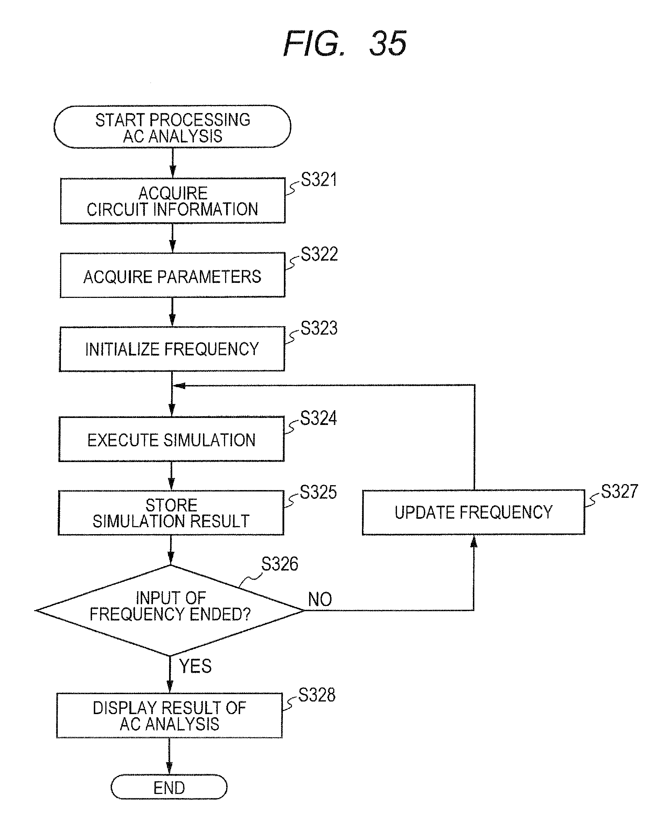

Fig. 35 charts AC analysis processing in this exemplary embodiment, and corresponds to the processing at S208 in Fig. 30. When the user clicks the AC analysis button, for instance, on the simulation screen, the AC analysis processing is started.

First, the AC analyzer 453 acquires circuit information on the circuit to be simulated (S321). The AC analyzer 453 references the circuit information storage unit 426, and acquires the circuit configuration and coupling relationships of the sensor and bias circuit, and the semiconductor device 1 (AFE unit 100).

Then, the AC analyzer 453 acquires parameters needed for the simulation (S322). The AC analyzer 453 references the parameter storage unit 427, and acquires the input pattern of the physical quantity to be inputted to the sensor and parameters of the circuit to be simulated.

Then, the AC analyzer 453 sets the value of the physical quantity to be inputted to the sensor. Next, it initializes the frequency to undergo AC analysis (S323) The AC analyzer 453 sets the minimum or the maximum as the initial value of the frequency to undergo AC analysis.

Then, the AC analyzer 453 executes simulation of the semiconductor device 1 (AFE unit 100) (S324). The physical quantity converter 450 calculates the output signal of the sensor matching the inputted physical quantity, and the AC analyzer 453 simulates the actions of the semiconductor device 1 with the output signal of this sensor and the amplifier gain, among other factors, as the conditions of simulation.

Then, the AC analyzer 453 stores the result of simulation (S325). The AC analyzer 453 stores as the result of simulation the output signal of each circuit of the semiconductor device 1, matched with the current frequency information, into the result information storage unit 428.

Then, the AC analyzer 453 determines whether or not the frequency of AC analysis has ended (S326). The AC analyzer 453 compares frequency information on the current AC analysis with the minimum or the maximum of frequency information on AC analysis, and determines whether or not the inputting of the frequency of AC analysis has ended.

If the frequency of AC analysis has not ended, the AC analyzer 453 updates the frequency (S327). The AC analyzer 453 updates the frequency information to the next frequency, executes simulation (S324) and stores the result (S325) at the updated frequency, and repeats these steps until the inputting of the frequency ends.

If the frequency of AC analysis has ended, the AC analyzer 453 displays the result of simulation (S328) and ends the processing of AC analysis. The AC analyzer 453 references the result information storage unit 428, and displays on the simulation screen the waveforms of signals plotted by arranging the stored result of simulation in the order of frequencies.

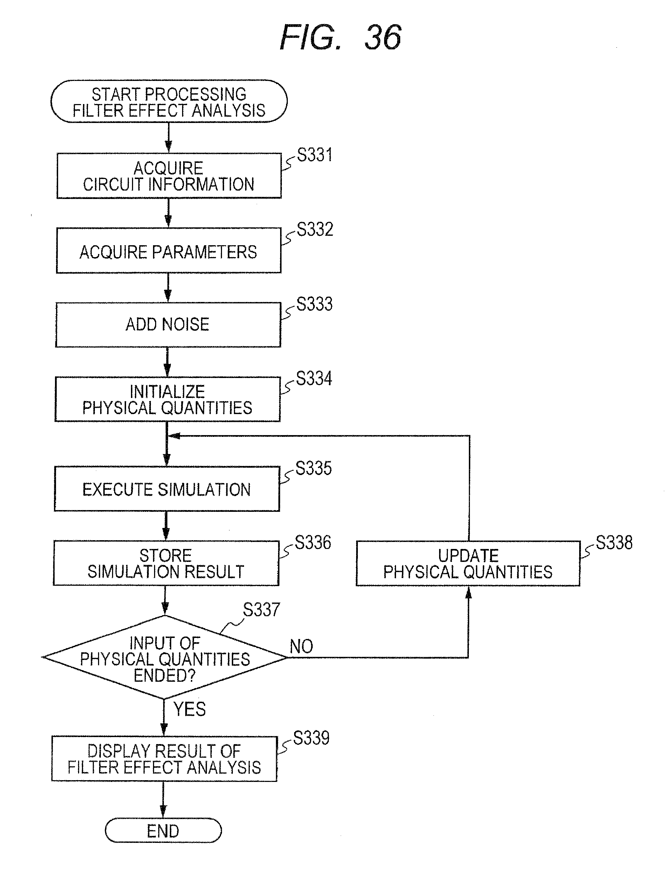

Fig. 36 charts filtering effect analysis processing in this exemplary embodiment, and corresponds to the processing at S209 in Fig. 30. When the user clicks the filtering effect button, for instance, on the simulation screen, the filtering effect analysis processing is started.

First, the filter effect analyzer 454 acquires circuit information on the circuit to be simulated (S331). The filter effect analyzer 454 references the circuit information storage unit 426, and acquires the circuit configuration and coupling relationships of the sensor and bias circuit, and the semiconductor device 1 (AFE unit 100).

Then, the filter effect analyzer 454 acquires parameters needed for the simulation (S332). The filter effect analyzer 454 references the parameter storage unit 427, and acquires the input pattern of the physical quantity to be inputted to the sensor and parameters of the circuit to be simulated.

Then, the filter effect analyzer 454 adds noise to the input pattern of the physical quantity (S333) The filter effect analyzer 454, in order to simulate the filtering effect, generates a noise pattern, and adds noise to the input pattern of the physical quantity to be inputted to the sensor.

Then, the filter effect analyzer 454 initializes the physical quantity to be inputted to the sensor (S334) The filter effect analyzer 454 sets the physical quantity to be inputted first according to the noise-added input pattern of the physical quantity. As physical quantities are inputted in the order of a time series, time information is also initialized.

Then, the filter effect analyzer 454 executes simulation of the semiconductor device 1 (AFE unit 100) (S335). The physical quantity converter 450 calculates the output signal of the sensor matching the inputted physical quantity, and the filter effect analyzer 454 simulates the actions of the semiconductor device 1 with the output signal of this sensor and the amplifier gain, among other factors, as the conditions of simulation.

Then, the filter effect analyzer 454 stores the result of simulation (S336). The filter effect analyzer 454 stores as the result of simulation the output signal of each circuit of the semiconductor device 1, matched with the current time information, into the result information storage unit 428.

Then, the filter effect analyzer 454 determines whether or not the input pattern of the physical quantity has ended (S337) The filter effect analyzer 454 compares the current time information and the latest time the noise-added input pattern of physical quantities will end, and determines whether or not the inputting of physical quantities has ended.

If the input pattern of the physical quantity has not ended, the filter effect analyzer 454 updates the physical quantity (S338). The filter effect analyzer 454 advances the time information to the next point of time, and sets from the noise-added input pattern the physical quantity that matches the time. With the updated physical quantity, simulation is executed (S335) and the result is stored (S336), and these steps are repeated until the input pattern of physical quantities ends.

If the input pattern of the physical quantity has ended, the filter effect analyzer 454, the filter effect analyzer 454 displays the result of simulation (S339), and ends the processing of filter effect analysis. The filter effect analyzer 454 references the result information storage unit 428, and displays on the simulation screen the waveforms of signals plotted by arranging the stored result of simulation in the order of a time series.

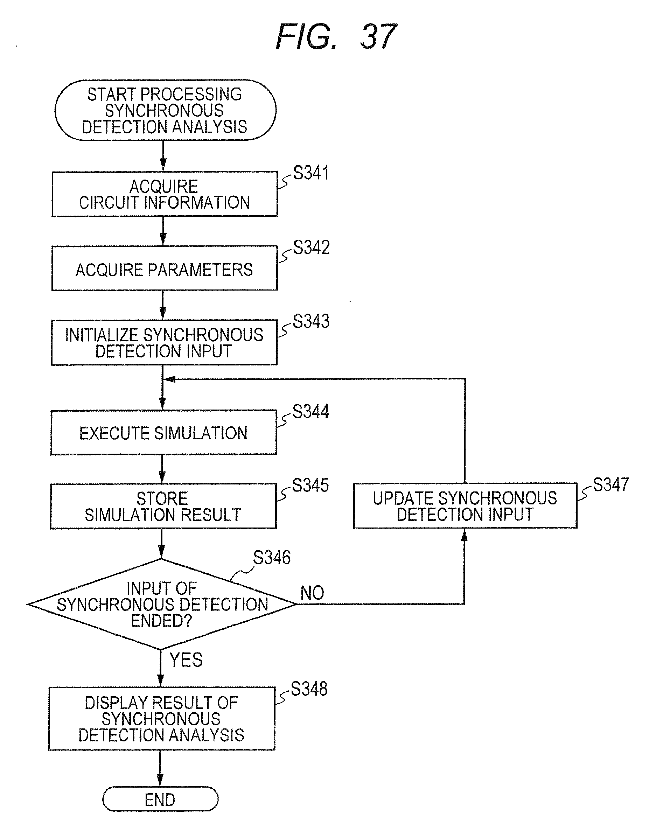

Fig. 37 charts synchronous detection analysis processing in this exemplary embodiment, and corresponds to the processing at S210 in Fig. 30. When the user clicks the synchronous detection button, for instance, on the simulation screen, the synchronous detection analysis processing is started.

First, the synchronous detection analyzer 455 acquires circuit information on the circuit to be simulated (S341). The synchronous detection analyzer 455 references the circuit information storage unit 426, and acquires the circuit configuration and coupling relationships of the sensor and bias circuit, and the semiconductor device 1 (AFE unit 100).

Then, the synchronous detection analyzer 455 acquires parameters needed for the simulation (S342). The synchronous detection analyzer 455 references the parameter storage unit 427, and acquires the input pattern of the physical quantity to be inputted to the sensor and parameters of the circuit to be simulated.

Then, the synchronous detection analyzer 455 initializes the synchronous detection pattern to be inputted to the sensor (S343). The synchronous detection analyzer 455 sets the physical quantity to be inputted first according to the input pattern of the physical quantity inputted to the sensor. As the synchronous detection pattern, the synchronous clock CLK_SYNCH to be inputted for synchronous detection is also initialized.

Then, the synchronous detection analyzer 455 executes simulation of the semiconductor device 1 (AFE unit 100) (S344). The synchronous detection analyzer 455 calculates the output signal of the sensor matching the inputted physical quantity, and the synchronous detection analyzer 455 simulates the actions of the semiconductor device 1 with the output signal of this sensor and the amplifier gain, among other factors, as the conditions of simulation.

Then, the synchronous detection analyzer 455 stores the result of simulation (S345). The synchronous detection analyzer 455 stores as the result of simulation the output signal of each circuit of the semiconductor device 1, matched with the current time information, into the result information storage unit 428.

Then, the synchronous detection analyzer 455 determines whether or not the input pattern of the physical quantity or the synchronous detection pattern has ended (S346). The synchronous detection analyzer 455 compares the current time information and the latest time the input pattern of physical quantities or the synchronous detection pattern will end, and determines whether or not the inputting of physical quantities or the synchronous detection has ended.

If the inputting of the physical quantity or the synchronous detection has not ended, the synchronous detection analyzer 455 updates the inputs of the physical quantity and synchronous detection (S347). The synchronous detection analyzer 455 advances the time information to the next point of time, sets from the input pattern the physical quantity that matches the time, and sets from the synchronous detection pattern a synchronous clock. With the updated physical quantity and the synchronous clock, simulation is executed (S344) and the result is stored (S345), and these steps are repeated until the input pattern of physical quantities or the synchronous detection ends.

If the inputting of the physical quantity or the synchronous detection has ended, the synchronous detection analyzer 455 updates the inputs of the physical quantity and synchronous detection (S348). The synchronous detection analyzer 455 displays the result of simulation (S348), and ends the processing of synchronous detection analysis. The synchronous detection analyzer 455 references the result information storage unit 428, and displays on the simulation screen the waveforms of signals plotted by arranging the stored result of simulation in the order of a time series.

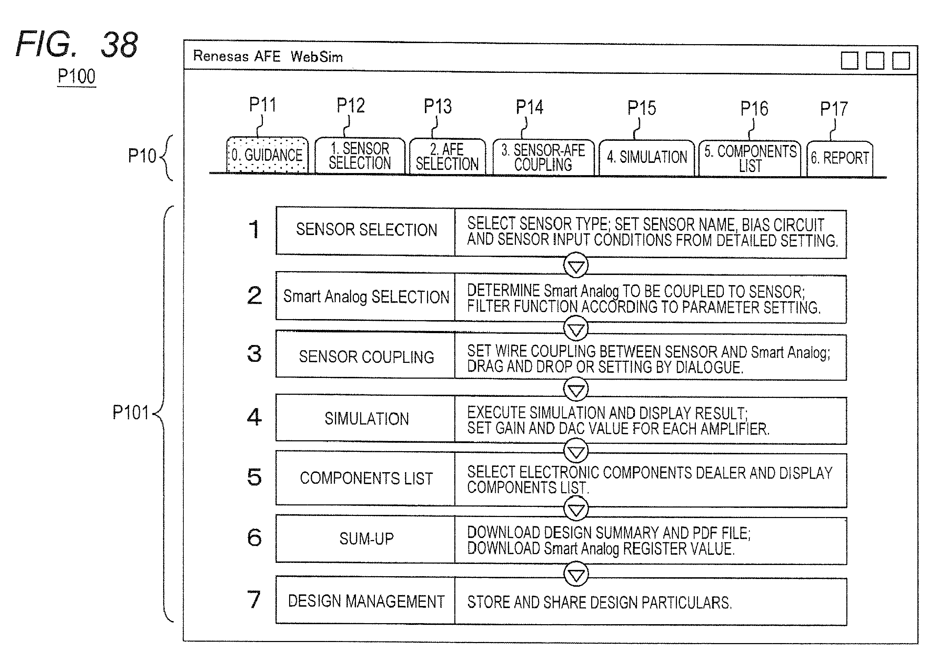

Next, with reference to Fig. 38 through Fig. 64, a display example of screens (web pages) displayed by the web simulator 4 on the user terminal 3 at the steps of processing charted in Fig. 29 through Fig. 37. As described above, these screens are displayed as user interfaces for the processing of simulation charted in Fig. 29 through Fig. 37, and the display of each screen is realized by the transmission of web page information for screen display to the user terminal 3 mainly by the web page processing unit 411 or the like of the web simulator 4.

Fig. 38 shows a display example of guidance screen displayed at S101 of Fig. 29. As shown in Fig. 38, a web simulator screen P100 is displayed over the whole window of the web browser 300, and individual screens for processing required for simulation are displayed within the web simulator screen P100.

The web simulator screen P100 has a tab display area P10 displayed in its upper part in common to every screen. In the tab display area P10, tabs P11 through P17 for screen selection for display are shown. As the tab display area P10 is displayed in common to every screen, it is possible to switch over from any screen to any other screen desired by the use.

For instance, by clicking a "Guidance" tab P11, a guidance screen is displayed; by clicking a "Sensor selection" tab P12, a sensor selection state screen is displayed; by clicking an "AFE selection" tab P13, an AFE selection screen is displayed; by clicking a "Sensor-AFE coupling" tab P14, a sensor-AFE coupling screen is displayed; by clicking a "Simulation" tab P15, a simulation screen is displayed; by clicking a "Components list" tab P16, a components list display screen is displayed; and by clicking a "Report" tab P17, a report screen is displayed.

As shown in Fig. 38, at the time of actuating the web simulator of when the "Guidance" tab P11 is selected, the guidance screen P101 is displayed in substantially the central part of the web simulator screen P100.

The guidance screen P101 shows in a flow chart style the process flow of web simulator use so that the user can know at a glance how the web simulator is to be used. For instance, a flow chart displaying guidance corresponds to the actions of the web simulator described with reference to the web simulator, and it also matches the screens displayed with the tabs P11 through P17.

At each step of the flow chart shown on the guidance screen P101, icons (not shown) and text outlines are displayed to help the user understand the particulars. For instance at "Sensor selection" of step 1, the sensor type is selected, and from the detailed setting the sensor name, bias circuit and sensor input conditions are set. At "Smart Analog selection" of step 2, the Smart Analog (semiconductor device 1) to be coupled to the sensor is determined to enable the parameter-set filtering function enables the desired semiconductor device 1 to be selected. At "Sensor coupling" of step 3, wire coupling between the sensor and the Smart Analog (semiconductor device 1) is set to enable a coupling relationship to be set by drag and drop or dialog. At "Simulation" of step 4, the execution and result of simulation are displayed to enable the gain and DAC value for each amplifier to be set. At "Components list" of step 5, the choice of electronic components dealer and the components list are displayed. At "Report" of step 6, a design summary and PDF file can be downloaded, and the register value of the Smart Analog can also be downloaded. At "Design management" of step 7, the design particulars of the Smart Analog (semiconductor device 1) can be held and shared.

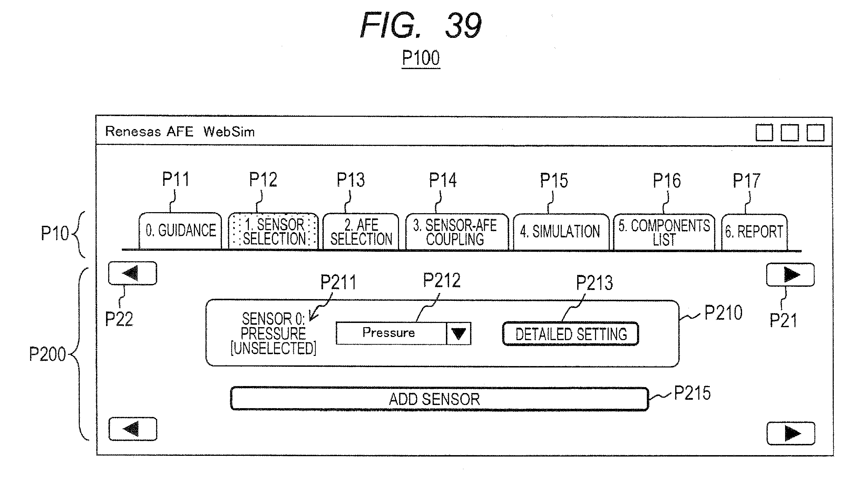

Fig. 39 shows an example of displaying the sensor selection screen shown at S102 of Fig. 29. As shown in Fig. 39, when the "Sensor selection" tab P12 is selected, the sensor selection screen P200 is displayed in substantially the central part of the web simulator screen P100.

As is common among Fig. 39 and other screens, in the upper and lower parts of the right side end of the web simulator screen P100 two forward buttons P21 are displayed, in the upper and lower parts of the left side end two backward buttons P22 are displayed. When one of the forward buttons P21 is clicked, the next operational screen is displayed, and when one of the backward buttons P22 is clicked, the preceding operational screen is displayed. For instance, when the sensor selection screen P200 is displayed, clicking a forward button P21 would make the AFE selection screen appear, and clicking a backward button P22 would make the guidance screen appear.

As shown in Fig. 39, the current state of sensor selection is displayed on the sensor selection screen P200. On the sensor selection screen P200, a sensor selection frame P210 indicating the state of sensor selection on a sensor-by-sensor basis is displayed. In the sensor name display area P211 of the sensor selection frame P210, the type and name of the currently selected sensor are displayed. Since no sensor is selected yet in Fig. 39, the sensor name is indicated as being "unselected".

A sensor type pull-down menu P212 of the sensor selection frame P210 shows a plurality of sensor types in a pull-down list, enabling the user to choose the desired sensor type from it. A "Detailed setting" button P213 is intended for displaying a sensor details screen for setting the details of sensors. On the sensor details screen, details of the sensor of the type selected from the pull-down menu P212 are set.

An "Add sensor" button P215 is displayed underneath the sensor selection frame P210. The "Add sensor" button P215 is intended for selection of an additional sensor or sensors. Every time the "Add sensor" button P215 is clicked, an entry in the sensor selection frame P210 is added.

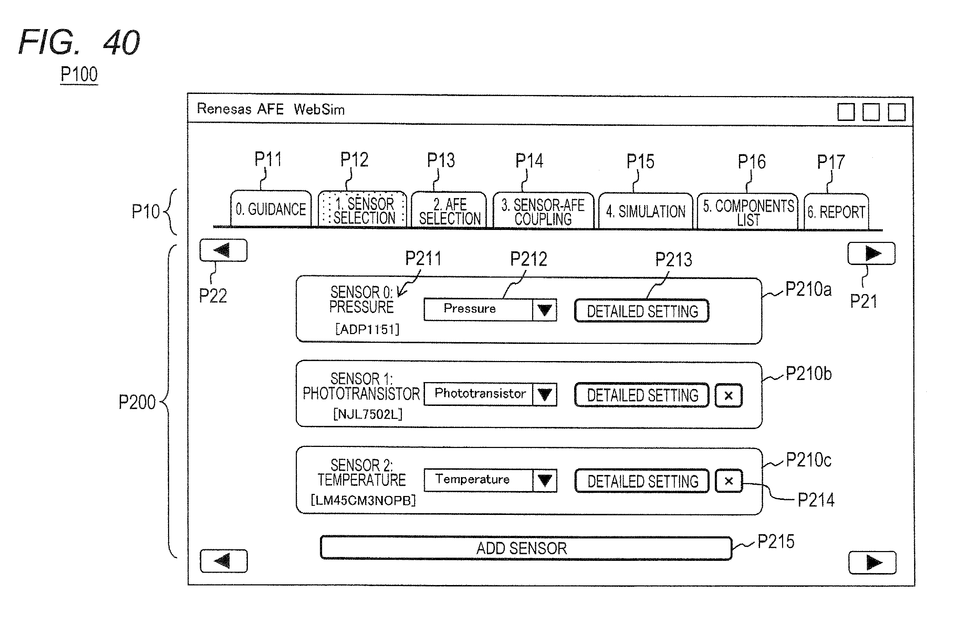

Fig. 40 shows a case in which three sensors are selected on the sensor selection screen P200, and three sensor selection frames P210a through P210c are displayed. The sensor selection frame P210a is a sensor selection frame for sensor 0, and in this frame a pressure sensor of "ADP1151" in Part # is selected. The sensor selection frame P210b is a sensor selection frame for sensor 1, and in this frame a phototransistor of "NJL7502L" in Part # is selected. The sensor selection frame P210c is a sensor selection frame for sensor 2, and in this frame a temperature sensor of "LM45CM3NOPB" in Part # is selected.

On the sensor selection frames P210b and P210c, a delete button P214 for cancelling a sensor selection is displayed. Clicking the delete button P214 would cancel the pertinent sensor selection, resulting deletion of the sensor selection frame P210 from the display.

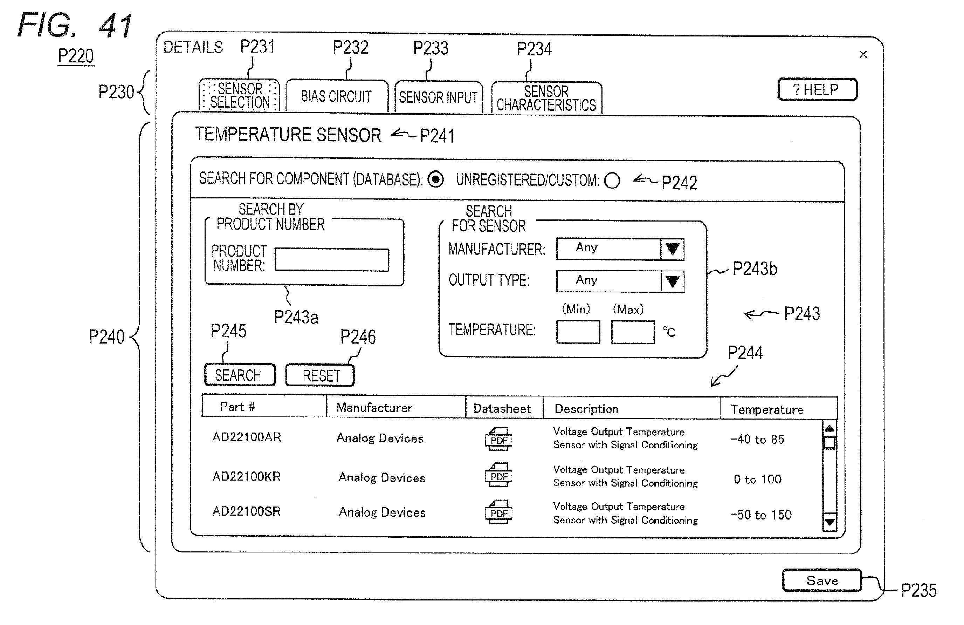

Fig. 41 shows a display example of the sensor details screen P220 and a sensor details selection screen P420 displayed for setting the details of sensors from the sensor selection screen P200 of Fig. 39. In this example, since sensors are selected on the two screens of Fig. 39 and Fig. 41, both screens can as well be considered the sensor selection screens.

As shown in Fig. 41, the sensor details screen P220 is a pop-up screen independent from the web simulator screen P100. The sensor details screen P220 is popped up when the "Detailed setting" button P213 is clicked on the sensor selection screen P200 of Fig. 39.

The sensor details screen P220 has a tab display area P230 displayed in the upper part in common to every screen. On the tab display area P230, tabs P231 through P234 for selection of different screens to be displayed are shown. For instance, by clicking a "Sensor selection" tab P231, a sensor details selection screen is displayed; by clicking a "Bias circuit" tab P232, the bias circuit selection screen is displayed; by clicking a "Sensor input" tab P233, the physical quantity input screen is displayed; and by clicking a "Sensor characteristics" tab P234, a sensor characteristics setting screen is displayed.

In the right bottom corner of the sensor details screen P220, a "Save" button tab P235 is displayed in common to every screen. By clicking the "Save" button tab P235, particulars set on each of the sensor details screen P220 is saved into the web simulator 4. Thus, circuit information and parameters are stored in the circuit information storage unit 426 and the parameter storage unit 427.

As shown in Fig. 41, when the "Detailed setting" button P213 is clicked on the sensor selection screen P200 or when the "Sensor selection" P231 is selected, the sensor details selection screen P420 is displayed within the sensor details screen P220.

In the sensor details selection screen P240, the sensor type selected from the sensor type pull-down menu P212 on the sensor selection screen P200 is displayed in a sensor type display area P241 in the upper part. In Fig. 41, the temperature sensor is indicated as the selected sensor type.

Underneath the sensor type display area P241, a sensor selection method radio button P242 is displayed. On the sensor selection method radio button P242, either "Search for component" which enables searching of sensors registered in the sensor database 421 or "Unregistered/ custom" which customizes (sets to any desired characteristics) a sensor unregistered in the sensor database 421 is selected.

If "Search for component" is selected on the sensor selection method radio button P242, a sensor narrowing-down conditions P243 and a sensor list P244 are displayed underneath the sensor selection method radio button P242. "Search by Part #" area P243a and "Search for sensor" area P243b are indicated as the narrowing-down conditions P243.

In the "Search by Part #" area P243a, the Part # of the sensor to be searched for is inputted to a "Part #" input box. In the "Search for sensor" area P243b, the narrowing-down conditions matching the sensor type are displayed. Since the sensor type is temperature sensor in Fig. 41, a "Manufacturer" pull-down menu, an "Output type" pull-down menu and a "Temperature" input box are displayed.

In the "Manufacturer" pull-down menu, the manufacturer's name can be specified to search for a sensor of a specific manufacturer or "Any" can be specified to enable the search to cover every manufacturer. In the "Output type" pull-down menu, the current output type or the voltage output type can be specified to search for a sensor of a specific output type or "Any" can be specified to enable the search to cover every output type. In the "Temperature" input box, the minimum and maximum of the temperature detected by the temperature sensor are set to search for a sensor by the characteristics of the temperature sensor.

Between the narrowing-down conditions P243 and the sensor list P244, a "Search" button P245 and a "Reset" button P246 are displayed. By clicking the "Search" button P245, the sensor database is searched under the conditions set by the narrowing-down conditions P243, and the result of search is displayed in the sensor list P244. By clicking the "Reset" button P246, the narrowing-down conditions (search conditions) set by the narrowing-down conditions P243 are reset to return to an initial state in which no screen display is set.

In the sensor list P244, a list of sensors meeting the conditions set by the narrowing-down conditions P243 is displayed. If Part # is set in the "Search by Part #" area P243a, sensors whose type is temperature sensor and bearing the set Part # are displayed out of the sensor database 421. If the manufacturer, output type and temperature are set in the "Search for sensor" area P243b, sensors whose type is temperature sensor and whose manufacturer, output type and temperature meet the respectively set conditions are displayed.

In the sensor list P244, information on each sensor is displayed in a plurality of columns according to the sensor type. As the sensor type in Fig. 41 is temperature sensor, Part #, Manufacturer, Datasheet, Description and Temperature characteristics are stated with respect to each sensor. In the Datasheet column, PDE icons are displayed, and by clicking a PDE icon, a PDE file of the datasheet is displayed. In the Description column, the output type, such as the voltage output type or the current output type, is indicated and in the Temperature column, the minimum and maximum of the detected temperature are stated.

By displaying the sensor list P244 with the sensor type and the narrowing-down conditions specified, the desired sensor can be selected by simple operation. The user selects the sensor to be used by clicking the corresponding entry in the sensor list P244. As at S102 in Fig. 29, when the user selects a sensor out of the sensor list P244, circuit information on the sensor is stored into the circuit information storage unit 426.

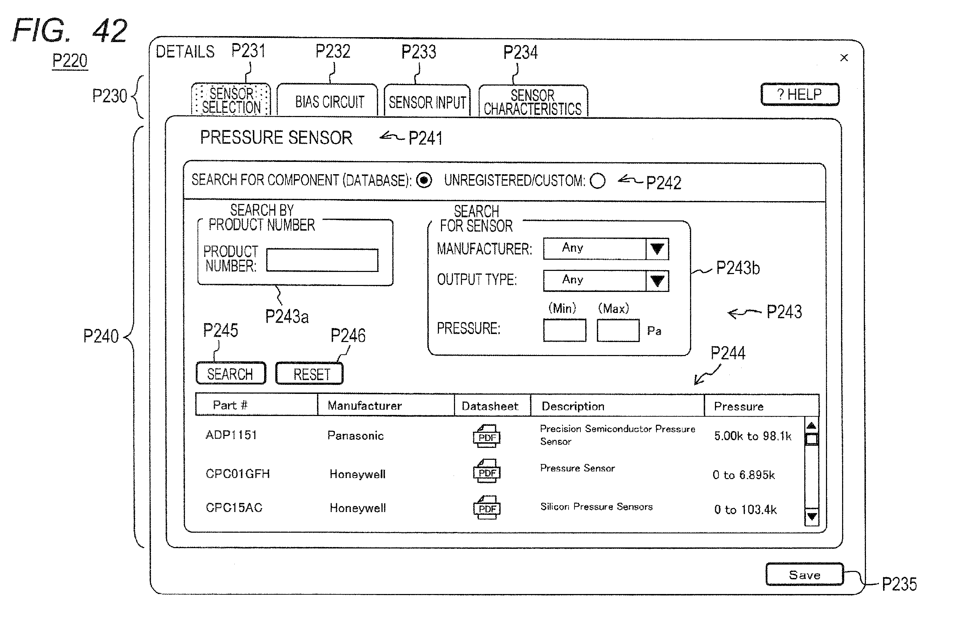

Fig. 42 shows a display example of the sensor details selection screen P240 when a pressure sensor is selected as the sensor type. The pressure sensor is displayed in the sensor type display area P241, and the narrowing-down conditions (search conditions) matching the pressure sensor are indicated in the "Search for sensor" area P243b. In Fig. 42, the "Manufacturer" pull-down menu, the "Output type" pull-down menu and a "Pressure" input box are displayed. In the "Pressure" input box, the minimum and maximum of the pressure detectable by the pressure sensor are set as the sensor is to be searched for by the characteristics of pressure sensors.

In the sensor list P244, Part #, Manufacturer, Datasheet, Description and pressure characteristics are stated with respect to each sensor. In the Description column, the sensor type, such as a precision sensor or a silicon sensor, are indicated, and in the pressure characteristics column, the minimum and maximum of the detectable pressure detectable are stated.

Regarding other sensors, too, as in the same way as those shown in Fig. 41 and Fig. 42, displaying and searching according to the sensor type are accomplished on the sensor details selection screen P240. For instance, if the sensor type is phototransistor, the entry columns of the narrowing-down conditions (search conditions) and the sensor list will cover the dark current ID, peak sensitivity wavelength λp, detection range and the like, and searching according to these characteristics is made possible.

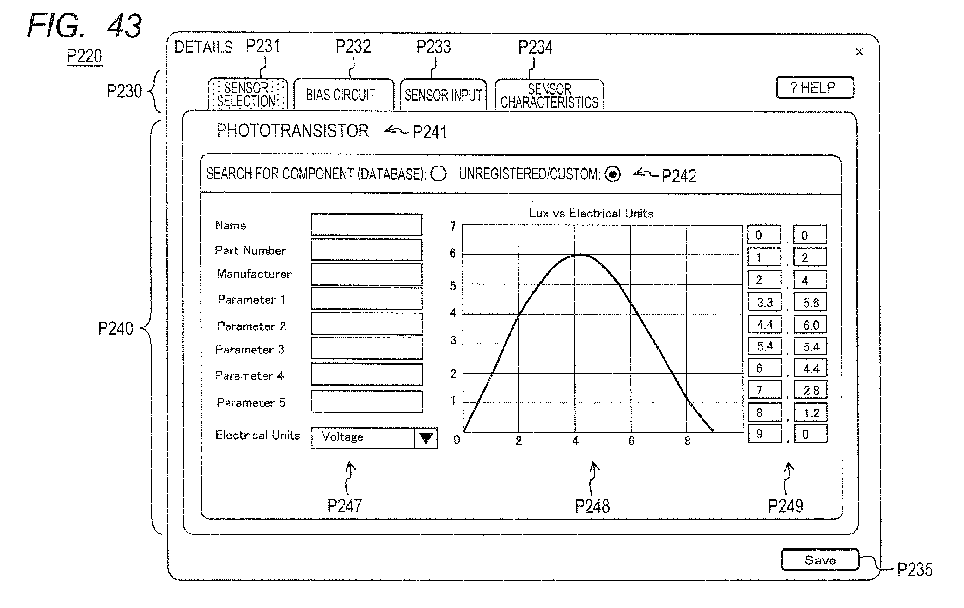

Fig. 43 shows a display example of a case in which "Unregistered/custom" is selected with the sensor selection method radio button P242 on the sensor details selection screen P240. In this case, a parameter input area 247, a characteristics graph P248 and a characteristics plot input area P249 are displayed underneath the sensor selection method radio button P242.

The parameter input area P247, the characteristics graph P248 and the characteristics plot input area P249 are so displayed as to permit setting of characteristics according to the selected sensor type. In the parameter input area P247, the registered name, Part # and various parameters are set. The characteristics of the sensor are set in the characteristics graph P248 and the characteristics plot input area P249. In the characteristics graph P248, the characteristics are set by clicking or dragging the plots in the graph. In the characteristics plot input area P249, the characteristics are set by numerically inputting the plots in the graph. Incidentally, the number of plots in the graph can be increased as desired by using a plot adding button or the like.

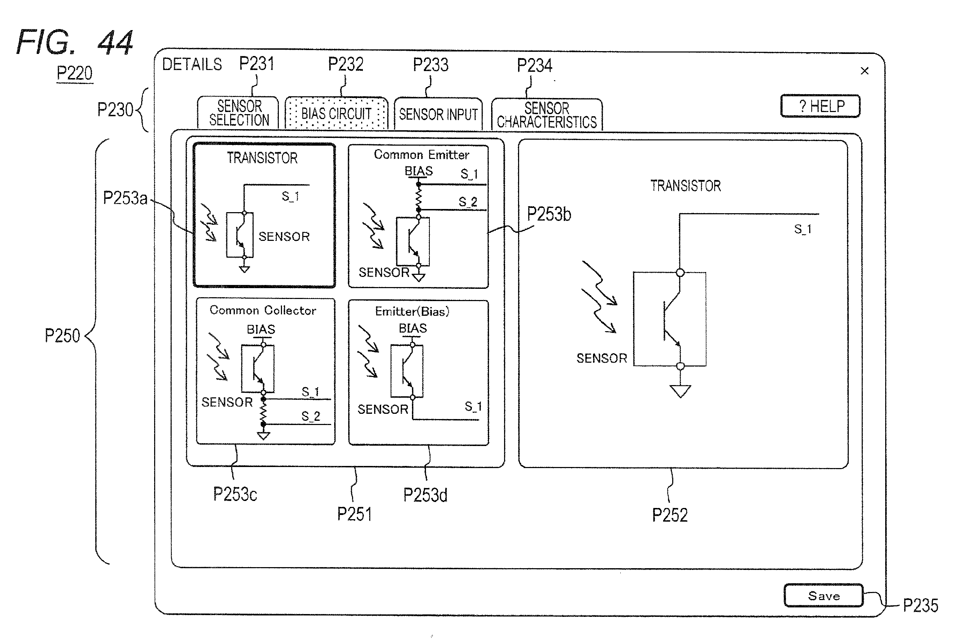

Fig. 44 shows a display example of the bias circuit selection screen displayed at S103 of Fig. 29. As shown in Fig. 44, when the "Bias circuit" tab P232 is selected on the sensor details screen P220 of Fig. 41, a bias circuit suitable for the selected sensor is displayed as described regarding s103. By displaying a bias circuit suitable for the sensor, the most suitable bias circuit can be selected simple operation.

On the bias circuit selection screen P250, a circuit list P251 and a selection circuit P252 are displayed. In the circuit list P251, the circuit image of every bias circuit usable for the sensor is shown, and in the selection circuit P252, the circuit image of the bias circuit selected by the user out of the circuit list P251 is shown.

Fig. 44 shows a display example of the bias circuit selection screen displayed when a phototransistor is selected for the sensor, and in the circuit list P251 bias circuits P253a through P253d are shown as bias circuits suitable for phototransistors. The user has selected the bias circuit P253a, and on the selection circuit P252 the same circuit image as that of the bias circuit P253a is displayed,. As described with reference to S103 of Fig. 29, circuit information on the selected bias circuit is stored into the circuit information storage unit 426.

By displaying on the bias circuit selection screen P250 a plurality of bias circuits matching the sensor, the most suitable bias circuit for the purposes and environment of the use of the sensor can be selected. The characteristics of the bias circuits selectable in the context of Fig. 44 will be described by way of example. The bias circuits P253b and P253c are bias circuits suitable for coupling a current output type sensor converted into a voltage output type, while the bias circuits P253a and P253d suitable for coupling a current output type sensor as it is with the current output type unchanged.

The bias circuits P253c is a circuit that supplies bias to the current output side sensor in a common collector mode. In the bias circuit P253c, bias power is supplied to the collector of the phototransistor, and the emitter is grounded via a resistor. Both ends of the resistor coupled to the emitter are sensor output terminals, which are coupled to the input terminal of the semiconductor device 1. Since the bias circuit P253c is supplied with bias from an external power source and its illuminance is taken out as a voltage, it is preferable for the configuration of the configurable amplifier 110 to use a non-inverting amplifier. Therefore, when the bias circuit P253c is selected, the configuration of the configurable amplifier 110 is automatically set to a non-inverting amplifier type, and the bias circuit P253c and the non-inverting amplifier are set to be coupled to each other. As the bias circuit P253c outputs signals in the voltage decreasing direction when the illuminance is weak, this configuration is most suitable for low-illuminance applications.

The bias circuit P253b the current output side sensor in a common emitter mode. In the bias circuit P253b, the emitter of the phototransistor is grounded, and the collector is coupled to the bias power source via a resistor. Both ends of the resistor coupled to the collector are sensor output terminals, which are coupled to the input terminal of the semiconductor device 1. Since the bias circuit P253b is supplied with bias from an external power source and its illuminance is taken out as a voltage, it is preferable for the configuration of the configurable amplifier 110 to use a non-inverting amplifier. Therefore, when the bias circuit P253b is selected, the configuration of the configurable amplifier 110 is automatically set to a non-inverting amplifier type, and the bias circuit P253b and the non-inverting amplifier are set to be coupled to each other. As the bias circuit P253b outputs signals in the voltage decreasing direction when the illuminance is powerful, this configuration is most suitable for high-illuminance applications.

The bias circuit P253a is a circuit that supplies bias to the current output side sensor via the collector. In the bias circuit P253a, the collector of the phototransistor is the sensor output terminal, coupled to the input terminal of the semiconductor device 1, and the emitter is grounded. Since the bias circuit P253a is supplied with bias from no external source and its illuminance is taken out as a current, it is preferable that the configuration of the configurable amplifier 110 to be coupled to the sensor uses an IV amplifier. Therefore, when the bias circuit P253a is selected, the configuration of the configurable amplifier 110 is automatically set to an IV amplifier type, and the bias circuit P253a and the IV amplifier are set to be coupled to each other. As the output of the bias circuit P253a takes on a voltage substantially equal to the reference voltage of the operational amplifier when the illuminance is weak, and the voltage of the operational amplifier rises with an increase in illuminance. Accordingly, the bias circuit P253a is most suitable for low-illuminance applications.

The bias circuit P253d is a circuit that supplies bias to the current output side sensor via the emitter. In the bias circuit P253d, bias power is supplied to the collector of the phototransistor, and the emitter is the sensor output terminal, coupled to the input terminal of the semiconductor device 1. As the bias circuit P253d is supplied with bias from no external source and its illuminance is taken out as a current, it is preferable that the configuration of the configurable amplifier 110 to be coupled to the sensor uses an IV amplifier. Therefore, when the bias circuit P253d is selected, the configuration of the configurable amplifier 110 is automatically set to an IV amplifier type, and the bias circuit P253d and the IV amplifier are set to be coupled to each other. As the output of the bias circuit P253d takes on a voltage substantially equal to the reference voltage of the operational amplifier when the illuminance is weak, and the voltage of the operational amplifier falls with an increase in illuminance. Accordingly, the bias circuit P253d is most suitable for high- illuminance applications.

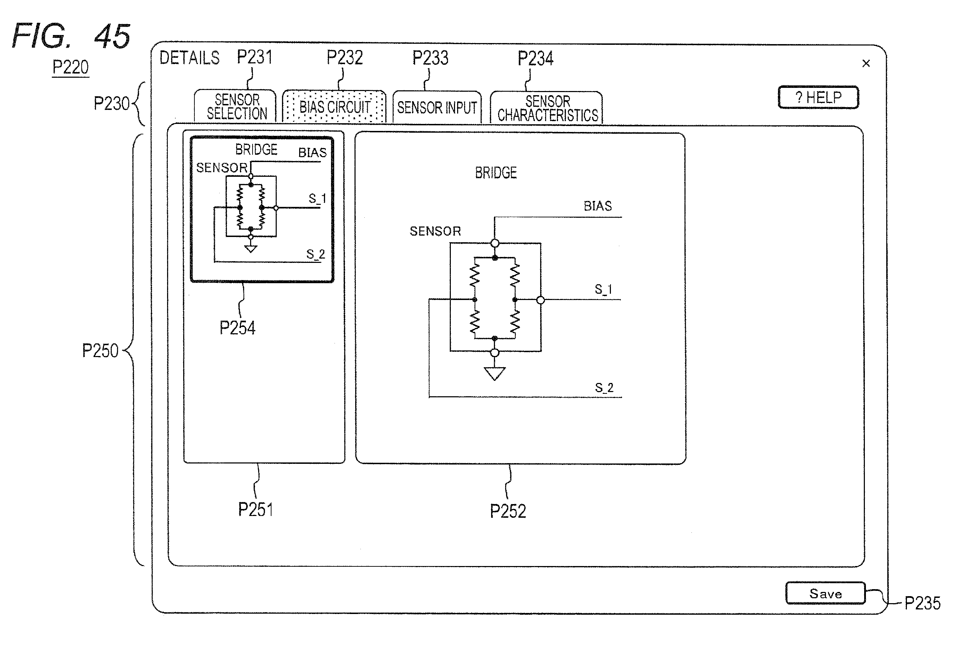

Fig. 45 shows another example of the bias circuit selection screen P250 illustrated in Fig. 44. Fig. 45 is a display example in which a Wheatstone bridge type pressure sensor is chosen as the sensor; as a bias circuit well matching a pressure sensor, one bias circuit 254 is shown in the circuit list P251. Since only one bias circuit 254 is cited in the circuit list P251, this bias circuit 254 represents the selection circuit P252 here.

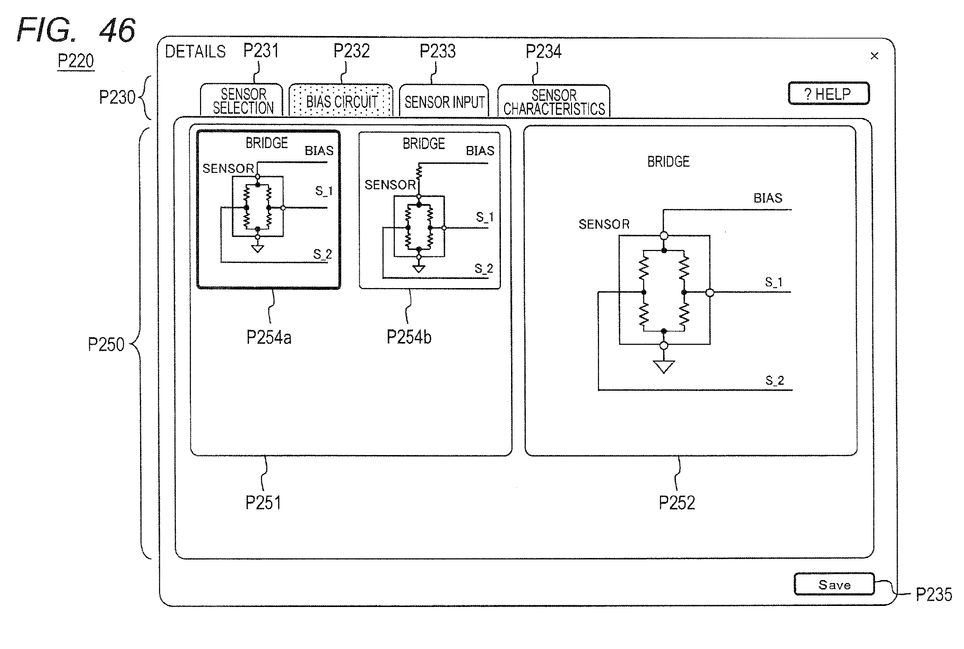

Also, as shown in Fig. 46, another bias circuit may be presented in addition to the bias circuit 254 of Fig. 45 as an alternative choice. In the example of Fig. 46, the bias circuits 254a and 254b are cited in the circuit list P251 as bias circuits for the Wheatstone bridge type pressure sensor on the bias circuit selection screen P250, and the selected bias circuit 254a is presented as the selection circuit P252.

The bias circuit 254a is a circuit that directly supplies bias power to voltage output type pressure sensors. In the bias circuit 254a, the Wheatstone bridge, which is a pressure sensor, is supplied with bias power at the upper end and grounded at the lower end, while its right and left ends serve as sensor output terminals, which are coupled to the input terminal of the semiconductor device 1. Since the bias circuit 254a is of a type that is supplied with bias from an external power source and whose pressure is taken out as a voltage, it is preferable that the configuration of the configurable amplifier 110 to be coupled to the sensor uses an instrumentation amplifier. Therefore, when the bias circuit P254a is selected, the configuration of the configurable amplifier 110 is automatically set to an instrumentation amplifier type, and the bias circuit P254a and the instrumentation amplifier are set to be coupled to each other.

The bias circuit 254b is a circuit that supplies bias power to a voltage output type pressure sensor via a resistor. In the bias circuit 254b, the Wheatstone bridge, which is a pressure sensor, is supplied with bias power at the upper end via the resistor and grounded at the lower end, while its right and left ends serve as sensor output terminals and are coupled to the input terminal of the semiconductor device 1. Since the bias circuit 254b is of a type that is supplied with bias from an external power source and whose pressure is taken out as a voltage, it is preferable that the configuration of the configurable amplifier 110 to be coupled to the sensor uses an instrumentation amplifier. Therefore, when the bias circuit P254b is selected, the configuration of the configurable amplifier 110 is automatically set to an instrumentation amplifier type, and the bias circuit P254b and the instrumentation amplifier are set to be coupled to each other.

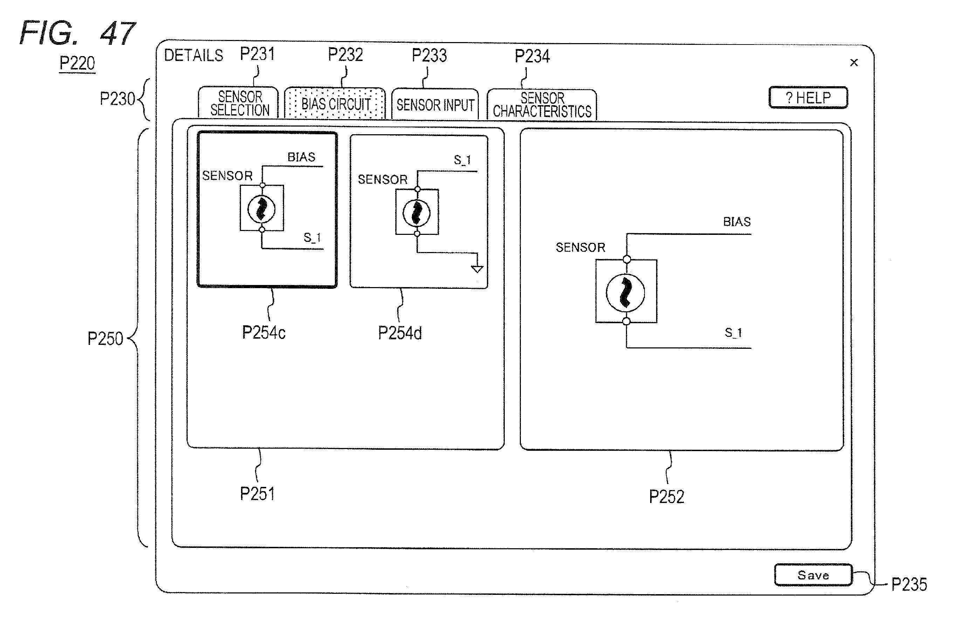

Fig. 47 shows another example of the bias circuit selection screen P250 illustrated in Fig. 44. Fig. 47 is a display example in which a current transducer type pressure sensor is chosen as the sensor; as bias circuits well matching a pressure sensor, the bias circuits 254c and 254d are shown in the circuit list P251. The selected bias circuit 254c is cited in the selection circuit P252 here.

The bias circuit 254c is a circuit takes out a current from a current output type pressure sensor as a detection signal. In the bias circuit 254c, one end of the pressure sensor is supplied with bias power and the other end serves as a sensor output terminal coupled to the input terminal the semiconductor device 1. Since the bias circuit 254c is supplied with bias from no external source and its output signal is taken out as a current, it is preferable that the configuration of the configurable amplifier 110 to be coupled to the sensor uses an IV amplifier. Therefore, when the bias circuit P254c is selected, the configuration of the configurable amplifier 110 is automatically set to an IV amplifier type, and the bias circuit P254c and the IV amplifier are set to be coupled to each other.

The bias circuit 254d is a circuit that captures a current into a current output type pressure sensor as a detection signal. In the bias circuit 254d, one end of the pressure sensor serving as the sensor output terminal is coupled to the input terminal of the semiconductor device 1 and the other end is grounded. Since the bias circuit 254d is supplied with bias from no external source and its output signal is taken out as a current, it is preferable that the configuration of the configurable amplifier 110 to be coupled to the sensor uses an IV amplifier. Therefore, when the bias circuit P254d is selected, the configuration of the configurable amplifier 110 is automatically set to an IV amplifier type, and the bias circuit P254d and the IV amplifier are set to be coupled to each other.

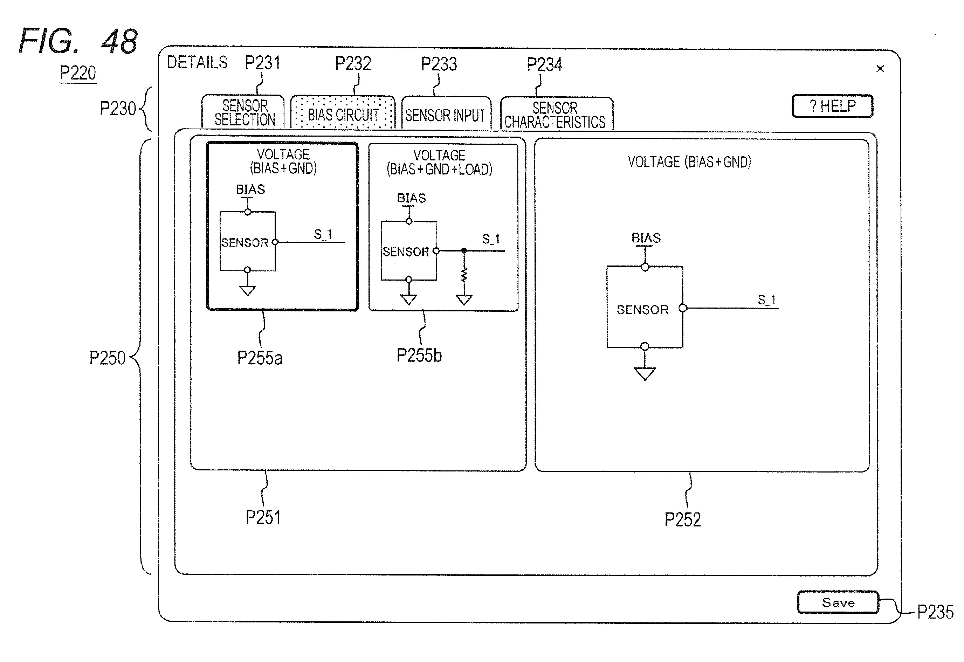

Fig. 48 shows still another example of the bias circuit selection screen P250 illustrated in Fig. 44. Fig. 48 is a display example in which a temperature sensor is chosen as the sensor; as bias circuits well matching a temperature sensor, the bias circuits P255a and P255b are shown in the circuit list P251. The selected bias circuit P255a is cited in the selection circuit P252 here.

The bias circuit 255a is a circuit that supplies bias power to a voltage output type temperature sensor and directly outputs output signals. In the bias circuit 255a, one end of the temperature sensor is supplied with bias power, the other end is grounded, and the output terminal is coupled only to the input terminal of the semiconductor device 1. Since the bias circuit 255a is supplied with bias from an external source and its output signal is taken out as a temperature for instance, it is preferable that the configuration of the configurable amplifier 110 to be coupled to the sensor uses a non-inverting amplifier. Therefore, when the bias circuit P255a is selected, the configuration of the configurable amplifier 110 is automatically set to a non-inverting amplifier type, and the bias circuit P255a and the non-inverting amplifier are set to be coupled to each other.

The bias circuit 255b is a circuit that provides bias power to a voltage output type temperature sensor and supplies output signals via a grounding resistor. In the bias circuit 255b, one end of the temperature sensor is supplied with bias power, the other end is grounded, and the output terminal is coupled to the grounding resistor as well as to the input terminal of the semiconductor device 1. Since the bias circuit 255b is supplied with bias from an external source and its temperature is taken out as a voltage for instance, it is preferable that the configuration of the configurable amplifier 110 to be coupled to the sensor uses a non-inverting amplifier. Therefore, when the bias circuit P255b is selected, the configuration of the configurable amplifier 110 is automatically set to a non-inverting amplifier type, and the bias circuit P255b and the non-inverting amplifier are set to be coupled to each other. The bias circuit 255b is also used for a current output type temperature sensor when the current output is converted into a voltage with a grounding resistor.

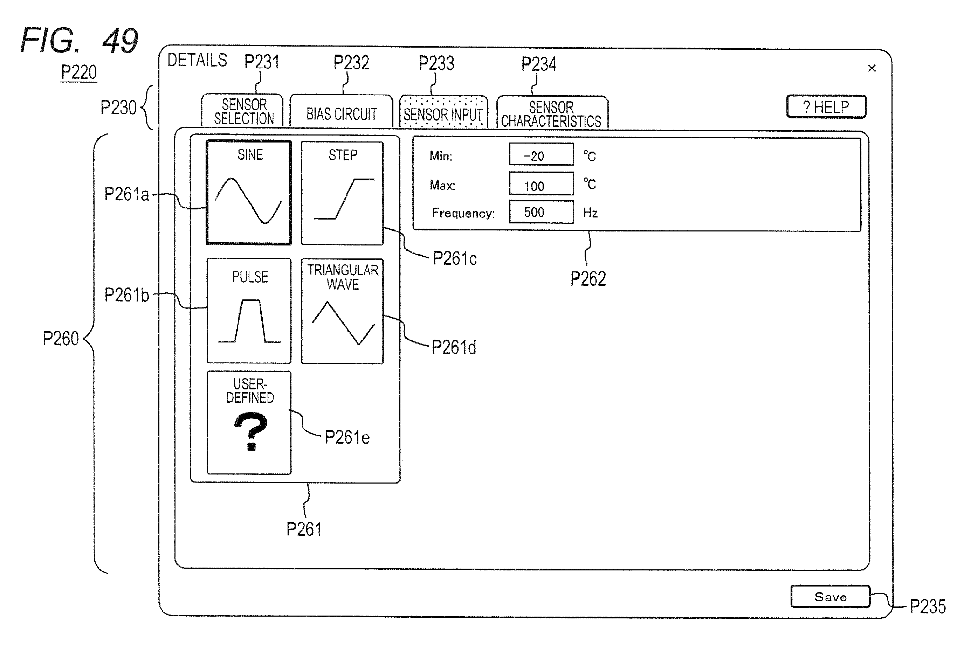

Fig. 49 is a display example of the physical quantity input screen displayed at S103 of Fig. 29. As shown in Fig. 49, when the "Sensor input" tab P233 is selected on the sensor details screen P220 shown in Fig. 41, Fig. 44 and so forth. As shown in Fig. 49, when the "Sensor input" tab P233 is selected on the sensor details screen P220 shown in Fig. 41, Fig. 44 and elsewhere, the physical quantity input screen P260 is displayed within the sensor details screen P220.

In the physical quantity input screen P260, an input pattern list P261 and an input parameter area P262 are displayed on the physical quantity input screen P260. In the input pattern list P261, patterns that can be selected as input patterns of physical quantity into a sensor are displayed, and in the input parameter area P262 parameters that set the selected input pattern in detail are displayed. As described with reference to S104 in Fig. 29, the set input patterns and parameters are stored into the parameter storage unit 427.

In the input pattern list P261, choice can be made out of prescribed input patterns P261a through P261d and a "User-defined" pattern P261e, any input pattern defined by the user as desired. The choice of the prescribed input patterns include a "Sine" pattern P261a, a square wave "Pulse" pattern P261b, a stepwise response waveform "Step" pattern P261c and a "Triangular wave" pattern P261d.

In the input parameter area P262, a pattern selected from the input pattern list P261 and parameters corresponding to the sensor selected on the sensor selection screen in Fig. 41 or elsewhere are displayed. In the example of Fig. 49, the temperature sensor is selected as the sensor, and the "Sine" pattern P261a is selected as the input pattern. As the input pattern is a sine wave, an input box of minimum, maximum and frequency is displayed in the input parameter area P262 to indicate input parameters and, as the sensor is the temperature sensor, the unit of the minimum and maximum is "°C".

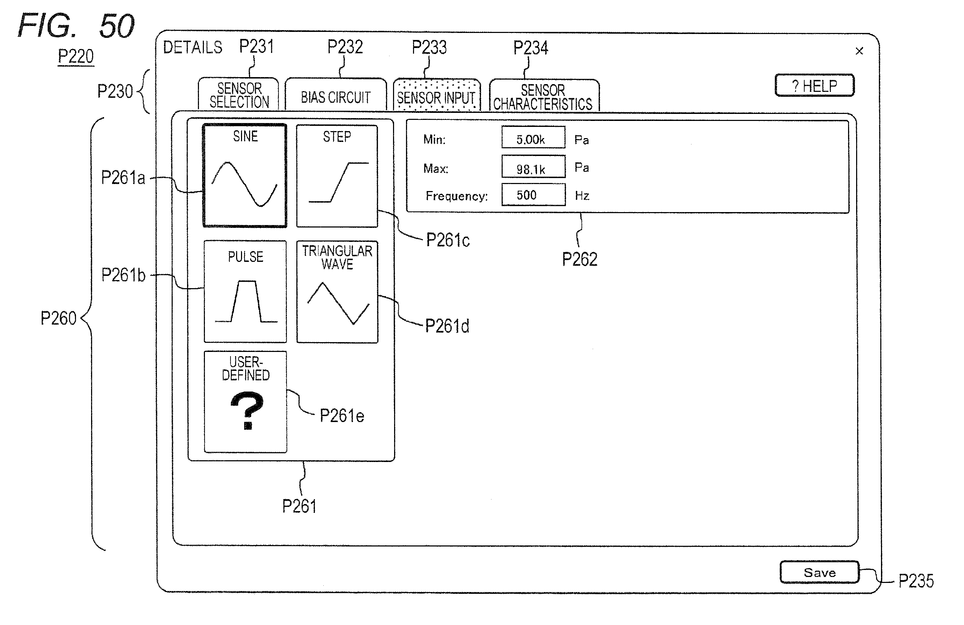

Fig. 50 shows another example of the physical quantity input screen P260 of Fig. 49. In Fig. 50, the pressure sensor is selected as the sensor, and the "Sine" pattern P261a is selected as the input pattern. As the input pattern is a sine wave, an input box of minimum, maximum and frequency is displayed in the input parameter area P262 to indicate input parameters and, as the sensor is the pressure sensor, the unit of the minimum and maximum is "Pa".

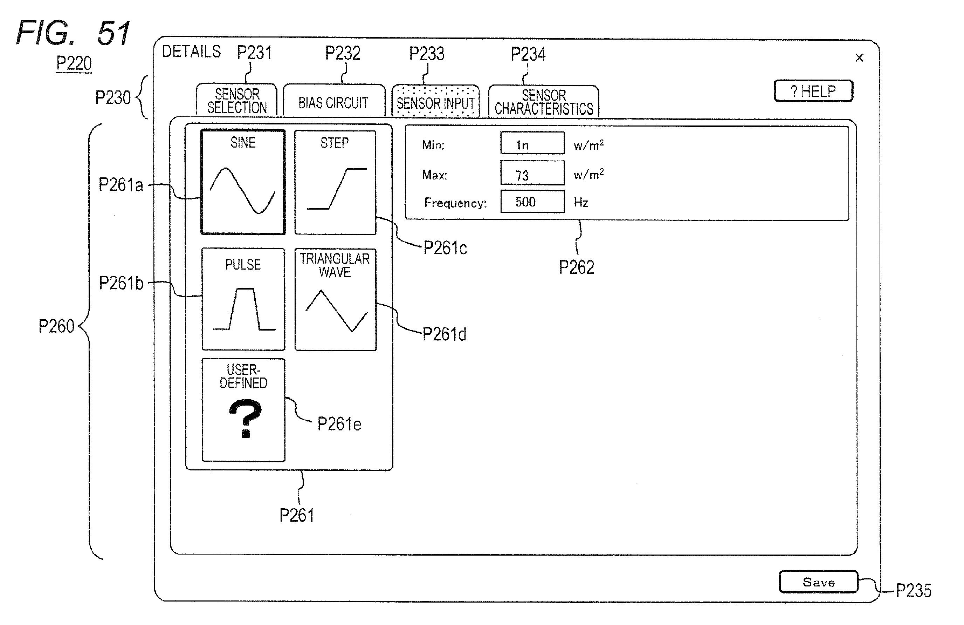

Fig. 51 shows still another example of the physical quantity input screen P260 of Fig. 49. In Fig. 51, the phototransistor is selected as the sensor, and the "Sine" pattern P261a is selected as the input pattern. As the input pattern is a sine wave, an input box of minimum, maximum and frequency is displayed in the input parameter area P262 to indicate input parameters and, as the sensor is the phototransistor, the unit of the minimum and maximum is "w/m²".

Further in the input parameter area P262, the pattern of each input waveform can be precisely specified by displaying and setting input parameters corresponding to the selected input pattern. For instance, where the input pattern is a sine wave, the minimum, maximum and frequency are set as stated above. Where the input pattern is a square wave, the minimum, maximum, rise velocity and fall velocity are set. Where the input pattern is a triangular wave, the minimum, maximum and frequency are set. Where the input pattern is a stepwise response, the minimum, maximum, rise timing and rise velocity are set. For the minimum and maximum of each input parameter, values corresponding to the characteristics of the sensor selected as default are displayed. Thus, the sensor database 421 is referenced to acquire and display the minimum and maximum detectable by the sensor. This arrangement can make it unnecessary for the user to check the characteristics of the sensor, and prevent the user from designating an input range beyond the performance limit of the sensor by mistake.

By displaying a plurality of input waveforms on the physical quantity input screen P260 and selecting the physical quantities to be inputted to the sensor according to the pattern of a prescribed input waveform, various characteristics of analog circuits can be simply analyzed. By way of example, the features of the selectable input waveforms shown in Fig. 51 will be described.

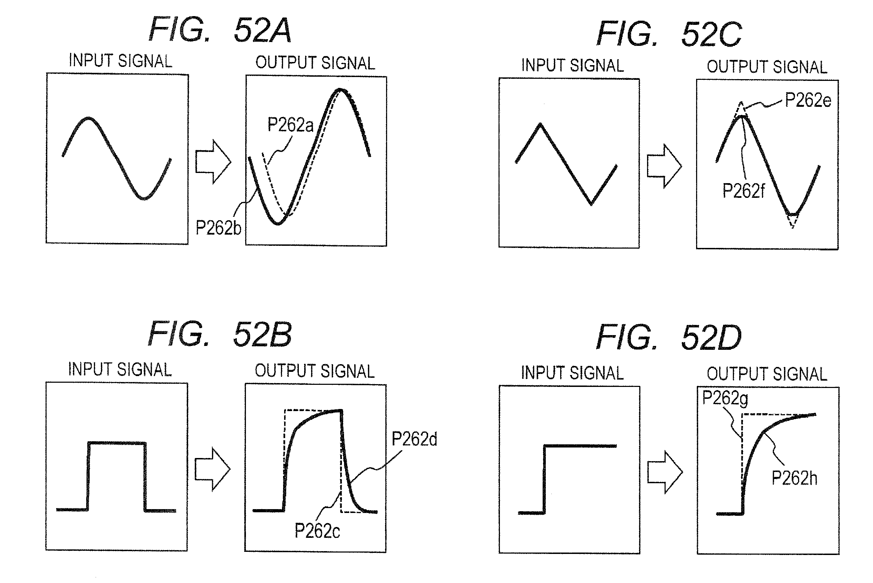

Fig. 52A shows an input signal and an output signal in the case of simulating the actions of an analog circuit (semiconductor device 1) in a sine wave input pattern. In the case of a sine wave, overall checkup covering the presence or absence of distortion and phase difference among others can be optimally accomplished by comparing a common-mode signal P262a in phase with the input signal and an output signal P262b, which is the result of simulation. It is also possible to check whether or not the output signal waveform is clipped. By displaying waveforms overlapping one over another on the display screen of the result of simulation shown in Fig. 52A, the user is enabled to recognize the frequency characteristics at a glance.

Thus, the use of the sine wave input pattern enables the user to easily recognize frequency characteristics at the particular frequency and to appropriately set the configuration and characteristics of the configurable amplifier 110 according to the recognized result.

It is further possible for the simulation executing unit 415 to detect any phase difference or the like according to the result of simulation and to automatically set the configuration and characteristics of the configurable amplifier 110 according to the result of detection. The simulation executing unit 415 simulates the configurable amplifier 110 to which the sine wave input pattern is inputted, and sets the number of coupling stages of the configurable amplifier 110 according to the frequency characteristics found as the result of simulation. The simulation executing unit 415, if an appropriate amplifying performance cannot be achieved at the required frequency, configures the configurable amplifier 110 in a multi-stage structure. For instance, if an amplifying performance of 30 dB is required at a sine wave frequency of 100 kHz, this performance level may prove impossible to achieve a single-stage configurable amplifier 110. In such a case, the number of stages of the configurable amplifier 110 can be increased to two in a configuration of coupling AMP1 (15 dB) and AMP2 (15 dB), the desired frequency characteristic can be attained.

Fig. 52B shows the input signal and the output signal in the case of simulating the actions of an analog circuit (semiconductor device 1) in a square wave input pattern. In the case of a square wave, by comparing a common-mode signal P262c in phase with the input signal and an output signal P262d, which is the result of simulation, the response performance can be optimally accomplished. By displaying waveforms overlapping one over another on the display screen of the result of simulation shown in Fig. 52B, the user is enabled to recognize the frequency characteristics at a glance.

Thus, by using the square wave input pattern, the user is enabled to easily recognize the response performance and appropriately set the configuration and characteristics of the configurable amplifier 110 according to the recognized result.

It is also possible for the simulation executing unit 415 to detect any distortion, delay or the like from the result of simulation, and to automatically set the configuration and characteristics of the configurable amplifier 110 according to the recognized result. The simulation executing unit 415 simulates the configurable amplifier 110 in a case of inputting the square wave input pattern to it, and sets the operating mode of the configurable amplifier 110 according to the response performance found as the result of simulation. If the responsiveness in insufficient and the rise characteristic is distorted, the simulation executing unit 415 alters the operating mode of the configurable amplifier 110. As the operating mode is in a trade-off relationship with the current consumption, the response performance is checked with the square wave and the optimal operating mode is selected on that basis. For instance, if the configurable amplifier 110 is initially set in a low speed mode and the required response performance is not achieved, the required response performance can be achieved resetting the configurable amplifier 110 to the medium speed or high speed mode.

Fig. 52C shows the input signal and the output signal in the case of simulating the actions of an analog circuit (semiconductor device 1) in a triangular wave input pattern. In the case of using the triangular wave, by comparing a common-mode signal P262e in phase with the input signal and an output signal P262f which is the result of simulation, any clipping outside the power supply range can be optimally accomplished. By displaying waveforms overlapping one over another on the display screen of the result of simulation shown in Fig. 52C, the user is enabled to recognize the clipped state at a glance.

Thus, the use of the triangular wave input pattern makes possible checkup of whether or not the offset and gain of the amplifier are correct. The user can readily recognize any clipped state of the output signal and appropriately set the configuration and characteristics of the configurable amplifier 110 according to the recognized result.

It is also possible for the simulation executing unit 415 to detect minimum and maximum clicks of signals according to the result of simulation and to automatically set the configuration and characteristics of the configurable amplifier 110 according to the result of detection. The simulation executing unit 415 simulates the configurable amplifier 110 in the case of inputting the triangular wave input pattern, and sets the offset or gain of the configurable amplifier 110 to match the clipped state revealed by the result of simulation. If either the upper or the lower part of the waveform of the output signals is clipped, the simulation executing unit 415 can obtain output signals in a desired range by altering the offset quantity of the amplifier. Or if both the upper and lower parts are clipped, this means that the extent of amplification by the configurable amplifier 110 is too great, output signals in the desired range can by obtained by reducing the gain of the amplifier.

Fig. 52D shows the input signal and the output signal in the case of simulating the actions of an analog circuit (semiconductor device 1) in a stepwise response waveform input pattern. In the case of the stepwise response waveform input pattern, by comparing a common-mode signal P262g in phase with the input signal and an output signal P262h which is the result of simulation, checkup of the response performance can be optimally accomplished. By displaying waveforms overlapping one over another as shown in Fig. 52D, the user is enabled to recognize the response performance at a glance.

Thus, by using the stepwise response waveform input pattern, the rise and fall cannot be recognized at the same time as in the case of the square wave, but there is no need to take the pulse width into account, and the response performance can be easily recognized. By using the stepwise response waveform input pattern, the user can readily recognize the response performance and appropriately set the configuration and characteristics of the configurable amplifier 110 according to the recognized result. It is also possible for the simulation executing unit 415 to detect any distortion, delay or the like of signals according to the result of simulation and to automatically set the configuration and characteristics of the configurable amplifier 110 according to the result of detection.

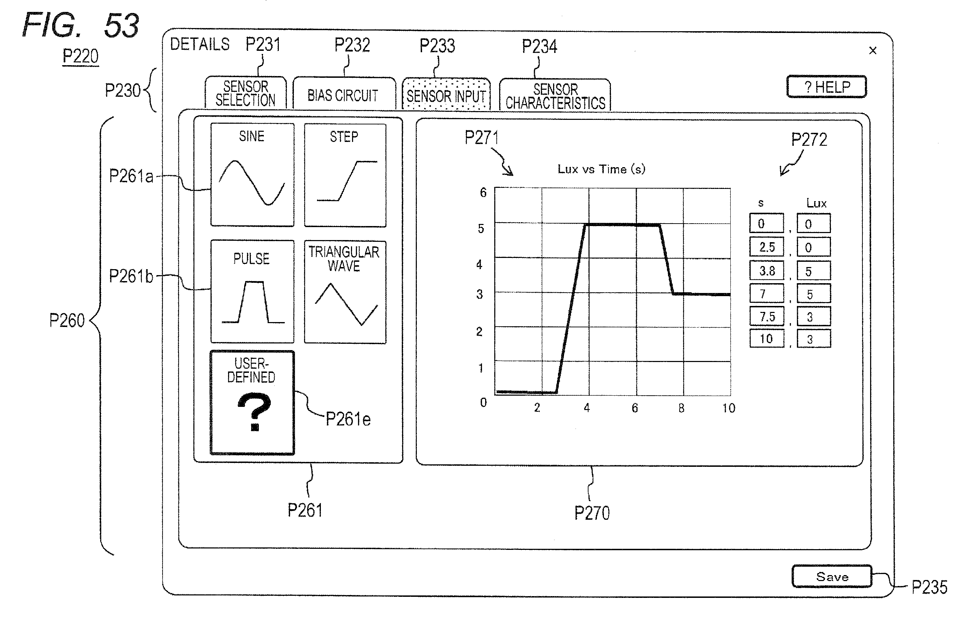

Fig. 53 shows a case in which the "User-defined" pattern P261e is selected on the physical quantity input screen P260 of Fig. 49. As shown in Fig. 53, when the "User-defined" pattern P261e is selected, a user-defined input area P270 is displayed on the physical quantity input screen P260 in place of the input parameter area P262 of Fig. 40.

In the user-defined input area P270, an input pattern graph P271 and a plot input area P272 corresponding to the selected sensor are displayed. In the input pattern graph P271, the input pattern is set by clicking or dragging each plot in the graph. In the plot input area P272, the input pattern is set by numerically inputting each plot in the graph, not shown.

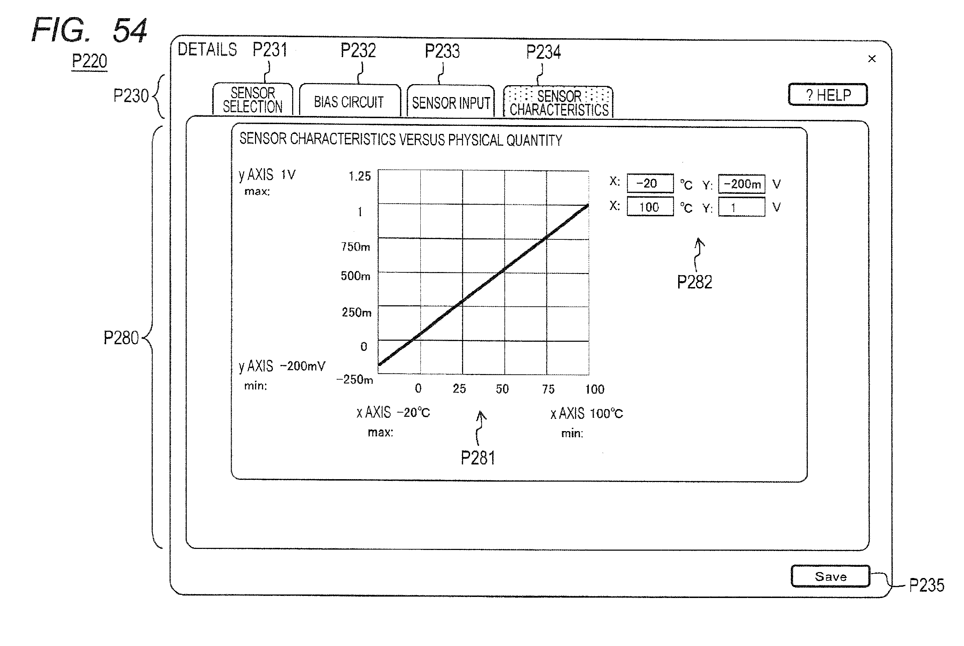

Fig. 54 shows a display example of a sensor characteristics screen P280 displayed when the "Sensor characteristics" tab P234 is selected on the sensor details screen P220 shown in Fig. 41, Fig. 44, Fig. 49 or elsewhere. In the sensor characteristics screen P280, a characteristics graph P281 and a characteristics range P282 are displayed. In the characteristics graph P281 and the characteristics range P282, characteristics of the sensor selected as shown in Fig. 41 or elsewhere are displayed. On the basis of the datasheet of the selected sensor, input/output characteristics of the sensor regarding physical quantities are shown in the characteristics graph P281, while the operable range is shown in the characteristics range P282.

The case of Fig. 54 is a display example of a case in which a temperature sensor is selected as the sensor. In the characteristics graph P281 the characteristic of the output voltage relative to the temperature to be detected is displayed with the x-axis representing the detected temperature and the y-axis, the output voltage. In the characteristics range P282, the same temperature range and output voltage range as in the characteristics graph P281 are displayed.

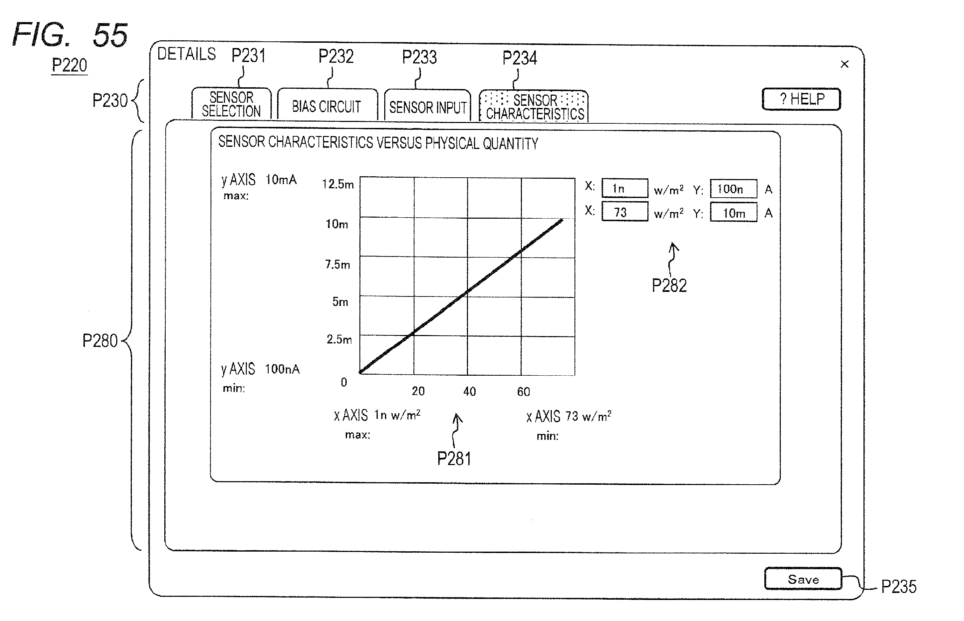

Fig. 55 shows another example of the sensor characteristics screen P280 shown in Fig. 54. Fig. 55 is a display example of a case in which a phototransistor is selected as the sensor. In the characteristics graph P281, characteristics of the output current relative to the illuminance to be detected are displayed with the x-axis representing the detected illuminance and the y-axis, the output current. In the characteristics range P282, the same illuminance range and output current rage as in the characteristics graph P281 are displayed,

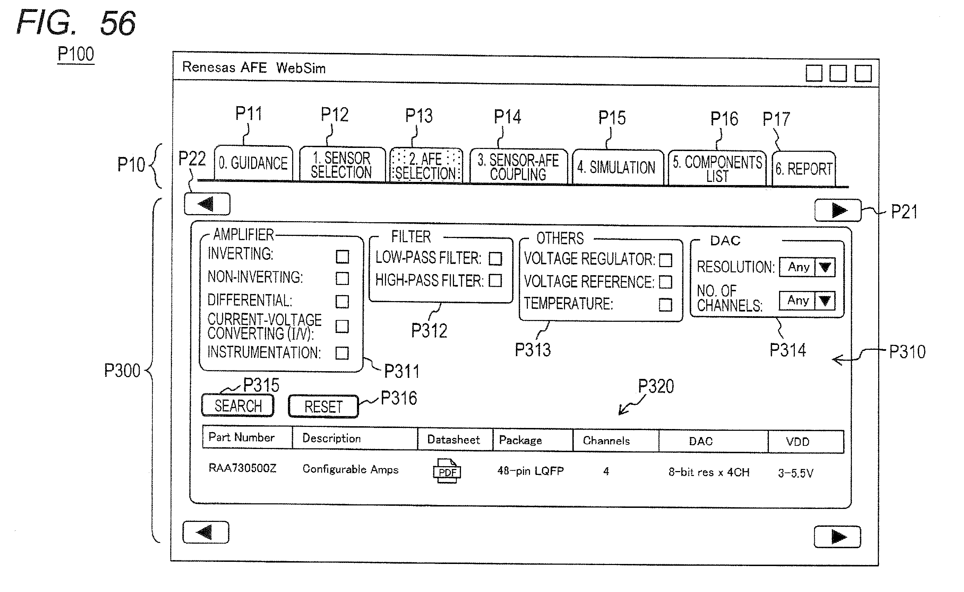

Fig. 56 is a display example of the AFE selection screen displayed at S105 in Fig. 29. As shown in Fig. 56, when the "AFE selection" tab P13 is selected on the web simulator screen P100 0 shown in Fig. 38, Fig. 39 or elsewhere, the AFE selection screen P300 is displayed.

On the AFE selection screen P300, AFE narrowing-down conditions P310 are displayed in the upper part, and an AFE list P320, in the lower part. In the AFE narrowing-down conditions P310, conditions for further narrowing down the semiconductor device 1 specified by the selected sensor and bias circuit are displayed.

In Fig. 56, as the AFE narrowing-down conditions P310, an "Amplifier" area P311, a "Filter" area P312, an "Others" area P313 and a "DAC" area P314 are displayed. In the "Amplifier" area P311, an "Inverting" check box for making the inverting amplifier a search condition, a "Non-inverting" check box for making the non-inverting amplifier a search condition, a "Differential" check box for making the differential amplifier a search condition, an "IV" check box for making the IV amplifier a search condition, and an "Instrumentation" check box for making the instrumentation amplifier a search condition are displayed. In the "Amplifier" area P311, checkup is done by clicking the check box pertinent to the particular search condition to search for the semiconductor device 1 by the configuration of the configurable amplifier 110.

In the "Filter" area P312, a "Low-pass" check box for making the low-pass filter a search condition and a "High-pass" check box for making the high-pass filter a search condition are displayed. In the "Filter" area P312, checkup is done by clicking the check box pertinent to the particular search condition to search for the semiconductor device 1 by the configuration of the filter.

In the "Others" area P313, the "Power supply regulator" for making a power supply regulator (variable regulator 150) a search condition, a "Power supply reference" for making a power supply reference a search condition, and a "Temperature sensor" for making a temperature sensor a search condition are displayed. In the "Others" area P313, checkup is done by clicking the check box pertinent to the particular search condition to search for the semiconductor device 1 by the configuration of the power supply regulator and the like,

In the "DAC" area P314, a DAC "Resolution" pull-down menu and a "Ch number" pull-down menu are displayed. In the "Resolution" pull-down menu, the bit number is designated to make the semiconductor device 1 of a specific-bit resolution an object of search or "Any" is designated to make the semiconductor devices 1 of all levels of resolution an object of search.

Between the narrowing-down conditions P310 and the AFE list P320, a "Search" button P315 and a "Reset" button P316 are displayed. By clicking the "Search" button P315, the AFE database is searched under the conditions set in the narrowing-down conditions P310, and the result of search is displayed in the AFE list P320. By clicking the "Reset" button P316, the narrowing-down conditions (search conditions) set in the narrowing-down conditions P310 are reset, and the screen display returns to its initial state in which nothing is set.

In the AFE list P320, a list of semiconductor devices 1 which are suitable for the selected sensor and bias circuit and meet the narrowing-down conditions set in the narrowing-down conditions P310 is displayed. As described with reference to S106 in Fig. 29, when the sensor and bias circuit are selected as shown in Fig. 41, Fig. 49 and elsewhere, the semiconductor device 1 that can be coupled to the sensor is determined. Out of the AFE database 424, the semiconductor device 1 that can be coupled to the sensor and meet the set narrowing-down conditions is displayed.

In the AFE list P320, information on the semiconductor devices 1 is displayed in plurality of columns. In Fig. 56, for each semiconductor device 1, Part # (Part Number), Description, Datasheet, package type (Package), number of channels (Channels), DAC configuration (DAC) and source voltage (VDD) are displayed. In the columns of the datasheet, PDE icons are displayed, and by clicking the pertinent PDE icon, the PDE file of the datasheet is displayed.

By displaying the semiconductor device 1 suitable for the sensor and bias circuit and displaying the semiconductor device 1 meeting the narrowing-down conditions in the AFE list P320, the desired semiconductor device 1 can be selected by simple operation. On the basis of the displayed information, the user selects the sensor to be used out of the AFE list P320 by clicking. When the sensor is selected out of the AFE list P320 as at in Fig. 29, circuit information on the semiconductor device 1 is stored into the circuit information storage unit 426.

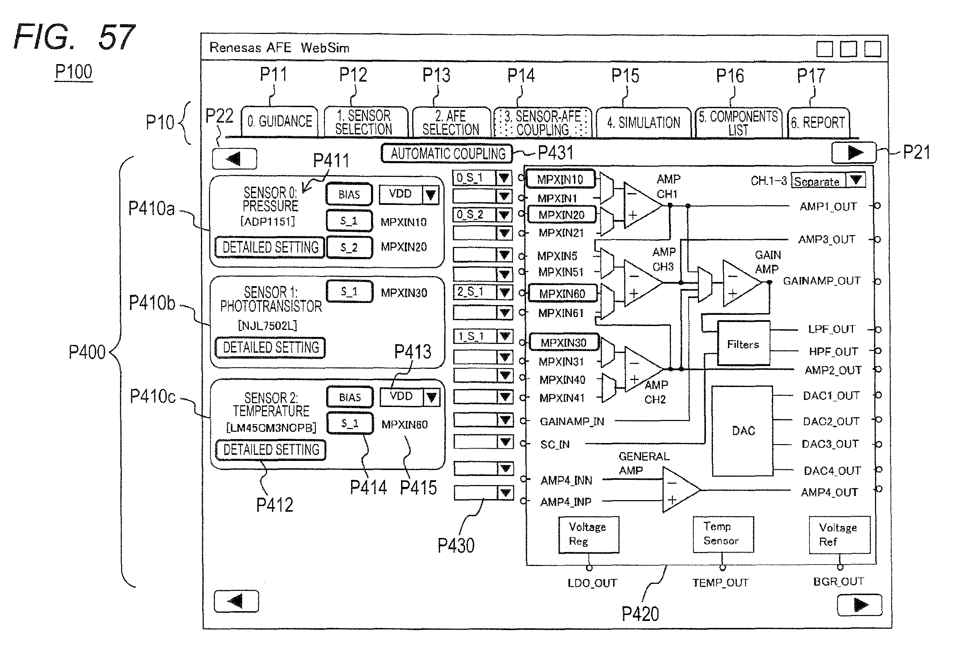

Fig. 57 shows a display example of the sensor-AFE coupling screen shown at S107 in Fig. 29. As shown in Fig. 57, when the "Sensor-AFE coupling" tab P14 is selected on the web simulator screen P100 shown in Fig. 38, Fig. 39, Fig. 56 and elsewhere, the sensor-AFE coupling screen P400 is displayed.

On the sensor-AFE coupling screen P400, a sensor selection frame P410 showing the set state of the sensor and bias circuit on a sensor-by-sensor basis is displayed on the left side. The sensor selection frame P410 matches the sensor selection frame P210 in Fig. 39 and Fig. 40, and displays information on bias circuits in addition to the information displayed in the sensor selection frame P210. In Fig. 57, as in the sensor selection frame of Fig. 40, the sensor selection frame P410a in which a pressure sensor is selected, the sensor selection frame P410b in which a phototransistor is selected, and the sensor selection frame P410c in which a temperature sensor is selected are displayed.

Thus, in the sensor selection frame P410, the selected sensor type and sensor Part # and the "Detailed setting" button P412 are displayed in a sensor name display area P411 as in the sensor selection frame P210 of Fig. 40,

Also in the sensor selection frame P410, a bias pull-down menu P413 for setting bias is displayed. For instance in the bias pull-down menu P413, a list of bias supply methods matching the selected bias circuit is displayed, permitting choice of such supply methods as VDD and GND. Further in the sensor selection frame P410, an output signal display P414 for displaying an output signal matching the selected bias circuit and an input terminal display P415 for displaying the input terminal of the semiconductor device 1 are displayed correspondingly to the coupling relationship.

In the sensor-AFE coupling screen P400, a semiconductor device image P420 indicating an image of the circuit configuration of the semiconductor device 1 is displayed to the right of a sensor line selection frame P410, and an input terminal pull-down menu P430 is displayed in positions matching the input terminals of the semiconductor device image P420.

The semiconductor device image P420 displays coupling relationships between the input/output terminals of the semiconductor device 1 and circuits within the semiconductor device 1. The semiconductor device image P420 is displayed correspondingly to the actual coupling relationships of the semiconductor device 1 as described with reference to Fig. 3.

In the input terminal pull-down menu P430, the output signals of sensors and bias circuits coupled to the input terminals are displayed. It is possible to select an output signal of a sensor by clicking the input terminal pull-down menu P430, and it is also possible to set a coupling relationship by dragging the icon of the output signal display P414 of the sensor to the pull-down menu P430. As described with reference to S107 of Fig. 29, when a coupling relationship between a sensor and the semiconductor device 1 is selected according to the input terminal pull-down menu P430, circuit information on the selected coupling relationship is stored into the circuit information storage unit 426.

Further, as described with reference to S106 of Fig. 29, when a sensor and a bias circuit are selected, the configuration and coupling relationship of the configurable amplifier 110 are determined. In the sensor-AFE coupling screen P400 of Fig. 57, the coupling relationship determined at S106 is automatically displayed as default.

Further, above the input terminal pull-down menu P430, an "Automatic coupling" button P431 for automatically coupling a sensor and the semiconductor device 1 is displayed. When the sensor setting is altered with the "Detailed setting" button P412 in the sensor selection frame P410, the sensor whose setting has been altered and the semiconductor device 1 are automatically coupled by clicking the "Automatic coupling" button P431.

The coupling relationship in the case shown in Fig. 57 will be described. Sensor 0 in the sensor selection frame P410a has two outputs by the choice of a pressure sensor and a bias circuit, and these two outputs and the individual amplifiers of the configurable amplifier 110 are automatically coupled. More specifically, the output signal (output terminal) S_1 of sensor 0 is coupled to the input terminal MPXIN10 of the semiconductor device 1, and the output signal (output terminal) S_2 of sensor 0 is coupled to the input terminal MPXIN20 of the semiconductor device 1. In the semiconductor device 1, MPXIN10and MPXIN20 are coupled to the inverting input terminal and the non- inverting input terminal AMP of CH1 (the individual amplifier AMP1 of the configurable amplifier 110). Thus, output signals S_1 and S_2 of sensor 0 are amplified by AMP of CH1 of the semiconductor device 1, and outputted from the output terminal AMP1_OUT.

Sensor 1 in the sensor selection frame P410b has one output selected between the phototransistor and the bias circuit, and this one output and an individual amplifier of the configurable amplifier 110 are automatically coupled. More specifically, the output signal (output terminal) S_1 of sensor 1 is coupled to the input terminal MPXIN30 of the semiconductor device 1. In the semiconductor device 1, MPXIN30 is coupled to AMP of CH2 (the inverting input terminal of the individual amplifier AMP2 of configurable amplifier 110). Thus, the output signal S_1 of sensor 1 is amplified by AMP of CH2 of the semiconductor device 1, and outputted from the output terminal AMP2_OUT.

Sensor 2 in the sensor selection frame P410c has one output selected between the temperature sensor and the bias circuit, and this one output and an individual amplifier of the configurable amplifier 110 are automatically coupled. More specifically, the output signal (output terminal) S_1 of sensor 2 is coupled to the input terminal MPXIN60 of the semiconductor device 1. In the semiconductor device 1, MPXIN60 is coupled to the non-inverting input terminal of AMP of CH3 (the individual amplifier AMP3 of the configurable amplifier 110). Thus, the output signal S_1 of sensor 2 is amplified by AMP of CH3 of the semiconductor device 1, and outputted from the output terminal AMP3_OUT.

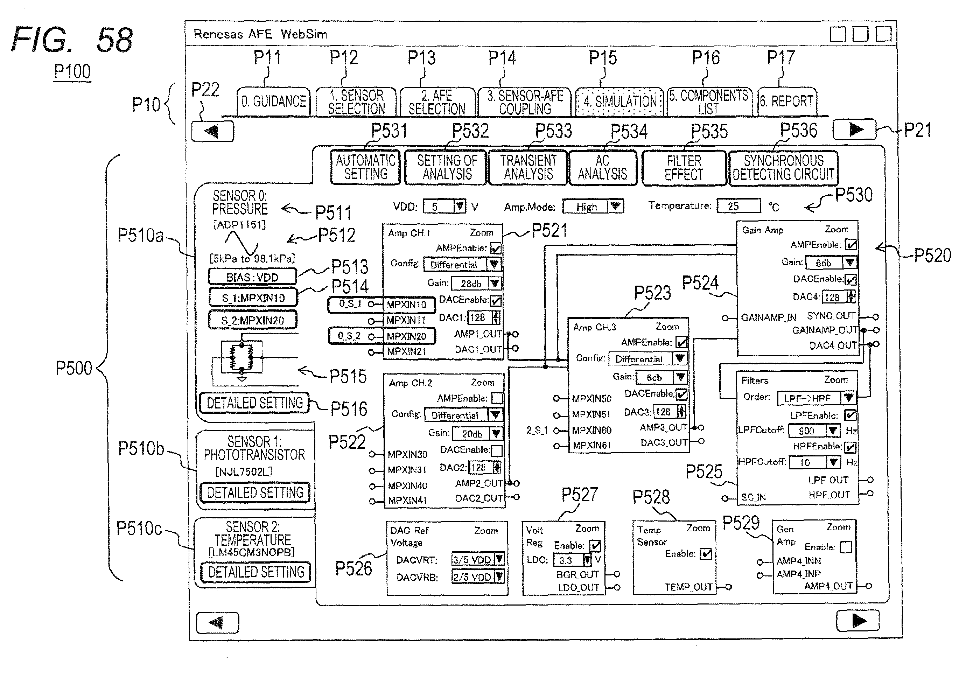

Fig. 58 shows a display example of the simulation screen displayed at S201 in Fig. 30. As shown in Fig. 58, when the "Simulation" tab P15 is selected on the web simulator screen P100 shown in Fig. 38, Fig. 39, Fig. 56, Fig. 57 and elsewhere, the simulation screen P500 is displayed. The simulation screen P500 can display various items to be set for simulation and the result of simulation. Fig. 58 shows a state before the execution of simulation.

On the simulation screen P500, the sensor selection frame P510 showing the set states of the sensor and bias circuit and the input pattern on a sensor-by-sensor basis is displayed on the left side. In the sensor selection frame P510, which matches the sensor selection frame P410 shown in Fig. 57, information on input patterns is displayed in addition to displayed items in the sensor selection frame P410. Fig. 58 shows, similarly to the sensor selection frame of Fig. 57, the sensor selection frame P510a in which the pressure sensor is selected, the sensor selection frame P510b in which the phototransistor is selected, and the sensor selection frame P510c in which the temperature sensor is selected.

Thus in the sensor selection frame P510, as in the sensor selection frame P410 of Fig. 57, the sensor type and sensor Part # selected in a sensor name display area P511 are displayed, and a bias supply method P513, an output signal/input terminal coupling relationship P514 and a "Detailed setting" button P516 are also displayed. Further in the sensor selection frame P510, an input waveform image P512 showing an image of the input pattern of the physical quantity and a bias circuit image P515 showing the image of the bias circuit that is set are displayed.

On the simulation screen P500, a semiconductor device setting area P520 for setting the circuits of the semiconductor device 1 is displayed to the right of the sensor selection frame P510. In the semiconductor device setting area P520, circuit blocks matching the configuration of the semiconductor device 1 are displayed.

In individual amplifier blocks P521 through P523, a setting menu for setting the individual amplifiers AMP1 through AMP3 of CH1 through CH3 of the configurable amplifier 110 of the semiconductor device 1 is displayed. In the individual amplifier blocks P521 through P523, turning on/off of amplifiers is set in an "AMP Enable" check box, the configuration of amplifiers is set in an "Config" pull-down menu, the gains of amplifiers are set in a "Gain" pull-down menu, turning on/off of DAC is set in a "DAC Enable" check box, and the output voltage of DAC is set in a "DAC" pull-down menu.

For instance in the "Config" pull-down menu, choice of "Differential" will cause the amplifier configuration to use a differential amplifier, choice of "Inverting" will cause the amplifier configuration to use an inverting amplifier, choice of "Non-Inverting" will cause the amplifier configuration to use a non-inverting amplifier, and choice of "I/V" will cause the amplifier configuration use an IV amplifier. Further, as described with reference to Fig. 31, the amplifier gain and offset are automatically set to match the selected amplifier and bias circuit. In the individual amplifier blocks P521 through P523, the gain and DAC output voltage set by automatic processing are displayed as default.

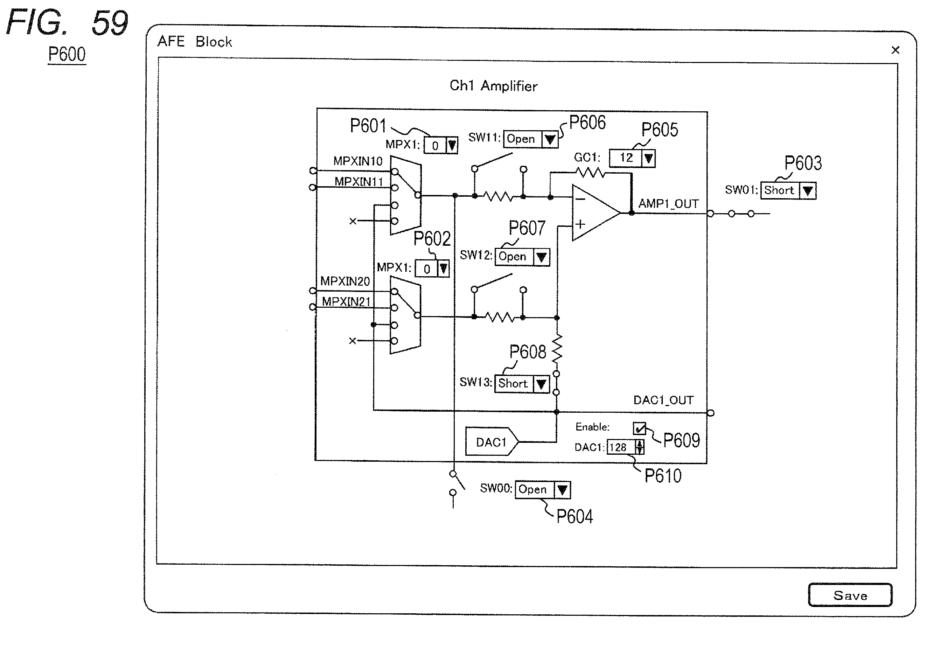

Further, when "Zoom" in the individual amplifier blocks P521 through P523 is clicked, various ways of setting are made possible with reference to the block diagram of the amplifiers. More specifically, as shown in Fig. 59, an amplifier setting screen P600 is popped up and set. In the amplifier setting screen P600, the same circuit image as the real amplifier in the semiconductor device 1 is displayed; for instance, the amplifier circuit configuration shown in Fig. 8 is displayed.

On the amplifier setting screen P600, the coupling mates of the input terminals and the output terminals of amplifiers are set according to pull-down menus P601 through P604; amplifier gains are set according to the pull-down menu P605; the presence or absence of input resistor and coupling of DAC are set according to the pull-down menu P606 through P608; and the turning on/off and output voltage of DAC are set according to a check box P609 and the pull-down menu P610.

A gain amplifier block P524 shown in Fig. 58 displays a setting menu for setting the gain amplifier 120 of the semiconductor device 1. In the gain amplifier block P524, amplifiers are set as in the individual amplifier blocks P521 through P523. In the gain amplifier block P524, turning on/off of amplifiers is set according to the "AMP Enable" check box; amplifier gains are set according to the "Gain" pull-down menu; turning on/off of DAC is set according to the "DAC Enable" check box; and the output voltage of DAC is set according to the "DAC" pull-down menu.

A filter block P525 displays a setting menu for setting the low-pass filter 130 and the high-pass filter 140 of the semiconductor device 1. In the filter block P525, the sequence of passing filter circuits is set according to an "Order" pull-down menu; turning on/off of the low-pass filter is set according to an "LPF Enable" check box; the cut-off frequency of the low-pass filter is set according to an "LPF Cutoff" pull-down menu; turning on/off of the high-pass filter is set according to an "HPF Enable" check box; and the cut-off frequency of the high-pass filter is set according to an "HPF Cutoff" pull-down menu.

For instance in the "Order" pull-down menu, choice of "LPF" will give a configuration in which only the low-pass filter is passed; choice of "HPF" will give a configuration in which only the high-pass filter is passed; choice of "LPF→HPF" will give a configuration in which the low-pass filter and the high-pass filter are passed in this order; and choice of "HPF→LPF" will give a configuration in which the high-pass filter and the low-pass filter are passed in this order.

In a DAC block P526, a setting menu for setting a DAC reference voltage to be coupled to each amplifier is displayed. In the DAC block P526, the upper limit of the set voltage of DAC is set according to a "DACVRT" pull-down menu, and the lower limit of the set voltage of DAC is set according to a "DACVRB" pull-down menu.

A variable regulator block P527 displays a setting menu for setting the variable regulator 150 of the semiconductor device 1. In the variable regulator block P527, turning on/off of the variable regulator is set according to "Enable" check box, and the output voltage of the variable regulator is set according to "LDO" pull-down menu.

In a temperature sensor block P528, a setting menu for setting the temperature sensor 160 of the semiconductor device 1 is displayed. In the temperature sensor block P528, turning on/off of the temperature sensor is set according to an "Enable" check box. A general-purpose amplifier block P529 displays setting menu for setting the general-purpose amplifier 170 of the semiconductor device 1. In the temperature sensor block P528, turning on/off of the general-purpose amplifier is set according to the "Enable" check box.

In the upper region of the semiconductor device setting area P520, a common setting area P530 for various circuits is displayed. In the common setting area P530, the source voltage is set according to a "VDD" pull-down menu; the amplifier mode is set according to am "Amp Mode" pull-down menu ; and the temperature of the semiconductor device 1 can be set according to a "Temperature" input box. In the "Amp Mode" pull-down menu, "High" indicating a high speed mode or "Low" indicating a low speed mode as an amplifier operation mode is selected.

Above the common setting area P530, buttons P531 through P536 for executing simulation are displayed. The "Automatic setting" button P531 is a button for executing automatic setting shown in Fig. 31. When setting is altered with the "Detailed setting" button P516 in the sensor selection frame P510, clicking of the "Automatic setting" button P531 causes the gain and offset of the amplifier to be adjusted in a configuration matching the sensor whose setting has been altered, and the gain and DAC output voltage of the amplifier is thereby automatically set.

An "Analysis setting" button P532 is a button for inputting simulation parameters at S203 of Fig. 30. For instance, when the "Analysis setting" button P532 is clicked, a list of parameters that can be set up is popped up, and the parameters are set. As described with reference to S203 of Fig. 30, the set parameters are stored into the parameter storage unit 427.

A "Transient analysis" button P533 is a button for processing transient analysis shown in Fig. 34. When the "Transient analysis" button P533 is clicked, operations that would take place when physical quantities are inputted to the semiconductor device 1 in a time series are simulated with the set circuit information and parameters as the conditions of simulation as described with reference to Fig. 34, and the result of simulation is displayed on the simulation screen P500.

An "AC analysis button P534 is a button for executing AC analysis as shown in Fig. 35. When the "AC analysis button P534 is clicked, operations that would take place when physical quantities are inputted to the semiconductor device 1 on a frequency-by-frequency basis are simulated with the set circuit information and parameters as the conditions of simulation as described with reference to Fig. 35, and the result of simulation is displayed on the simulation screen P500.

A "Filter effect" button P535 is a button for executing filter effect analysis as shown in Fig. 36. When the "Filter effect" button P535 is clicked, operations that would take place when noise-added physical quantities are inputted to the semiconductor device 1 are simulated with the set circuit information and parameters as the conditions of simulation as described with reference to Fig. 36, and the result of simulation is displayed on the simulation screen P500.

A "Synchronous detecting circuit" button P536 is a button for executing synchronous detection analysis as shown in Fig. 37. When the "Synchronous detecting circuit" button P536 is clicked, operations that would take place when physical quantities and synchronous signals are inputted to the semiconductor device 1 are simulated with the set circuit information and parameters as the conditions of simulation as described with reference to Fig. 37, and the result of simulation is displayed on the simulation screen P500.

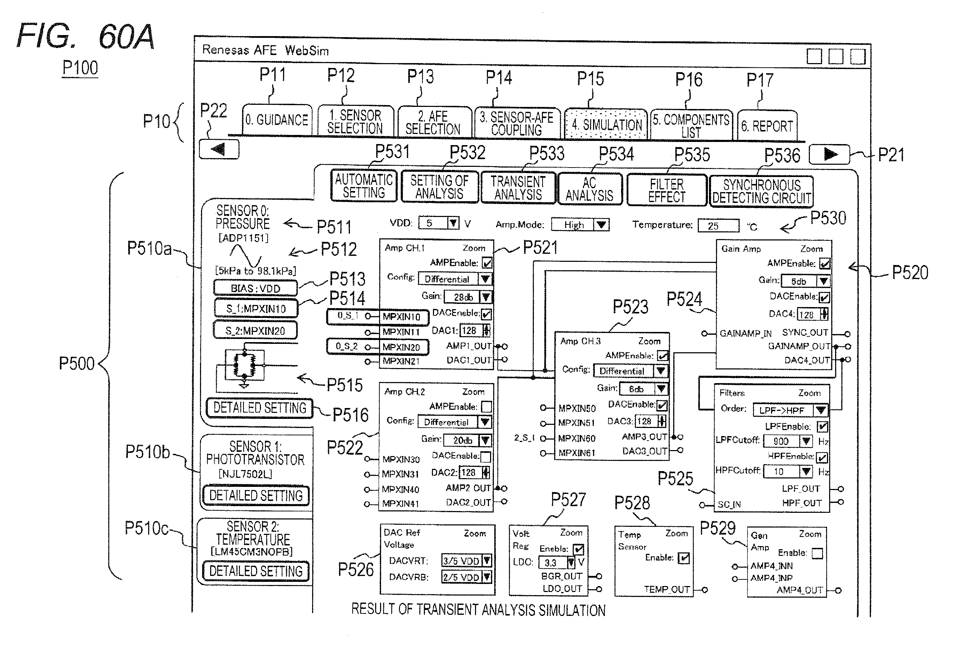

Fig. 60A through Fig. 60C are display examples in which the result of transient analysis is additionally displayed in the simulation screen P500 of Fig. 58. Incidentally, screens to be displayed consecutively are split in the illustrations in Fig. 60A through Fig. 60C.

As shown in Fig. 60A through Fig. 60C, when the "Transient analysis" button P533 is clicked to execute transient analysis, a result of transient analysis P700 is displayed underneath the semiconductor device setting area P520 in the simulation screen P500.

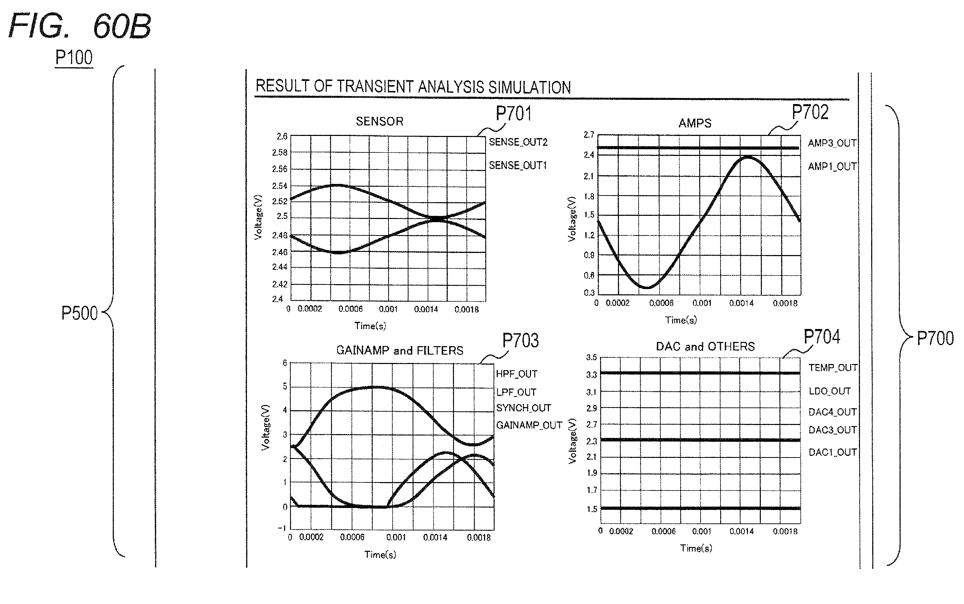

In the result of transient analysis P700, signal waveforms of the simulation result are collectively displayed in result graphs P701 through P705. The result graph P701 collectively displays the waveforms of sensor output signals. In the result graph P701 of Fig. 60B, sensor output signals SENSE_OUT1 and SENSE_OUT2 (the output signal S_1 and S_2 of sensors) are displayed.

The result graph P702 collectively displays the waveforms of amplifier output signals. In the result graph P702 of Fig. 60B, AMP3_OUT and AMP1_OUT (output signals of CH3 and CH1 amplifiers) are displayed.

The result graph P703 collectively displays the waveforms of the output signals of gain amplifiers and filters. In the result graph P703 of Fig. 60B, HPF_OUT (output signals of the high-pass filter), LPF_OUT (output signals of the low-pass filter), SYNCH_OUT (output signals of the synchronous detecting circuit) and GAINAMP_OUT (output signals of gain amplifiers) are displayed.

The result graph P704, collectively displays the waveforms of the output signals of DAC and other elements. In the result graph P704 of Fig. 60B, TEMP_OUT (output signals of the temperature sensor), LDO_OUT (output signals of the power supply regulator), DAC4_OUT, DAC3_OUT and DAC1_OUT (output signals of the DAC4, DAC3 and the DAC1) are displayed.

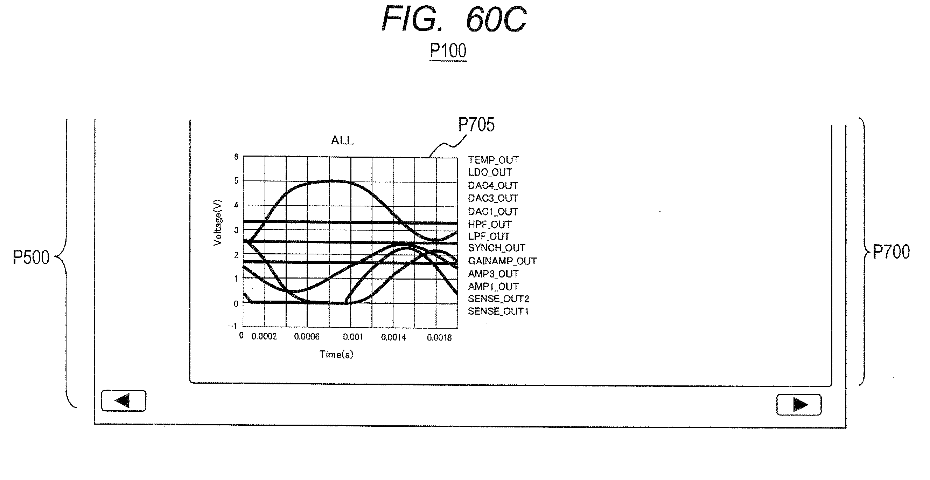

The result graph P705 collectively displays the waveforms of all the output signals. In the result graph P705 of Fig. 60C, TEMP_OUT, LDO_OUT, DAC4_OUT, DAC3_OUT, the DAC1 _OUT, HPF_OUT, LPF_OUT, SYNCH_OUT, GAINAMP_OUT, AMP3_OUT, AMP1_OUT, SENSE_OUT2 and SENSE_OUT1 shown in the result graph P701 through P704 are displayed.

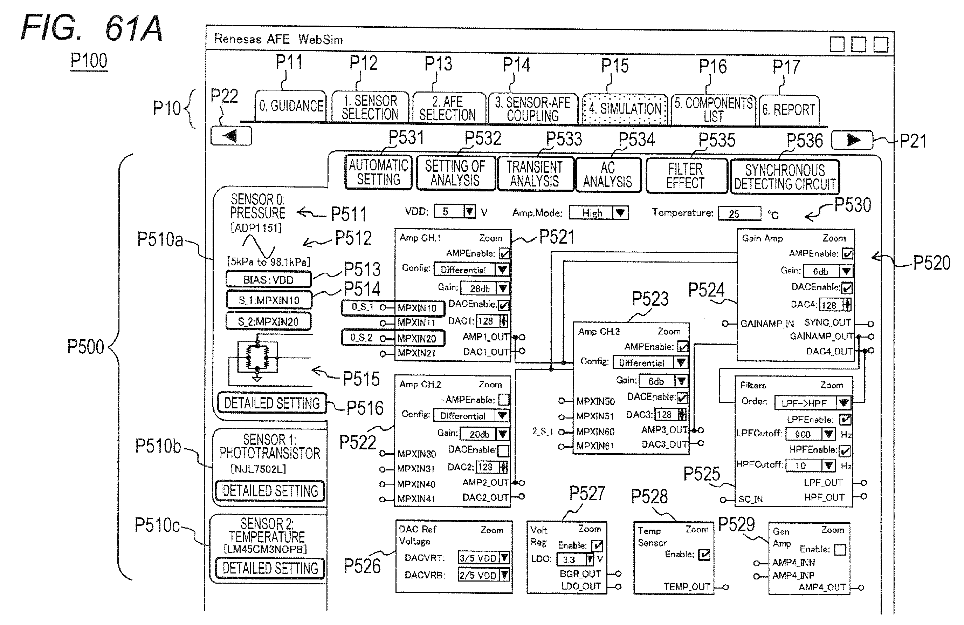

Fig. 61A through Fig. 61D are display examples including the addition of the transient analysis result to the simulation screen P500 in Fig. 60A through Fig. 60C. Incidentally, screens to be displayed consecutively are split in the illustrations in Fig. 61A through Fig. 61D.

As shown in Fig. 61A through Fig. 61D, when transient analysis is executed by clicking the "Transient analysis" button P533 to add to the simulation screen P500 in Fig. 60A through Fig. 60C, a transient analysis result P700 is displayed underneath the result of transient analysis P700 in the simulation screen P500.

In the transient analysis result P710, as in the result of transient analysis P700, signal waveforms of the result of simulation are collectively displayed in the result graphs P711 through P715.

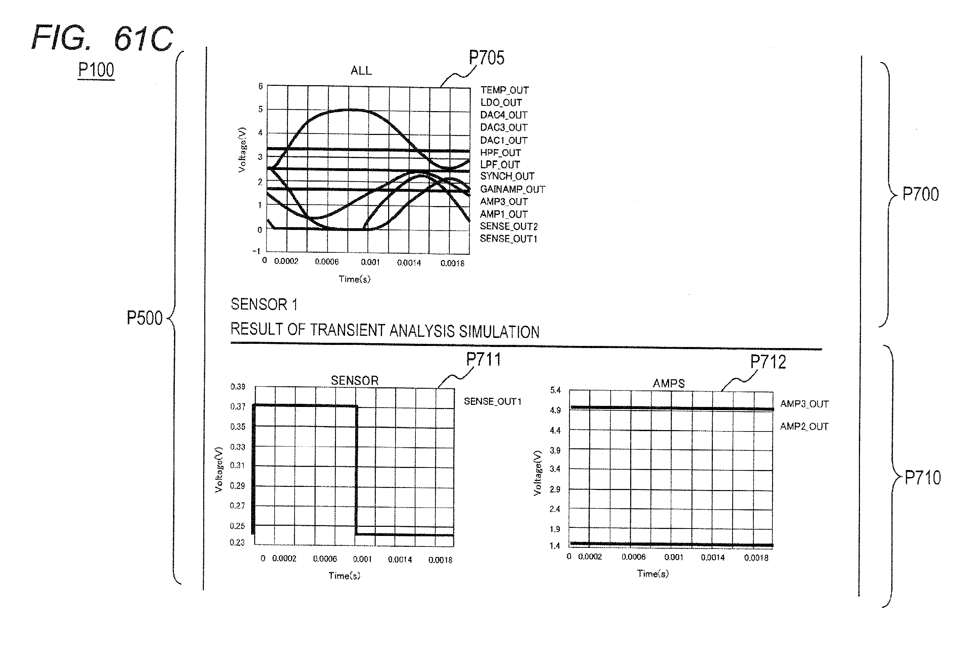

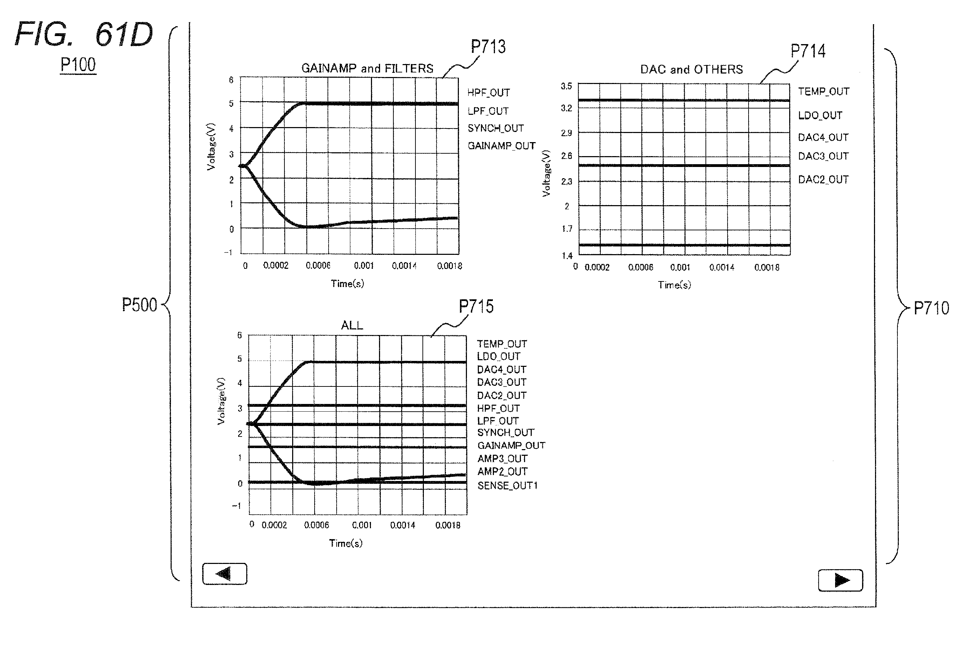

In the result graph P711 of Fig. 61C, the sensor output signal SENSE_OUT1 is displayed. In the result graph P712 of Fig. 61C, AMP3_OUT and AMP2_OUT are displayed. In the result graph P713 of Fig. 61D, HPF_OUT, LPF_OUT, SYNCH_OUT and GAINAMP_OUT are displayed. In the result graph P714 of Fig. 61D, TEMP_OUT, LDO_OUT, DAC4_OUT, DAC3_OUT and the DAC2 _OUT are displayed. In the result graph P715 of Fig. 61D, TEMP_OUT, LDO_OUT, DAC4_OUT, DAC3_OUT, the DAC2 _OUT, HPF_OUT, LPF_OUT, SYNCH_OUT, GAINAMP_OUT, AMP3_OUT, AMP2_OUT and SENSE_OUT1 shown in the result graphs P711 through P714 are displayed.

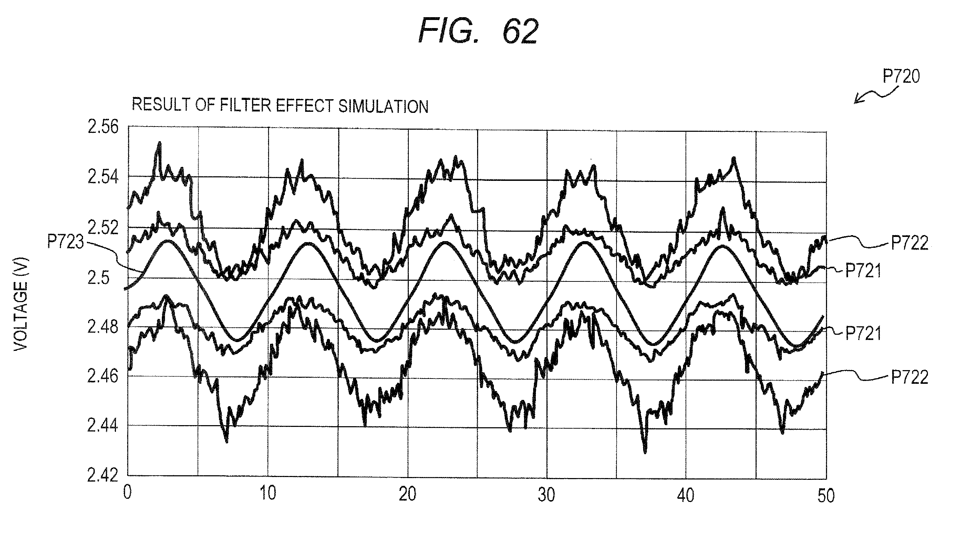

Fig. 62 is a display example of the result graph shown as the result of filtering effect analysis shown in Fig. 36. When the "Filter effect" button P535 is clicked to execute filtering effect analysis, a filtering result screen is played in the lower part of the simulation screen P500. On the filtering result screen, similarly to the transient analysis result, a plurality of the result graphs are displayed, and as one of the result graphs, the result graph P720 of Fig. 62 is displayed.

In the result graph P720, sensor output signals P721 of noise-affected sensor, amplifier output signals P722 resulting from amplification of the sensor output signals P721 with an amplifier, and a filter output signal P723 resulting from removal of noise from the amplifier output signals P722 with a filter are collectively (superposed one over another) displayed. Superposed displaying of the sensor output signals P721 and the amplifier output signals P722 before filtering and 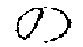 the filter output signal P723 after filtering facilitates comparison of the pre-filter and the post-filter waveforms, making possible recognition of the filtering effect at a glance.

The previously usual way of recognizing the filtering effect uses frequency characteristics plotted with the horizontal axis as the frequency axis, but visual recognition of the filtering effect in this way was rather difficult. Unlike that, displaying in the manner of Fig. 62 enables the user to recognize the filtering effect immediately, resulting in significant convenience for the user.

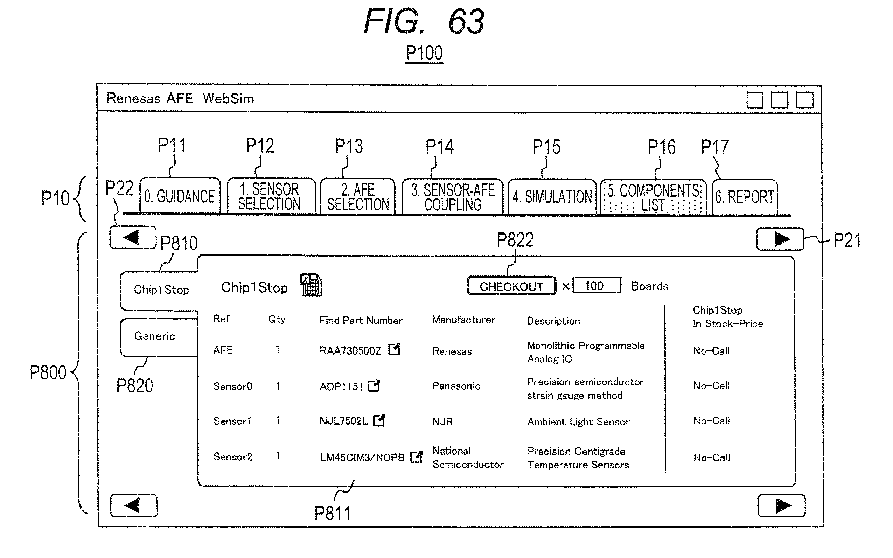

Fig. 63 is a display example of the components list screen shown with reference to S110 of Fig. 29. As shown in Fig. 63, when the "Components list" tab P16 is selected on the web simulator screen P100 shown in Fig. 38, Fig. 39, Fig. 56, Fig. 57, Fig. 58 and elsewhere, a components list screen P800 is displayed.

On the components list screen P800, tabs P810 and P820 for selecting the component supplier are displayed. When a "Chip1Stop" tab P810 is selected, a components list P811 is displayed. The components list P811 shows a list of semiconductor devices 1 and sensors selected by simulation. In the components list P811, information on component items is shown in a plurality of columns. Fig. 63 states for each item the Component name (Ref), Quantity (Qty), Part # (Find Part Number), Manufacturer, Description and Price (In Stock-Price). Any listed component can be purchased by clicking a "CHECKOUT" button P822.

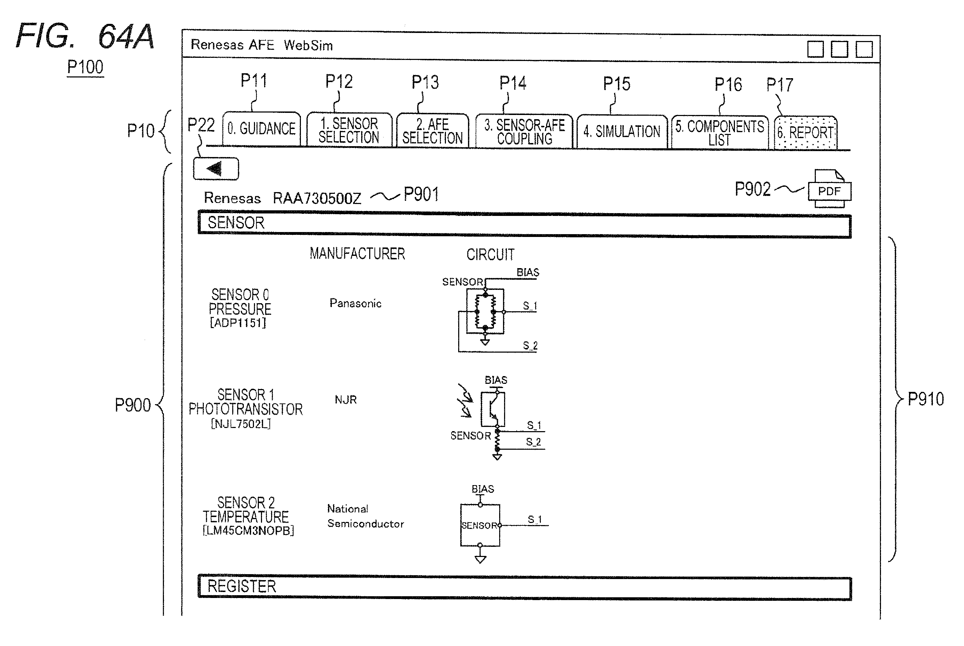

Fig. 64A through Fig. 64G are display examples of the report screen shown with reference to S112 of Fig. 29. Incidentally, screens to be displayed consecutively are split in the illustrations in Fig. 64A through Fig. 64G.

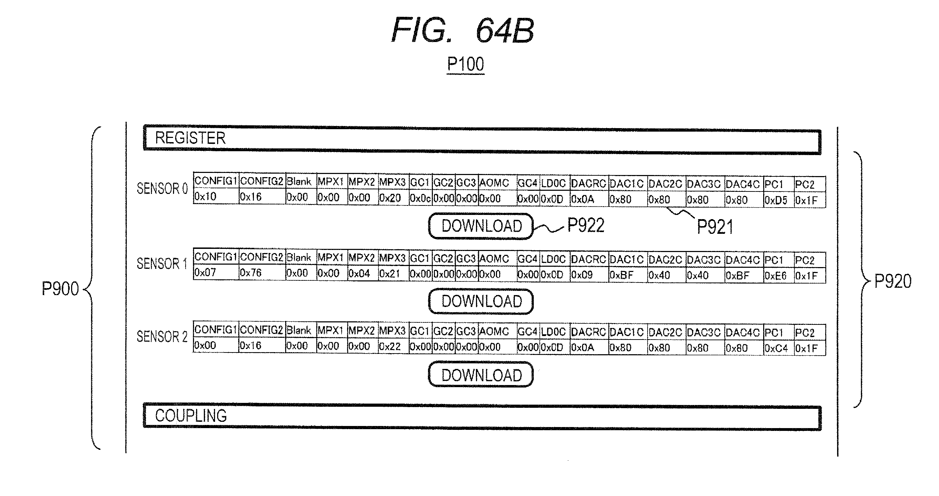

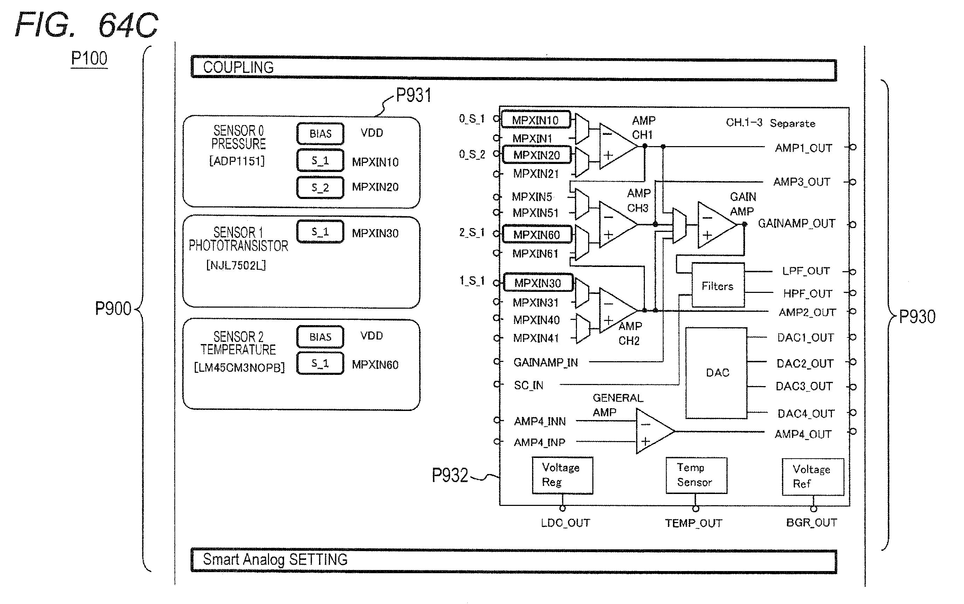

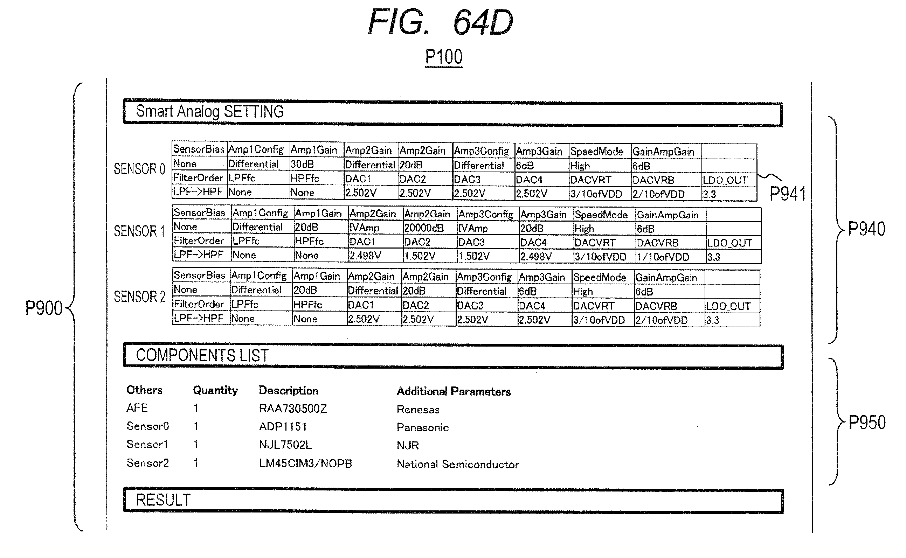

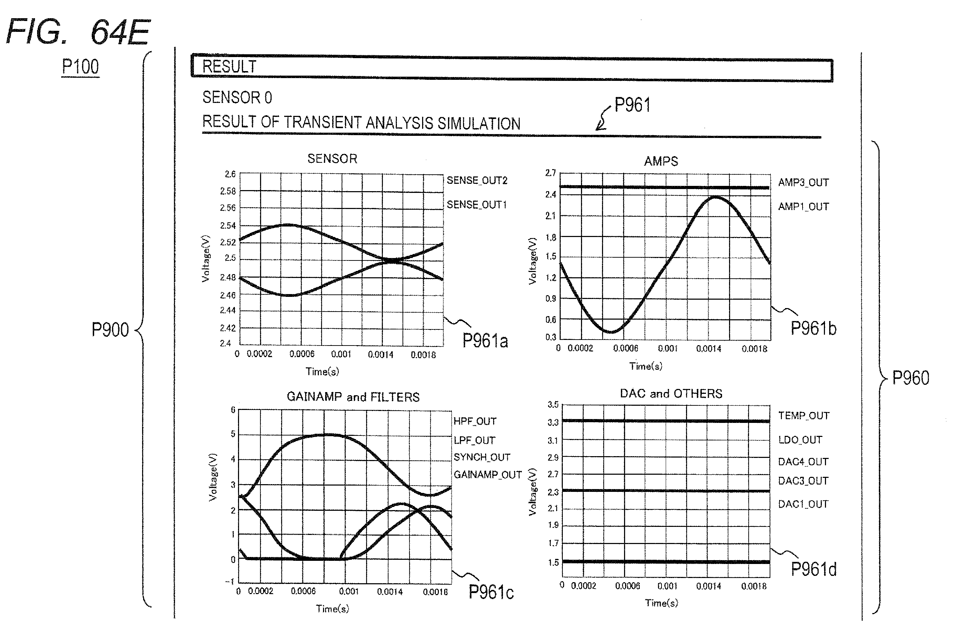

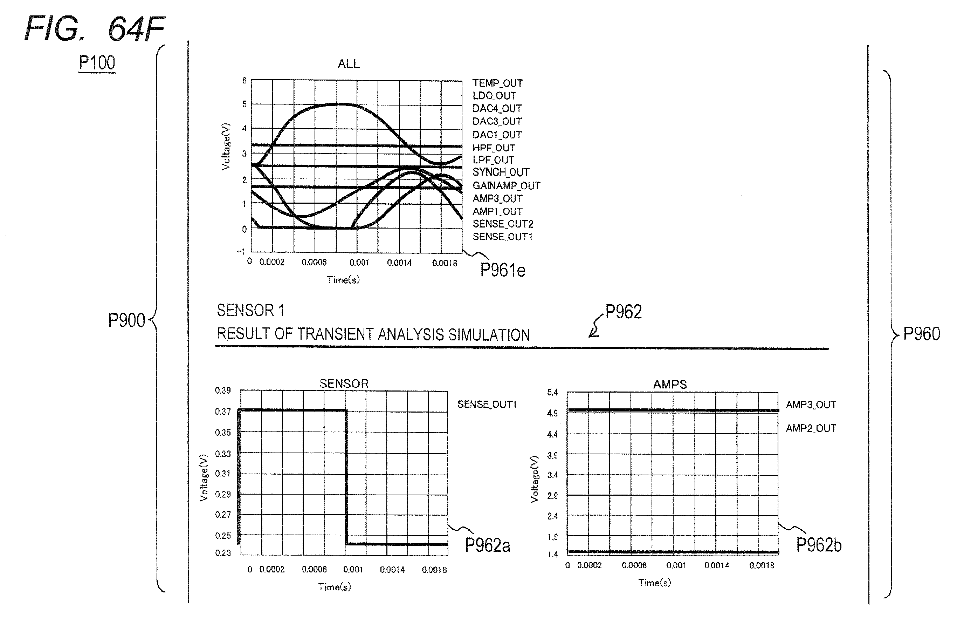

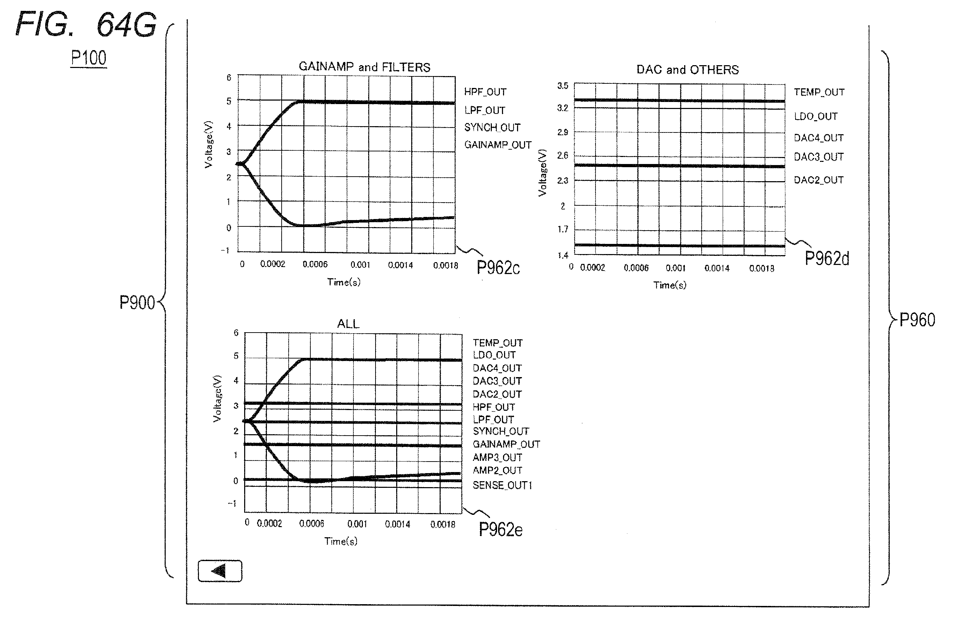

As shown in Fig. 64, when the "Report" tab P17 is selected in the web simulator screen P100 shown in Fig. 38, Fig. 39, Fig. 56, Fig. 57, Fig. 58, Fig. 63 and elsewhere, a report screen P900 is displayed.

On the report screen P900, a semiconductor device identifying area P901 for identifying the semiconductor device used in simulation is displayed in the upper part. In the semiconductor device identifying area P901, Part # of the semiconductor device selected on the AFE selection screen and simulated is displayed. In the example of Fig. 64A, Part # "RAA730500Z" selected as illustrated in Fig. 56 is displayed in the semiconductor device identifying area P901.

Further, on the right side of the semiconductor device identifying area P901, a PDE icon P902 is displayed. When the PDE icon P902 is clicked, a PDE file containing the whole report screen P900 in a single file of the PDE format is downloaded onto the user terminal 3. Thus, all of the areas displayed on the report screen P900 including the semiconductor device identifying area P901, a sensor display area P910, a register display area P920, a coupling display area P930, a Smart Analog display area P940, a component list display area P950 and a result display area P960 is contained in a single PDE file and downloaded.

In the report screen P900, the sensor display area P910 is displayed underneath the semiconductor device identifying area P901. In the sensor display area P910, regarding the sensors selected on the sensor selection screen and simulated, the sensor type and Part #, and the manufacturer are displayed, and further the bias circuits selected and simulated on the bias circuit screen are displayed on a sensor-by-sensor basis. In the case of Fig. 64A, the selected pressure sensor, phototransistor and temperature sensor as shown in Fig. 40 are displayed in the sensor display area P910, and the bias circuit selected is displayed correspondingly to the sensor as shown in Fig. 44, Fig. 45 and Fig. 48.

On the report screen P900, the register display area P920 is displayed underneath the sensor display area P910. In the register display area P920, the register information P921 and a "Download" button P922 are displayed on a sensor-by-sensor basis. When the "Download" button P922 is clicked, the register information shown in register information P921 is downloaded onto the user terminal 3.

In the register information P921, register information corresponding to the configuration of the semiconductor device 1 set and simulated on the simulation screen is displayed. On the basis of the circuit information and parameters set as described with reference to S111 of Fig. 29, register information to be set in the register 181 of the semiconductor device 1 is generated.

On the report screen P900, the coupling display area P930 is displayed underneath the register display area P920. In the coupling display area P930, the coupling relationship between the sensor set and simulated on the sensor AFE selection screen and the semiconductor device 1 is displayed. In the coupling display area P930, the sensor selection frame P931 and a semiconductor device image P932 are displayed as in Fig. 57.

In the report screen P900, the Smart Analog (semiconductor device) display area P940 is displayed underneath the coupling display area P930. In the Smart Analog display area P940, setting information P941 on the semiconductor device 1 is displayed on a sensor-by-sensor basis.

In the setting information P941, setting information corresponding to the configuration of the semiconductor device 1 set and simulated on the simulation screen is displayed. In the setting information P941, the set value of each parameter of the semiconductor device 1 set as shown in Fig. 58 is displayed. Also, the setting information P941 and the register information P921 displayed in the register display area match each other, and the contents set in the register information P921 can be checked with the setting information P941.

On the report screen P900, the component list display area P950 is displayed underneath the Smart Analog display area P940. In the component list display area P950, the component list of the semiconductor device 1 and sensors used in the simulation is displayed. In the component list display area P950, similar to the components list screen P800 of Fig. 63, the component name (Others), number of components (Quantity), Part # (Description) and manufacturer (Additional Parameters) are displayed.

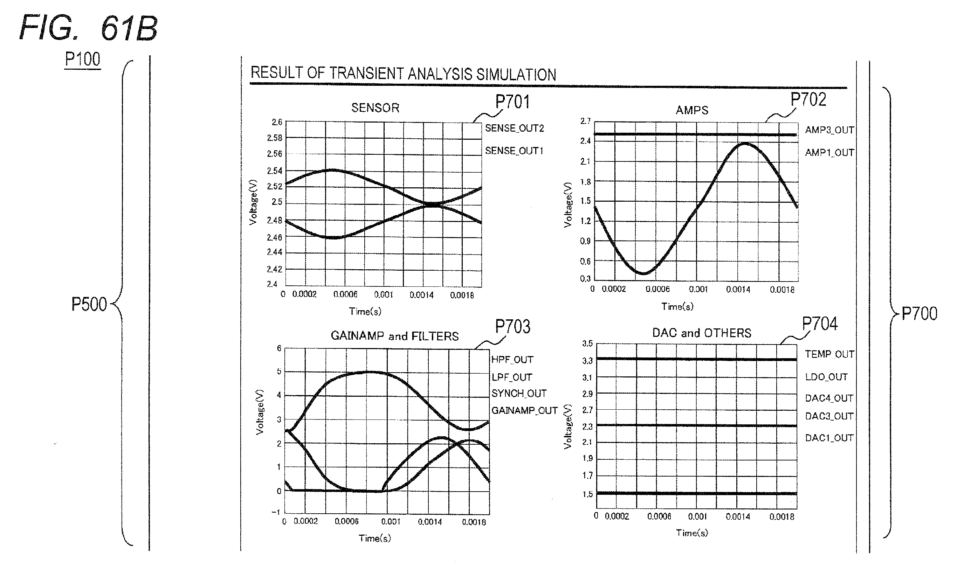

On the report screen P900, the result display area P960 is displayed underneath the component list display area P950. In the result display area P960, the result of simulation carried out and displayed on the simulation screen is displayed. In Fig. 64E through Fig. 64G, as in Fig. 61B through Fig. 61D, a transient analysis result P921 and a transient analysis result P962 of sensor 1 are displayed. In the transient analysis result P921, the result graphs P961a through P961e similar to the result graphs P701 through P705 in Fig. 61B through Fig. 61D are displayed, and in the transient analysis result P962, the result graphs P962a through P962e similar to the result graphs P711 through P715 in Fig. 61B through Fig. 61D are displayed.

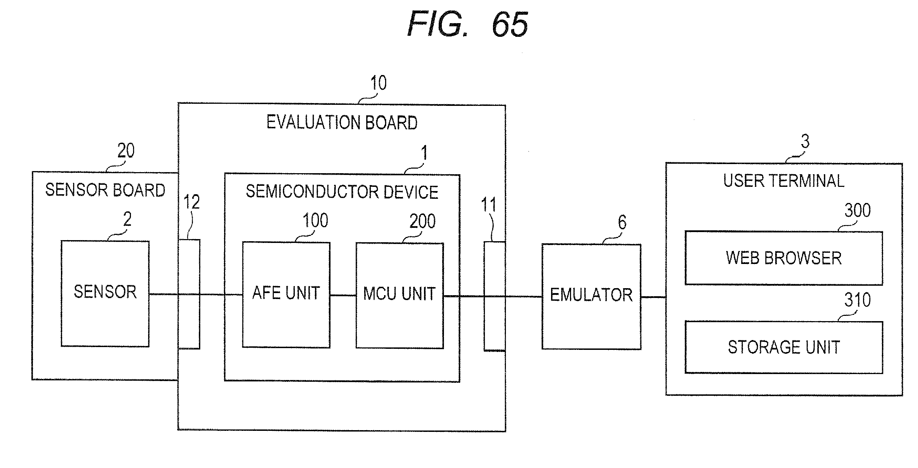

Fig. 65 shows one example of setting system for semiconductor device in this exemplary embodiment. This setting system is a system to set in the semiconductor device 1 register information acquired by the user terminal 3 from the web simulator 4. As shown in Fig. 65, this setting system is provided with an evaluation board 10 to be mounted with the semiconductor device 1, a sensor board 20 to be mounted with the sensor 2, the user terminal 3 and an emulator 6.

The evaluation board 10 is provided with a USB interface 11 and a sensor interface 12. The user terminal 3 is coupled to the USB interface 11 by a USB cable via the emulator 6 and coupled via the USB interface 11 to permit inputting and outputting between the user terminal 3 and the emulator 6 on one hand and the semiconductor device 1 on the other. The sensor board 20 is coupled by the sensor interface 12, and coupled via the sensor interface 12 to permit inputting and outputting between the sensor 2 and the semiconductor device 1.

The emulator 6 is coupled to the MCU unit 200 of the semiconductor device 1 and emulates the MCU unit 200. The user terminal 3 is enabled to write programs into the register information of the AFE unit 100 and the MCU unit 200 by being coupled to the emulator 6.

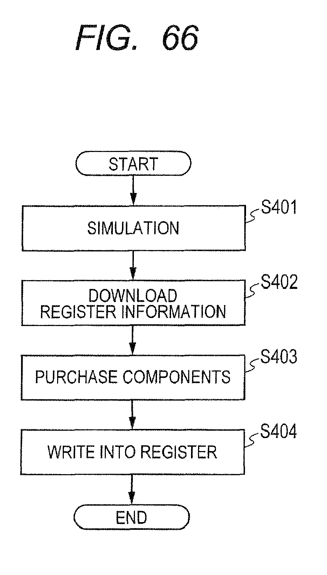

Fig. 66 shows a method of setting the semiconductor device 1 in the setting system of Fig. 65. As shown in Fig. 66, first the web simulator 4 simulates the actions of the semiconductor device 1 (S401). In the system of Fig. 26, the user terminal 3 accesses the web simulator 4 and executes simulation on the web simulator 4. As stated above, the user terminal 3 causes the web simulator 4 to simulate the actions of the semiconductor device 1 set to match the sensor and bias circuit by manipulating the simulation screen of the web simulator 4.

Next, the user terminal 3 downloads the register information (S402). As stated above, the user terminal 3, by manipulating the report screen of the web simulator 4, downloads the register information on the semiconductor device 1 generated by the web simulator 4. The user terminal 3 stores the downloaded register information into the memory 310.

Then, the user terminal 3 purchases components (S403). As stated above, the user terminal 3, by manipulating the components list screen of the web simulator 4, purchases from a components dealer the sensor and the semiconductor device 1 that have been simulated. The user couples the purchased sensor to the sensor board 20 and, at the same time couples the semiconductor device 1 to the evaluation board 10 to architect the setting system of Fig. 65.

Next, the user terminal 3 writes the register information into the semiconductor device 1 (S404). In the architected setting system of Fig. 65, the user terminal 3 writes the register information downloaded from the web simulator 4 into the register 181 of the semiconductor device 1 via the emulator.

In this way, the setting of the AFE unit 100 of the semiconductor device 1 is completed. After that, when the semiconductor device 1 is actuated, the configuration and characteristics of the AFE unit 100 are set according to the register information written into the register 181, and the AFE unit 100 starts operating. Thus, the semiconductor device 1 can be operated in the simulated configuration.

In this exemplary embodiment, the actions of the semiconductor device 1 whose configuration and circuit characteristics can be altered are simulated by the web simulator in this way. As the simulation is executed on the web simulator, the user terminal requires no simulator environment, and the user can perform simulation readily and conveniently. As the same analog circuit (AFE) as the semiconductor device 1 whose configuration and circuit characteristics can be altered is simulated, the user can simulate analog circuits of diverse configurations and characteristics by simple operation.

The web simulator of this exemplary embodiment enables the user to select sensors and bias circuits to be coupled to the semiconductor device as desired. When the user selects a sensor, a plurality of bias circuits usable with the selected sensor are automatically displayed to the user. The user can choose a desired bias circuit out of the bias circuits matching the sensor. NO known art can offer a circuit configuration matching the user's application environment because the bias circuit configuration is fixed for any selected sensor. In this exemplary embodiment, which permits choice of a bias circuit matching the user's application environment out of multiple bias circuits, simulation can be accomplished in the optimal circuit configuration.

Also, the web simulator of this exemplary embodiment enables, when the sensor and bias circuit are selected, the circuit configuration of the configurable amplifier to be automatically determined in accordance with the selected sensor and bias circuit. Furthermore, the gain and offset of the configurable amplifier are also automatically set in accordance with the characteristics of the selected sensor and bias circuit. As this feature enables the user to dispense with the trouble of studying the sensor and bias circuit or investigating the configuration and circuit characteristics of the semiconductor device 1 matching the sensor and bias circuit, simulation of the optimal configuration and characteristics can be readily accomplished.

In addition, the web simulator of this exemplary embodiment enables the input pattern of physical quantities for inputting to the sensor to be selected out of prescribed waveform patterns. By inputting a waveform pattern and simulating the actions of the sensor and the semiconductor device, diverse characteristics of analog circuits can be checked effectively. For instance, by inputting a sine wave, the user can readily recognize frequency characteristics; by inputting a square wave or a stepwise response, the user can easily find out response characteristics; or by inputting a triangular wave, the user can readily know a clipped waveform.

Although the invention accomplished by the present inventors has hitherto been described in specific terms with reference to an exemplary embodiment thereof, the invention is by no means limited to this exemplary embodiment, but obviously it can be modified in various ways without deviating from its essentials.
According to an exemplary embodiment, there is provided a web simulator of a semiconductor device having an AFE unit whose circuit configuration can be altered comprises a sensor selector that selects a sensor to be coupled to the AFE unit; a bias circuit selector that selects a bias circuit to be coupled to the selected sensor; a circuit configuration setting unit that sets the circuit configuration of the AFE unit to be coupled to the selected sensor and bias circuit; and a simulation executing unit that executes simulation of a coupled circuit combination comprising the selected sensor and bias circuit and the AFE unit of the set circuit configuration.

## Claims

1. A simulator for semiconductor devices having an analog front end circuit whose circuit configuration can be altered, comprising:
a bias circuit information memory that stores information from sensors and a plurality of bias circuits supplying bias signals to the sensors;
a sensor selector that selects a sensor to be coupled to the analog front end circuit;
a bias circuit display unit that references the bias circuit information memory and displays the bias circuits matching the selected sensor;
a bias circuit selector that selects a bias circuit to be coupled to the selected sensor out of the displayed bias circuits;
a circuit configuration setting unit that sets the circuit configuration of the analog front end circuit to be coupled to the selected sensor and bias circuit; and
a simulation executing unit that simulates a coupling circuit that couples the selected sensor and bias circuit and the analog front end circuit of the set circuit configuration.

2. The simulator for semiconductor devices according to claim 1, further comprising:
a sensor information memory that stores the sensor and the type of the sensor associated with each other; wherein:
the sensor selector selects the sensor matching the type of the selected sensor on the basis of the association by the sensor information memory.

3. The simulator for semiconductor devices according to claim 2, further comprising:
a sensor display unit that references the sensor information memory and displays a plurality of sensors matching the type of the sensor selected by the user, wherein:
the sensor selector selects the sensor out of the displayed sensors in accordance with the user's operation.

4. The simulator for semiconductor devices according to claim 3, wherein the sensor display unit references the sensor information memory and displays sensors of the type of the sensor selected by the user and satisfying the user-designated conditions of search for sensors.

5. The simulator for semiconductor devices according to one of claims 1 to 4, further comprising:
an analog circuit information memory that stores the sensor and bias circuit and the circuit configuration of the analog front end circuit coupled to the sensor via the bias circuit associated with each other, wherein:
the circuit configuration setting unit references the analog circuit information memory and sets the circuit configuration of the analog front end circuit matching the selected sensor and bias circuit.

6. The simulator for semiconductor devices according to one of claims 1 to 5, wherein the circuit configuration setting unit that sets the circuit configuration of a configurable amplifier contained in the analog front end circuit correspondingly to the selected sensor and bias circuit.

7. The simulator for semiconductor devices according to one of claims 1 to 6, wherein the circuit configuration setting unit that sets the coupling relationship between the output terminals of the selected sensor and bias circuit and the input terminal of the analog front end circuit.

8. The simulator for semiconductor devices according to one of claims 1 to 7, further comprising:
a circuit characteristics setting unit that sets the circuit characteristics of the analog front end circuit on the basis of the selected sensor and bias circuit.

9. The simulator for semiconductor devices according to claim 8, wherein the circuit characteristics setting unit so sets the gain and offset of the analog front end circuit that the output signal of the analog front end circuit is kept within the operable range of the analog front end circuit.

10. The simulator for semiconductor devices according to one of claims 1 to 9, further comprising:
a semiconductor device information memory that stores a semiconductor device including the analog front end circuit and a circuit capable of configuring the pertinent analog front end circuit associated with each other; and
a semiconductor device selector that selects as an object of simulation of the semiconductor device having an analog front end circuit of the set circuit configuration on the basis of association by the semiconductor device information memory.

11. The simulator for semiconductor devices according to claim 10, further comprising:
a semiconductor device display unit that references the semiconductor device information memory and displays a plurality of semiconductor devices matching an analog front end circuit of the set circuit configuration,
wherein the semiconductor device selector selects the semiconductor device out of the displayed plurality of semiconductor devices in accordance with the user's operation.

12. The simulator for semiconductor devices according to claim 11, wherein the semiconductor device display unit references the semiconductor device information memory and displays a plurality of semiconductor devices having an analog front end circuit of the set circuit configuration and satisfying the user-designated conditions of search for sensors.

13. A simulation method for semiconductor devices including an analog front end circuit whose circuit configuration can be altered, comprising:
storing in a bias circuit information memory a sensor and a plurality of bias circuits that supply bias signals to the sensor;
selecting a sensor to be coupled to the analog front end circuit;
referencing the bias circuit information memory and displaying the plurality of bias circuits matching the selected sensor;
selecting out of the displayed plurality of bias circuits a bias circuit to be coupled to the selected sensor in accordance with the user's operation;
setting the circuit configuration of the analog front end circuit to be coupled to the selected sensor and bias circuit; and
executing simulation of a coupled circuit comprising the selected sensor and bias circuit and an analog front end circuit of the set circuit configuration being coupled to each other.

14. A computer readable medium storing a simulation program that causes a computer to execute a process for simulation of a semiconductor device having an analog front end circuit whose circuit configuration can be altered, the process comprising:
storing in a bias circuit information memory a sensor and a plurality of bias circuits that supply bias signals to the sensor;
selecting a sensor to be coupled to the analog front end circuit;
referencing the bias circuit information memory and displaying the plurality of bias circuits matching the selected sensor;
selecting out of the displayed plurality of bias circuits a bias circuit to be coupled to the selected sensor in accordance with the user's operation;
setting the circuit configuration of the analog front end circuit to be coupled to the selected sensor and bias circuit; and
executing simulation of a coupled circuit combination comprising the selected sensor and bias circuit and an analog front end circuit of the set circuit configuration.
